# EUROPEAN PATENT SPECIFICATION

(11) **EP 1 002 274 B1**
(45) Date of publication and mention of the grant of the patent: **02.04.2014**
(21) Application number: 98938449.0
(22) Date of filing: 07.08.1998
(51) Int. Cl.: G06F 13/00, G06F 17/30, G06Q 30/06

(54) **DIGITAL DEPARTMENT SYSTEM**
DIGITALES ZWEIGSTELLEN-SYSTEM
SYSTEME DE COMPTOIR NUMERIQUE

(30) Priority: 08.08.1997 US 55708 P
(43) Date of publication of application: 24.05.2000
(73) Proprietor: Thomson Licensing, 92130 Issy-les-Moulineaux (FR)
(72) Inventor: STERN, Michael, R., Mill Valley, CA 94141 (US); MINCE, William L., Menlo Park, California 94025 (US); KYTE Daniel E., San Francisco, California 94109 (US)
(74) Representative: Rossmanith, Manfred
(86) International application number: PCT/US1998/016476
(87) International publication number: WO 1999/008194

(56) References cited:
- EP-A- 0 649 121
- WO-A-96/08113
- GB-A- 2 299 200
- US-A- 5 237 157
- US-A- 5 418 713
- US-A- 5 612 730
- US-A- 5 625 864
- US-A- 5 640 193
- US-A- 5 642 484
- HURWICZ M.: 'Multicast to the Masses', [Online] June 1997, BYTE.COM Retrieved from the Internet: <URL:http://www.byte.com/art/9706/sec6/art6 .htm>
- ROBERTSON K. ET AL, [Online] 04 July 1998, STARBURST MULTICAST FILE TRANSFER PROTOCOL (MFTP) SPECIFICATION, IETF Retrieved from the Internet: <URL:http://www1.ietf.org/mail-archive/ietf -announce-old/Current/msg00469.html>

## Description

### CROSS-REFERENCE TO PROVISIONAL AND RELATED APPLICATIONS

This invention claims priority from a provisional application entitled "DIGITAL DEPARTMENT SYSTEM" (U.S. Provisional Application Number 60/055, 708), filed August 8, 1997, having M. Stern as inventor, and having as assignee PICS Previews, Inc., the assignee of the present invention.

All of these applications are assigned to PICS Previews, Inc., the assignee of the present invention.

### BACKGROUND OF THE INVENTION

The present invention relates generally to a method and apparatus for the distribution of audiovisual content to consumers. More specifically, the present invention audiovisual content to consumers, wherein the audiovisual content is related to a given product's content or advertising regarding the product.

Commercial television and radio have been recognized as a powerful and efficient medium for broadcasting advertising and entertainment content to a large, widely dispersed audience. As a result, television and radio have traditionally garnered a major share of advertising budgets. However, due to a variety of factors, advertising revenues for these media outlets have been dropping over the past several years, a trend which is expected to continue. One major drawback of television and radio advertising is the failure of these media to do more than deliver a large number of impressions to a large and relatively undifferentiated audience. Advertising dollars are ineffectively spent on messages that reach the wrong audiences under the wrong circumstances. Further, national network television is well suited only for the limited number of product categories which are truly national in scope and relatively impervious to regional and seasonal variation. Moreover, the cost of multiple regional campaigns to address such issues on local television or radio stations, for example, will often equal or exceed that of a national program.

Delivery of advertising and product content at the point-of-purchase accomplishes what in-home television cannot, in large part because it is directed not toward passive, unreceptive viewers, but rather toward consumers who are actively seeking information and making choices based on that information. Ample evidence demonstrates consumers in a shopping environment are much more susceptible to audiovisual messages regarding products in which they have a current, specific interest than otherwise.

Indeed, with the vast quantity of available products and services, such as for example music or video selections, a consumer is faced with a formidable task in selecting which products they may wish to purchase. Providers of goods and services are constantly devising strategies for educating consumers about their products. This is especially true for providers of goods and services which are complex and/or numerous. Unfortunately, consumers are often frustrated by a lack of information, which can lead to the purchase of an unintended product or service. In other cases, the consumer may avoid purchasing a product or service altogether due to frustration and confusion arising from the vast quantity of available products.

However, current point-of-purchase advertising programs have severe limitations. For the most part they are based on a static, print-oriented media comprised of signage or packing labels, with product messages lost in the clutter. On-site demonstrations or educational devices are often prohibitively expensive, take up valuable selling space, and are limited to a store-by-store approach.

One known system of electronic point of purchase advertising utilizes silent electronic dot repeating message signs, similar to reader boards found in major airports and brokerage houses, in the high-traffic aisles of supermarkets. Such silent reader boards, with limited two-dimensional displays, do not have the effectiveness of audiovisual presentations in catching and retaining viewer attention.

Another known variation on electronic point-of-purchase advertising utilizes electronic display screens such as liquid crystal displays on individual shopping carts which convey messages to the shopper. Such systems again do not have the effectiveness of audiovisual presentations, and further require a great deal of maintenance down-time due to their susceptibility to damage. Other known systems use satellite-transmitted television to broadcast advertising into supermarkets. Such systems are typically based on commercial network programming, although some permit the selective customization of promotional messages by aisle, store, chain, geographic area or demographic profile.

However, the efficacy of these satellite-based systems, as well as the other techniques described, depends on attracting and holding the customer's attention. If the information provided to the customer is not useful or pertinent, the customer is not assisted in the purchasing decision. Indeed, the provision of such information is not only pointless, but detrimental, in that there is then additional sensory input with which the customer must contend. And while interactive consumer information systems exist (e.g., kiosks), such systems cannot be quickly updated to reflect changes in inventory, product revisions, changing demographics, or the like. Because inventory, products, and consumer preferences change, a system is needed which not only allows the consumer to preview product information, but also allows the information being previewed to be quickly and easily updated.

The above represent just a few of the shortcomings which have persisted in the field of consumer information systems. A system capable of aggregating and distributing advertising and product content, and allowing a customer to interactively preview selected portions of that content is therefore highly desirable.

US 5,418,713 discloses an on demand delivery system for audio/video files from a network management center to a multimedia server in an outlet. A user at a node in the outlet can select a content to be previewed. This request is transmitted to the multimedia server at the outfit which itself has a cache of the mostly requested content files. If the requested content file is in the cache of the multimedia server at the outlet, it is directly transferred from the cache to the node, otherwise it is transferred from the network management server via the multimedia server to the node. New "hit" content files can be given predetermined statistical weight, so that apparently they will be preferentially put in the caches.

### SUMMARY OF THE INVENTION

The present invention relates to a method of creating and distributing of content to a user in a commercial sales outlet. In particular the present invention relates to a method according to claim 1. Advantageous improvements of the invention are subject matter of the dependent claims.

A further understanding of the nature and advantages of the present invention may be realized by reference to the remaining portions of the specification and the drawings.

### BRIEF DESCRIPTION OF THE DRAWINGS

Figs. 1A and 1B illustrate one embodiment of a digital department system according to the present invention;
Fig. 2A is a view of one embodiment of an interactive endcap according to the present invention;
Fig. 2B is another view of one embodiment of an interactive endcap according to the present invention;
Fig. 2C is another view of one embodiment of an interactive endcap according to the present invention; and

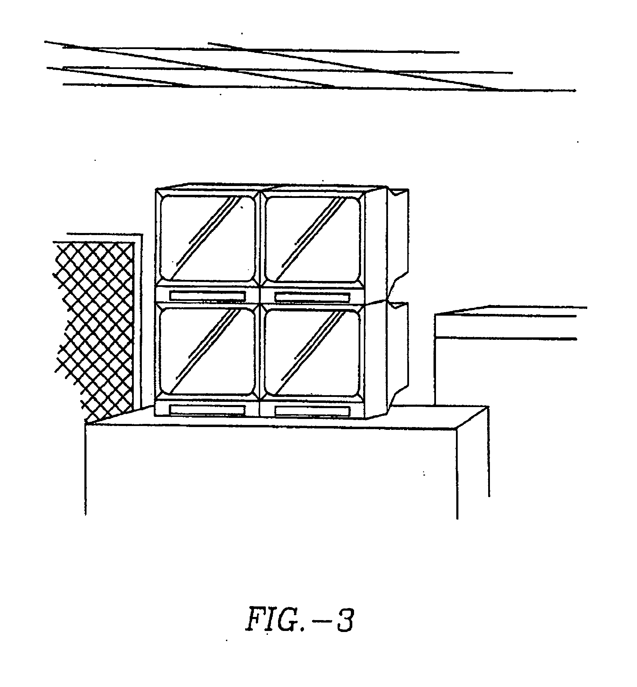

Fig. 3 is a view of a wall of eyes according to the present invention.

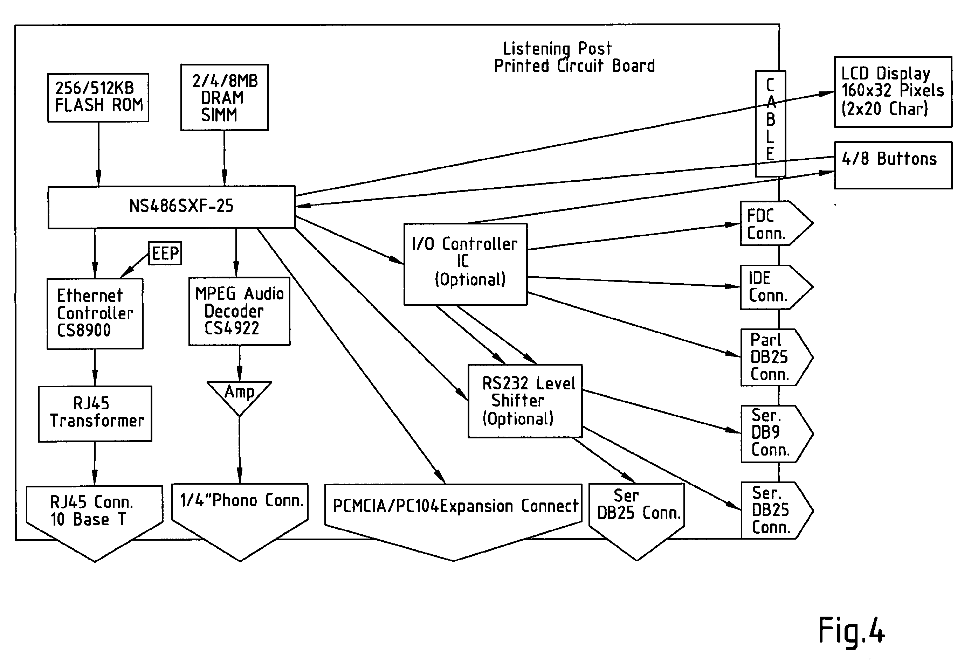

Fig. 4 is an exemplary listening post hardware overview;

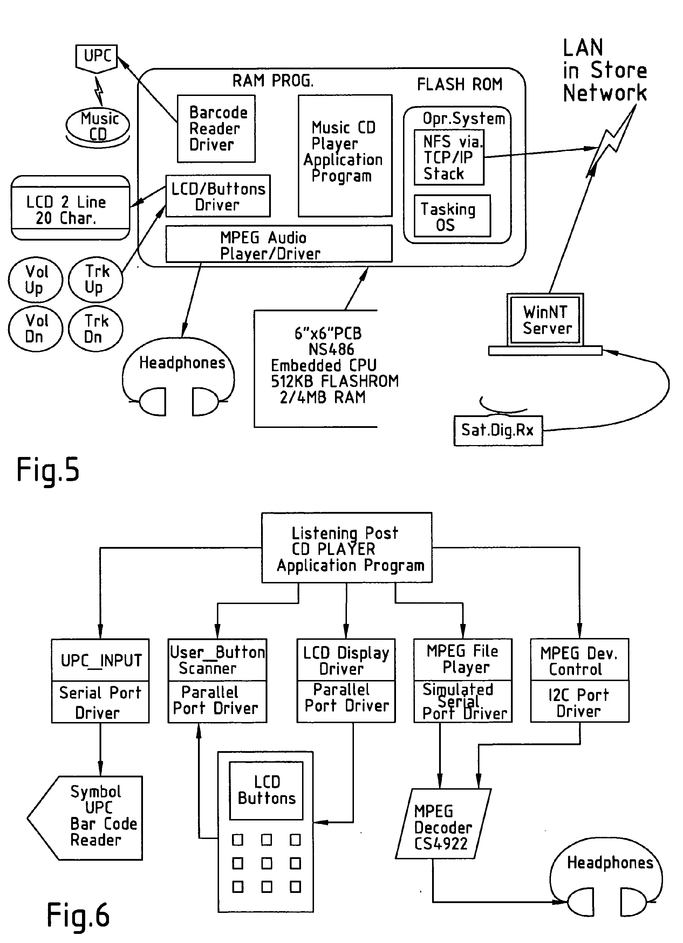

Fig. 5 is an exemplary listening post software overview;
Fig. 6 is an exemplary application program organization;

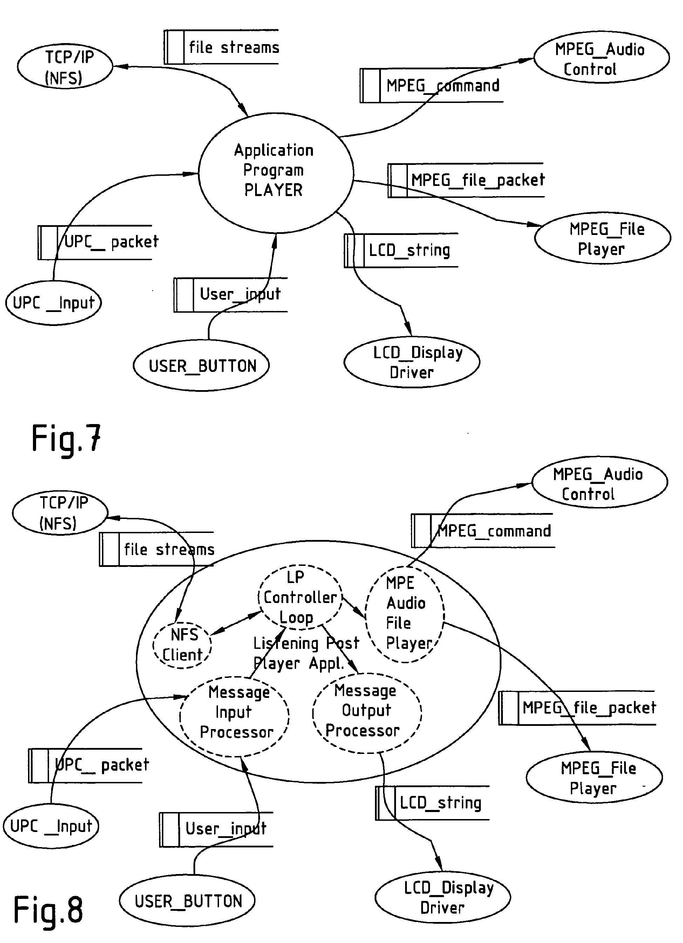

Fig. 7 is an example of an application program showing player message flows;
Fig. 8 is an example of the application program (internal organization);

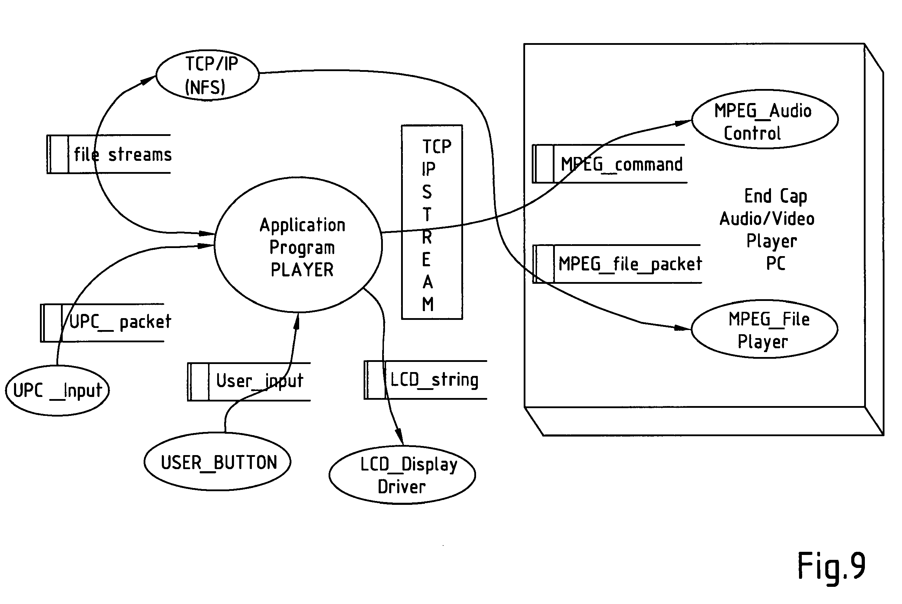

Fig. 9 is an example of the application program showing end cap message flows;

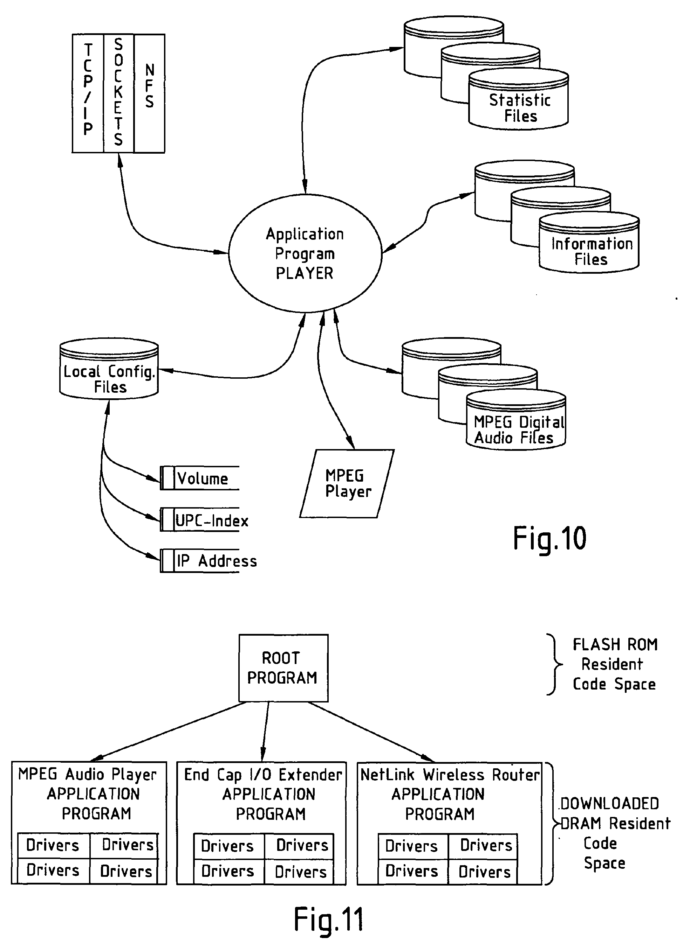

Fig. 10 is an example of an application program showing data storage and flows;
Fig. 11 is an example of a root module and application programs;

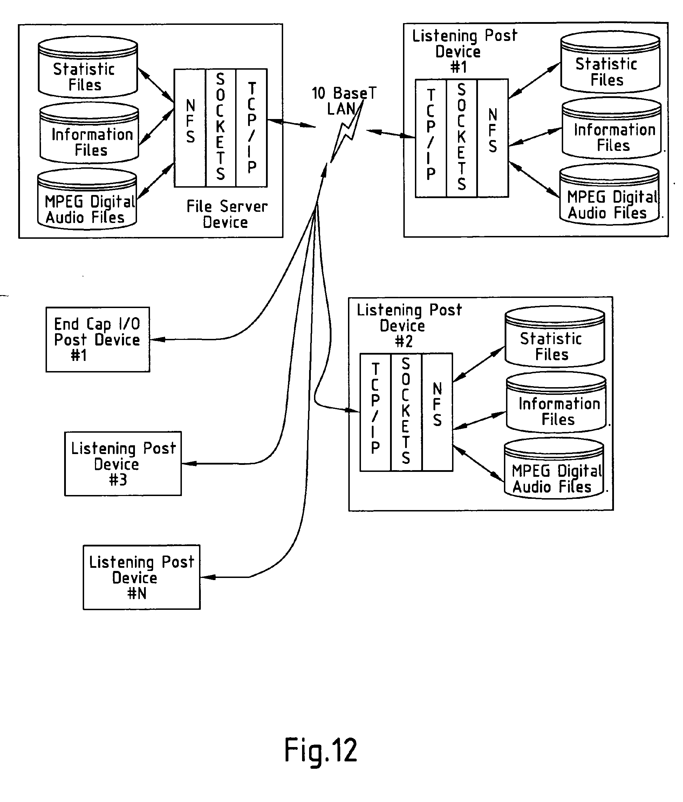

Fig. 12 is an exemplary server to listening post data flow;

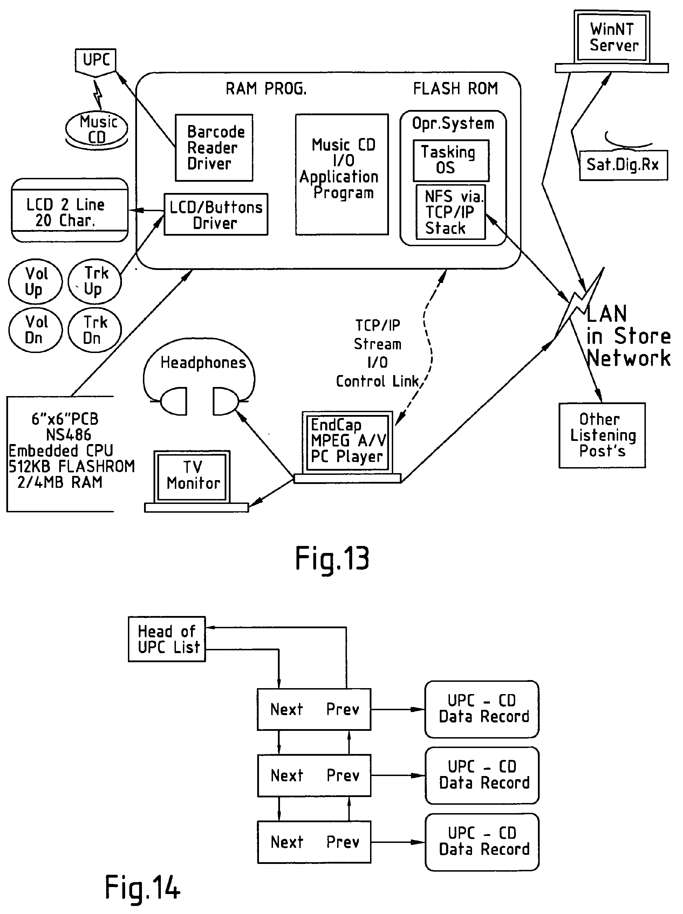

Fig. 13 is an exemplary system diagram, listening post (I/O station);
Fig. 14 is an exemplary listening post UPC-CD data structure;

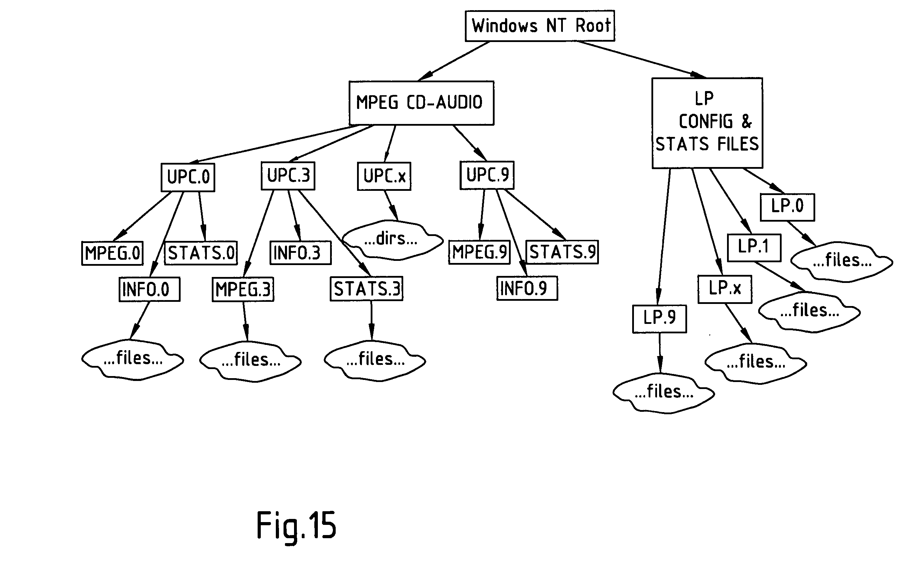

Fig. 15 is an exemplary multimedia server directory structure; and

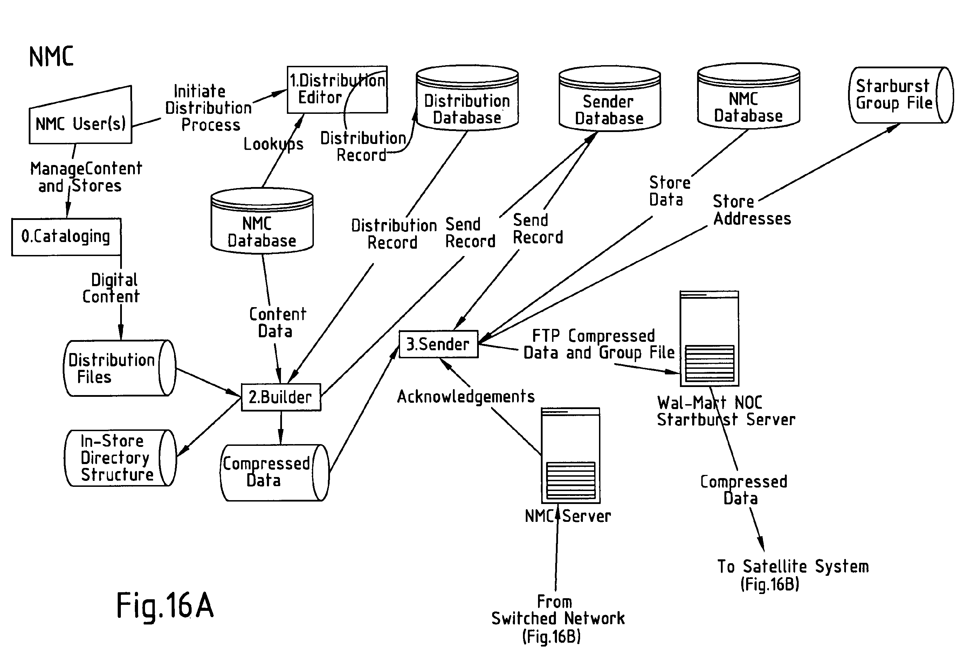

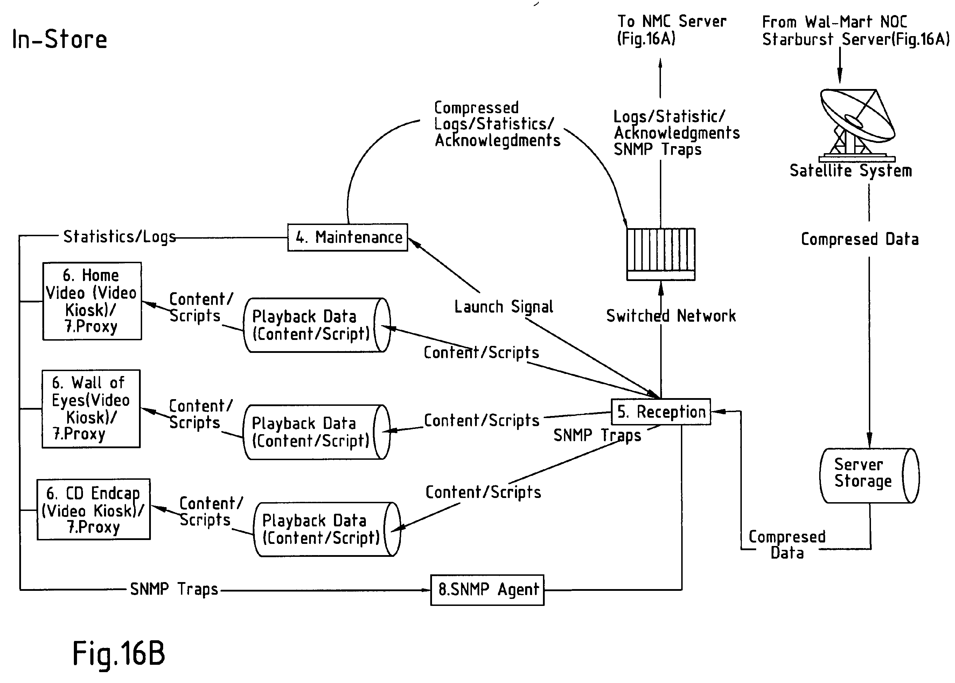

Figs. 16A and 16B shows a data and process relationship overview.

### DETAILED DESCRIPTION OF THE INVENTION

### I. INTRODUCTION

In an embodiment of the present invention a new digital content distribution network is presented, providing commercial sales outlets of a commercial entity expanded bandwidth for delivery of video, audio, graphics, text, data, and other types of information streams within (and also, optionall, outside of) these commercial sales outlets. This new paradigm redefines in-store merchandising in the mass merchant channel and creates a new commercial sales environment which stimulates sales by offering customers entertainment and extensive product information in a simple, easy to use format.

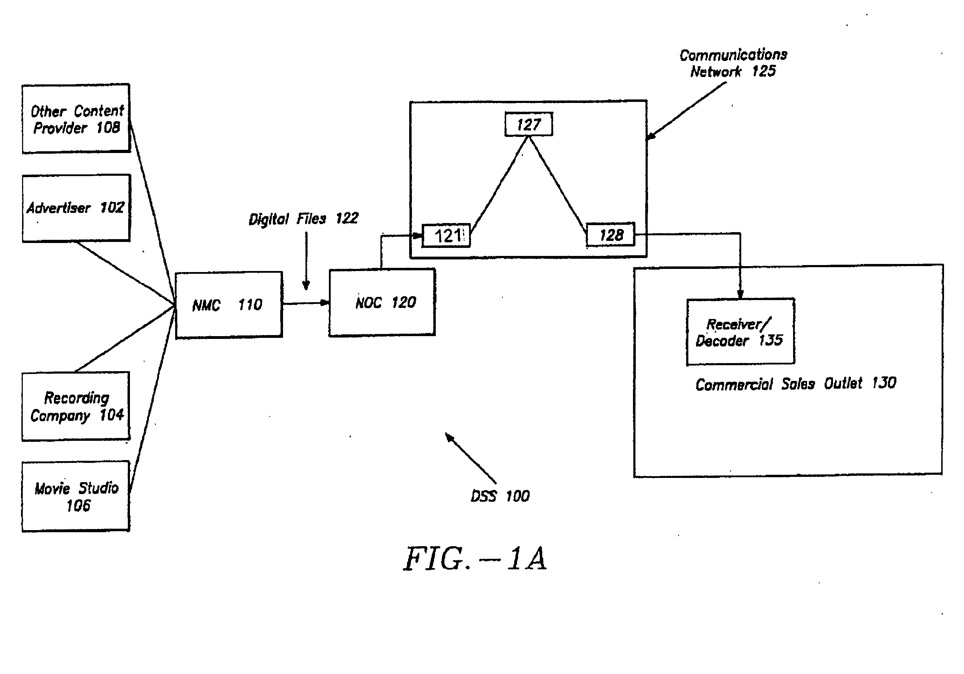

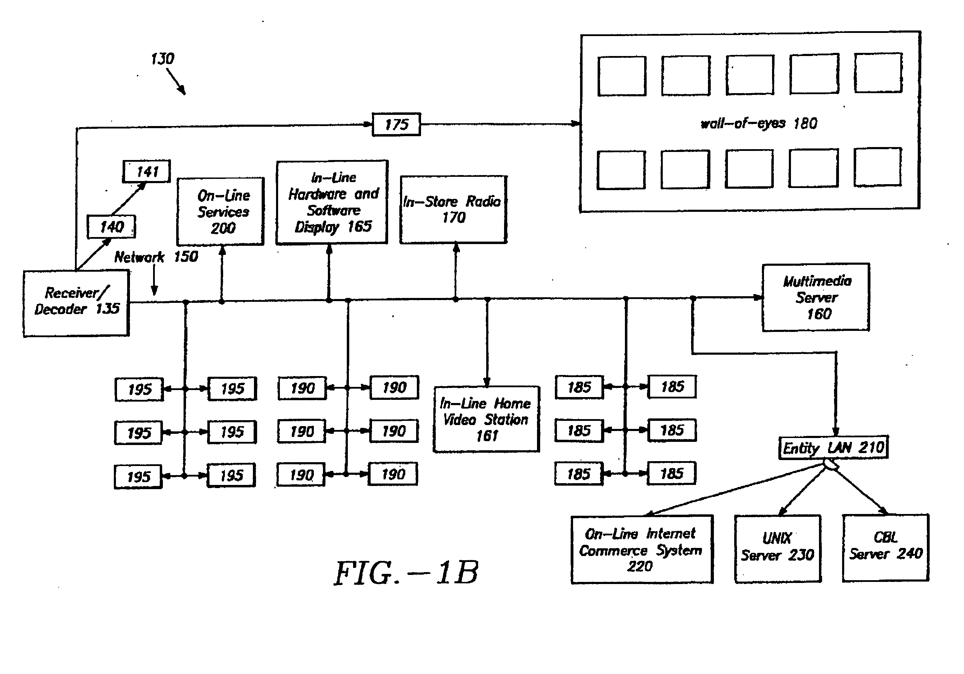

A digital department system (DDS) 100 illustrated in Figs. 1A and 1B allows for the distribution of promotional and product content to one or more commercial sales outlets, such as a department store, convenience store, retail outlet, discount outlet, or other such location.

DDS 100 is a system employing a combination of software and hardware that provides cataloging, distribution, presentation, and usage tracking of music recordings, home video, product demonstrations, advertising content, and other such content, along with entertainment content, news, and similar consumer informational content in an in-store setting. This content includes content presented in MPEG1 and MPEG2 video and audio stream format, although the present system should not be limited to using only those formats. Software for controlling the various elements of DDS 100 preferably runs in a 32-bit operating system using a windowing environment (e.g., MS-Windows™ or X-Windows operating system) and high-performance computing hardware. DDS 100 utilizes a distributed architecture (preferably a distributed three-layer architecture) and provides centralized content management and distribution control via satellite (or other method, e.g., a wide-area network (WAN), the Internet, a series of microwave links, or a similar mechanism) and in-store modules.

### II. CONTENT PROVIDERS

Content may be provided from an advertiser 102, a recording company 104, a movie studio 106 or another content provider, such as other content provider 108. Advertiser 102 can be a product manufacturer, a service provider, an advertising company representing a manufacturer or service provider, or other entity. Advertising content from advertiser 102 consists of audiovisual content including commercials, "info-mercials", product demonstrations, and the like.

Recording company 104 is a record label, music publisher, licensing/publishing entity (e.g., BMI or ASCAP), individual artist, or other such source of music-related content. Recording company 104 provides audiovisual content such as music clips (short segments of recorded music), music video clips, and the like. Movie studio 106 is a movie studio, film production company, publicist, or other source related to the film industry. Movie studio 106 provides movie clips, pre-recorded interviews with actors and actresses, movie reviews, "behind-the-scenes" presentations, and similar content.

Other content provider 108 can be any other provider of audiovisual content that can be displayed automatically or in response to a request by a customer. For example, other content provider 108 could be a computer software company such as a game software company, a business software company, or other such software manufacturer. Other content provider 108 provides audiovisual content depicting a demonstration of the software by a user, a "scanned" (i.e., preset) demonstration of the company's software, an operating demonstration version of the software, or similar audiovisual content.

### III. NETWORK MANAGEMENT CENTER

Content is preferably procured by the entity operating a network management center 110 (NMC 110) via traditional recorded media (tapes, CD's, videos, and the like). Content provided to NMC 110 is compiled into a form suitable for distribution to and display at the commercial sales outlets being supplied. This normally includes using audiovisual clips provided by the various sources and editing-down the full-length content that may also be provided by those sources.

NMC 110 maintains a catalog (database) of products for preview. NMC 13.0, in accumulating and compiling this information, also digitizes this information and provides it to a Network Operations Center (NOC) 120 in the form of digitized data files 122. It will be noted that data files 122, although referred to in terms of digitized audiovisual content, can also be streaming audio, streaming video, or other such information. Each product may have associated digital files containing information pertaining to the product. Alternatively, all the information may be compiled into one file. Following are examples of the types of files/information that may be catalogued and maintained:
- Video clips (music video, movie clip, product demonstration, and the like)
- Liner notes
- Date for broadcast
- Audio clips
- Song titles
- Region for broadcast
- Graphics
- Album/artist info
- Date to delete

The NMC system also has the capability of maintaining a catalog of sponsor information that has been stored as digital files. The following are examples of the types of files that can be cataloged and maintained, although the types of files that may be catalogued should not be limited to the following:
- Sponsor commercials
- Sponsor bumpers
- Sponsor graphics

Finally, NMC 110 is capable of maintaining a catalog of items stored as digital files that do not specifically pertain to a product or sponsor. An example of such items would be attract videos. Attract videos are general promotional, informational, or entertainment videos that are intended to attract a consumer's attention while they are shopping, in order to increase the likelihood of their

All files are preferably named so that they are uniquely identifiable. For example, the file names for products can be based on that product's UPC code, which uniquely identifies that particular product within the system. A software module may be used to assemble the applicable file names for a content update into a script to be delivered with the update. This would support transmission schemes such as packaged delivery (using, for example, compressed files, files stored using a UNIX tar command, or the like). Of course, files may also be sent separately.

In order to update the content of a site or group of sites, at least the following information is preferably maintained for each site:
- Site identifier
- Network addresses of on-site devices
- Routing protocol

Software is used to categorize, name, and catalog content at NMC 110. This function is referred to herein as content cataloging and scripting. This function is used by NMC 110 to manage content and create scripts for in-store playback. These may be integrated into the existing management system. The distribution software may be configured to expect this function to be performed by the operator of NMC 110. The functions provided preferably include at least the following capabilities:
- The ability to catalog titles by UPC and type as well as related content
- The ability to define and specify groups and date ranges for where and when content is active
- The ability to define a scripted playlist for video bumpers, attract loops, and the Wall-of-eyes (described subsequently)
- The ability to view/edit/delete/copy scripts

Data elements listed below are referenced by the distribution module when compiling a distribution. The data elements that represent changes to existing tables can be added to current screen layouts for user data entry. The DDS system's flexibility allows new tables and the required additional screens to be developed by the NMC's operator, and then integrated into the DDS system.

The system has the ability to track titles (CD's, videos, general merchandise, software (including CD-ROMs), and other such products) and the cataloging/inventory information associated with them. Preferably, information be provided for each title that specifies the groups in which stores are located for distribution of appropriate titles is supplied to DDS 100. Additionally, DDS 100 preferably receives information specifying the location of content files and script definitions that define the graphical behavior of the endcap unit(s) during attract modes and when titles are scanned. Other information preferably supplied to the DDS system includes, but is not limited to: data specifying text and graphic overlays for titles during video and audio playback, text strings (or other display data) that are to be used in the endcap attract mode, and endcap settings during audio playback.

The user interface includes several screens. The screens for user data entry of data elements used by the distribution module include, but are not limited to those listed in Table 1.

**Table 1. Data entry screens for the distribution module.**

| **Screen** | **Explanation** |
|---|---|
| Groups | Screen for data entry of groups that are used to group stores |
| Store Groups | Screen for user to associate stores with defined groups |
| Button Groups | Screen for user to associate buttons (titles) with defined groups |
| Video Text | Screen for data entry of text overlays of video clips |
| Audio Text | data entry of text overlays during CD audio playback |
| Video Icons | Screen for data entry of graphic overlays of video clips |
| Audio Icons | Screen for data entry of graphic overlays during CD audio playback |
| Script | Screen for data entry of script definitions |
| Attract Script | Screen for data entry of attract mode portion of a script definition |
| Scan Script | Screen for data entry of user-scan portion of a script definition |
| LCD Text | Screen for data entry of LCD text strings in a script definition |
| Bumper Exclusion | Screen for data entry of bumpers to be excluded for certain videos in a script definition |
| Audio Settings | Screen for data entry of endcap settings during audio playback |

The distribution and delivery module is the software module used at NMC 110 to create distributions destined for stores. The computing platform used by NMC 110 is preferably a high-performance PC-compatible desk-top system (e.g., Windows 95™, Windows NT 4.0™, LINUX™, or other operating system running on a PC-compatible computer having at least 16 MB RAM). The module's source code is compiled into an executable, and may be written in any suitable computer language, although the C++ computer language is preferable.

The functionality provided by this module preferably includes, but is not limited to:
- The ability to create a distribution pack or a set of content from the existing NMC cataloging system
- The ability to package and assign a distribution pack to be sent to a store or a group of stores
- The ability to verify the integrity of a distribution by scanning for the existence of referenced files
- The ability to send via FTP the distribution files to NOC 120
- The ability to graphically display transmission information
- The ability to log transmissions of distributions
- The ability to view the transmission logs

The Database module manipulates the NMC database as well as the 'Distributions' table described below, among other data. Information used by this module includes, but is not limited to, data regarding the UPC code, the site groups, the UPC groups, the related video materials (if any), the related audio materials (if any), and additional information, as. needed.

The interface of this software consists of a main screen with a grid layout of existing distribution records and a mechanism to define and schedule new distributions. For example, in order to generate a new distribution, the user can specify some or all of the following:
- A target group name from the 'Groups' table.
- A date when the distribution is to be sent.
- A blank date will specify ASAP status.
- A beginning and ending date range from which to select titles to be distributed and/or removed from a current distribution.
- A script definition identifier.
- FTP address and directory or local directory for distribution and envelope files to be transferred.

Once a distribution has been defined by user, a record in the 'Distributions' table is made and the following events occur. First, a distribution set is created. The system can perform a relational join between the relevant tables and execute a query for title/content identifiers (e.g., UPC code) that match the group and date range specified in the 'Distributions' table. This set of identifiers is referred to as the 'pending distribution set' and is copied into a new generated table that identified using the associated distribution identifier from the 'Distributions' table. This table is then a record of the content that is to be included in distribution according to the user parameters stored in the 'Distribution' record. The filename and path of this table is stored in the 'Distribution' record. Preferably, the system removes these files automatically when they are no longer needed.

Next, one or more difference sets are created. For each store in the targeted group, the pending distribution set table is compared to the store's current distribution set table and a result difference set is generated. This set represents only the differences between the current and pending distribution sets and is copied into a temporary table that is preferably identified in part by either the group name for the targeted group or the store identifier of the targeted store. This set is preferably the same for all the stores in a group, except in the case where a store has been recently added or moved to a group where it has a different current distribution set than other stores in the group. In such a case, a separate difference set is created for each newly added store in the group, with the file name reflecting the store's identifier.

Next, one or more distribution package(s) are created. Using the information in the difference table, the system will then perform several actions, preferably including at least the following:
- Searching for and compiling the binary content files associated into a temporary directory structure that will mirror the in-store directory structure.
- Creating necessary files used for textual information, including, for example:
   UPC.INI - where UPC is the UPC code of the CD title. This file is required for the listening post for LCD text data when playing audio-only CD's.
   LPx.INI - where x is the listening post number. This file is used for attract mode LCD text.
- Storing files in the directories as they appear on the target machine. The system creates in temporary storage the directory and file structure as it appears on the in-store target machines and copy content to the appropriate locations.
- Compressing the content files, including directory information into separate compressed files, one for each type of target in-store machine.
- Compressing the collection of separate compressed files into a master compressed file along with an information file on the directions for decompression.
- Creating a satellite attributes (envelope) file using the group defined in the 'Distribution' record's 'Group_Name' field in order to compile a list of store addresses to include in the envelope file.
- Transmitting the file(s) by copying the files to temporary storage area where the sender module sends the files for transmission.
- Receiving acknowledgment from the sites receiving the content. The system waits for a given time interval and collects acknowledgments from each recipient. Also performed is error checking, during which NMC 110 is notified of any packages that weren't sent or received. This mechanism may be effected via the transfer of acknowledgment files.
The envelope format contains several fields that define behaviors of package distributions. The various modules that handle packages in the envelope format may contain registry entries for these settings and may refer to them when assembling the envelope file. Once a file is transferred successfully to NOC 120, the 'Sent_Date' field of the 'Distributions' table can then be updated and the temporary data deleted.

Thus, the software can be used create 'distribution packs' that targeted to specific store sites and delivered to one or more stores on a scheduled or on-demand basis. The distribution packs, if used, contain content that is intended to either replace or enhance existing content already present on-site (unless the site's system is being initialized for the first time, in which case the packages delivered will for the basis of the site's initial content). Alternatively, the files may be compressed and transferred separately, or a streaming compression program of some type employed.

### IV. NETWORK OPERATIONS CENTER

Using the file compression approach mentioned above, the new content and script is compressed into a single file. The compressed file, along with the above site information for each affected store, is then transmitted to NOC 120, which may be a satellite communications center, an ISP on the Internet, a WAN hub, or other such central location. Optionally, the information may be distributed directly from NMC 110. Sites with identical content updates can be designated as groups (regions), if, for example, multiple file transfer protocol (MFTP) sessions or multicasting is used.

As will be apparent to one of skill in the art, in fact, several methods for distributing the information via satellite exists. Among these are internet protocol (IP) multicasting, switched multimegabit data service (SMDS), WAN protocols, internet group management protocol (IGMP), and Starburst™ multicasting (Multicast FTP™). These methods support the broadcasting or multicasting of promotional content to the commercial sales outlets.

One example of a multicasting technique is the Multicast File Transfer Protocol (MFTP) from Starburst™. This protocol is described in great detail in the specification entitle "STARBURST MULTICAST FILE TRANSFER PROTOCOL (MFTP) SPECIFICATION," (filename: draft-miller-mftp-spec-03.txt; dated April, 1998) which can be viewed at the time of this writing at the following universal resource locator on the World Wide Web:
http://www.ietf.org/internet-drafts/draft-miller-mft p-spec-03.txt
which is included herein by reference, in its entirety and for all purposes. File Transfer Protocols (FTP) are the workhorse file transfer protocol associated with the TCP/IP protocol suite. FTP is the file transfer application used for pulling documents off of the Internet, for example. FTP runs on top of the TCP transport layer. FTP relies on TCP for reliable delivery of data, as TCP provides connection-oriented service. This means acknowledged error correction of data transmissions and guaranteed ordering of frames. Connection-oriented transport protocols set up virtual circuits, where the virtual circuit makes the connection look like a physical circuit for the duration of setup. TCP, like many other error correcting protocols, corrects data on the fly based on the concept of sliding windows. The transmitter sends out a window worth of data before requiring an acknowledgment. For maximal efficiency, the window size (i.e. the time to send out a window worth of data) should match the round trip network delay. If this matches, the transmitter will not have to wait for acknowledgments but can continue to send data continuously.

TCP uses dynamic windowing, where the window size is calculated and set dynamically based on measurements of round trip delay and other parameters such as receive buffer size. However, the delays incurred in satellite data networks can be beyond the limit of window size, especially at high transmit rates, resulting in transfer inefficiency. FTP requires the setup of two TCP virtual circuits, one for control and one for the actual data transfer. The control virtual circuit is used for logging in and setup of the file transfer, with the other used strictly for data transfer. Hosts with multitasking operating systems, such as UNIX workstations, can have multiple FTP connections simultaneously to multiple sites allowing files to be sent to multiple sites concurrently.

A file transfer service in the TCP/IP suite that operates on top of UDP is the Trivial File Transfer Protocol, TFTP. TFTP was designed to be a very simple alternative to FTP, and was conceived to be so simple it could be implemented in a ROM. One big usage originally envisioned was for machine boot of software at startup. UDP provides a simple datagram service for transport. No error correction is provided, although error checking is done, with bad packets simply dropped. Packets may be delivered out of order. Thus, TFTP must provide the error control at the application layer to make sure that the file is transferred error free.

TFTP operates with a window of one with a fixed application layer message of 512 bytes. This means that every 512 bytes of transmission requires receipt of an acknowledgment before the transmitter can proceed to the next 512 bytes to be sent in the file. Window of one protocols work reasonably well when there is little round trip delay in the network, for example on a LAN. But if there is significant delay relative to the time to send a message, efficiency suffers greatly because the transmitter has to wait a high proportion of the time for acknowledgments.

Another file transfer protocol is based on the Multicast File Transfer Protocol (MFTP). MFTP operates over UDP in the TCP/IP protocol suite. An explicit transmit rate is settable, allowing a known amount of bandwidth to be reserved for other applications. The protocol is efficient, with little performance degradation due to delays over satellite or wireless networks. MFTP is designed for multicast and broadcast usage over data networks of all sorts including wireline and wireless WANs, and in other scenarios where multicast and broadcast services are becoming available.

There are three basic entities defined in the MFTP protocol; the frame, which is a link layer entity and has the same meaning for MFTP as for other protocols, the block which consists of a number of frames, usually hundreds or possibly even thousands, and a pass, which consists of transmission of the whole file on the first pass, and missing pieces on subsequent passes. Clients are obliged to send acknowledgments about the previous block at block boundaries. A selective reject negative acknowledgment indicates those frames within the block that are missing or in error.

An MFTP transmitter does not stop and wait for acknowledgments before continuing transmission. Rather, it transmits continuously until the whole file has been transmitted, at which point it sends another "pass" consisting of only those frames that were negatively acknowledged. A third or fourth pass may be required to complete error free transmission to all clients. The concepts of not stopping and multiple passes results in acceptable file transfer efficiency. The transmitter is transmitting the file virtually all of the time so that higher speeds can be used than might otherwise be possible. Only bad frames are resent. Performance tends to be independent of network round trip delay, which is important for high speed wireline, satellite, and CDPD wireless infrastructures. Multicast as well as unicast service is available when using MFTP.

MFTP has the additional capability to dynamically set up and tear down groups and add and delete members of a group to which a file is to be transferred. This capability provides a high level of flexibility and convenience to the user. Dynamic groups capability is able to operate in two different network environments; multicast IP for routed networks, and multicast frame relay or multicast SMDS for bridged environments. In the latter case, the group is set up totally in the application layer under control of MFTP. In routed networks, the routers route based on the location of members of the group using the IGMP protocol described in RFC1112, which is included herein by reference, in its entirety and for all purposes.

### V. COMMUNICATIONS NETWORK

NOC 120 communicates digitized data files 122 to a commercial sales outlet 130 via a communications network 125. Communications network 125 can be implemented in any one of several technologies. For example, a satellite link can be used to distribute digitized data files 122 to commercial sales outlet 130, as described below. This allows content to easily be distributed by broadcasting (or multicasting) the content to various locations. However, any response by the systems are those locations must be accomplished in some other manner, such as by leased line, public telephone line, the Internet, or some other comparable mechanism.

Alternatively, the Internet can be used to both distribute audiovisual content to and allow feedback from commercial sales outlet 130. Other ways of implementing communications network 125, such as using leased lines, a microwave network, or other such mechanisms, will be apparent to one skilled in the art.

As an example, Fig. 1A depicts communications network 125 as a satellite link that includes a transmitting station 121, a satellite 127, and a receiving station 128 at commercial sales outlet 130. Also at commercial sales outlet 130 is a receiver/decoder 135. Digital data files 122 are sent by NOC 120 via transmitting station 121 to satellite 127, which then broadcasts this information to various locations, such as commercial sales outlets (exemplified by commercial sales outlet 130). These commercial sales outlets receive this information via satellite receiving systems, such as receiving station 128. The digitized information is then provided to receiver/decoder 135 which then distributes this information to various points in commercial sales outlet 130.

Receiver/decoder 135 is capable of receiving, processing, and providing voice, video, data, and other forms of information to various devices within commercial sales outlet 130. While the configuration of the communications network 125 (and in particular, transmitting station 121, receiving station 128, and receiver/decoder 135) will vary according to the technology used to distribute digital data files 122. For example, while transmitting station 121 and receiving station 128 are described in terms of a satellite network, one of skill in the art will recognize that these elements could support broadcast or duplex communications systems. These elements could therefore be satellite transmitters/receiver pairs, a multicast network, a UUCP (Unix-to-Unix CoPy) network, or the like. Alternatively, these elements could be network interface cards, microwave transceivers, infrared transceivers, or the like. In this example, a satellite broadcasting system is employed. Transmitting station 121 and satellite 127 are implemented using commercially available satellite communication technology, and so are not described in detail herein.

Receiving station 128 and receiver/decoder 135 may also be of any conventional design, but are preferably implemented using satellite technology that lends itself to ease of installation and operation such as that available from Hughes Networking Systems, Inc., or DigitalXpress. An example of a satellite broadcast solution is the Receive-only Earth Station (RES™) system, by Hughes Network Systems, offers a flexible and cost effective means of receiving data broadcast by satellite. In this configuration, receiving station 128 and receiver/decoder 135 simply receive data files 122. Responses to NMC 110, reporting of broadcast errors, reporting of system integrity, reporting of consumer information, and the like are by telephone or leased lines (not shown), or other mechanism. Thus, the focus in this type of system is the provision of data files 122 to the remote sites.

The RES™ system is a satellite-based digital data receiver supports the distribution of high volumes of data in a data broadcasting environment. The RES™ design has an L-band receive interface and supports fine tuning in 1 kHz steps. The RES™ system thus provides reliable and efficient satellite data reception.

The RES™ package includes a low noise block downconverter (LNB), an interfacility link (IFL), and an indoor unit (IDU). The LNB, which can be easily integrated with a variety of receive-only antennas, downconverts the RF C- or Ku-band signal to L-band. The L-band signals are sent to the IDU via the IFL. The entire IDU, housed in a space-efficient set-top box, demodulates and decodes the signal. The RES™ system is an elegant and self-contained set-top unit, and is able to operate in a variety of environments.

The RES™ system is configured and controlled by means of software running on a personal computer, workstation, "dumb" terminal, or the like. The software enables the operator to set the unit's operational parameters. Thus, by software selecting system features such as the data rate, modulation type, and coding type, network flexibility is obtained. The software also maintains a check on the status of the RES™ system. Status information available includes, but is not limited to:
- User data rate
- Modulation type
- FEC type
- Receive frequency and offset, and other receiver parameters
The RES™ system's functional modes include the following four modes. During the idle mode, the RES™ system is quiescent, awaiting commands. During the acquisition mode, the RES™ system is actively searching for a receive signal in a region around an assigned frequency. During the tracking mode, the RES™ system is tracking, demodulating, and sending data to the user's system (e.g., a multimedia server 160 in commercial sales outlet 130). During the fade mode, the RES™ system has recognized a faded signal condition and is waiting for signal conditions to improve before resuming tracking mode, or until it times out and returns to acquisition mode. The RES™ system supports the demodulation of signals modulated using quadrature phase-shift keying (QPSK) or binary phase-shift keying (BPSK) at data rates of between about 64 kbps and 2.048 Mbps in multiples of 64 kbps (including 1.544 Mbps). The data rate used is software selectable. The data interface provided is, for example, an RS-422 interface, although other interface specifications can easily be met using the given hardware. Error.coding can be, for example, Viterbi decoding (e.g., K=7 in R 1/2 and R 3/4).

Another example of a satellite broadcast system is the Gemini Earth Station (GES™) from Hughes Network Systems, Inc. (HNS), which combines the HNS 9100 Universal Modem (UMOD) with a reliable and economical outdoor unit (ODU). The ODU unit employs an integrated architecture that provides high performance at reasonable cost. The GES™ is used in point-to-point (unicast) and point-to-multipoint networks. The GES™ offers the following advantages over conventional systems:
- Low-cost VSAT stations
- High reliability
- Good performance and versatility
- Single interfacility link (IFL) cable
- Easy operation and maintenance
- The remote RF equipment can be controlled from inside the site
- Simplified aiming of the antenna that requires only a voltmeter
- Integrates with other HNS products such as the Personal Earth Station™ (PES™, discussed infra) and the RES™ system (discussed supra)
- Local and remote monitor and control capabilities
The GES™ can be configured to operate in satellite bands such as the C-band and Ku-band. The station includes an indoor unit (IDU), an ODU, IFL, and antenna. The IDU consists of an HNS UMOD and an RF interface module (RFM). The 70 MHz intermediate frequency (IF) output of the UMOD interfaces with the RFM to convert the IF signals (transmit/receive) for use by the ODU. The RFM board also contains a multiplexer to combine all power, control, and transmit/receive signals onto a single IFL cable.

The universal modem can accommodate quadrature phase-shift keying (QPSK) or binary phase-shift keying (BPSK), although one of skill in the art could easily envision other modulation schemes that could successfully be used in this system. A viterbi, sequential decoding scheme is used for forward error correction, with coding rates of 1/2, 3/4, or 1 (i.e., no coding). Data rates supported by the system range from about 9.6 kbps to about 8.448 Mbps, and are preferably controlled in 1 bps steps. Data interfaces that the GES™ supports includes RS-232, RS-449, V.35, and G.703, although other formats can easily be accommodated in such a system.

The system may be monitored and controlled in several ways, such as by a front panel keypad and display, or by a terminal interface command set (e.g., for use with a "dumb" terminal). Other monitor and control interfaces can easily be devised, such as a graphical user interface (GUI) monitor and control system software. Optionally, a Viterbi/Reed-Solomon concatenated codec may be employed for improved bit error rate (BER).

An example of a satellite system capable of supporting two-way satellite communications is the Personal Earth Station™ (PES™) from HNS. This system provides a low-cost, high capability satellite communications system. The system is part of a private satellite network that supports two-way data, voice, multimedia, and one-way broadcast video and data communications between an NOC and remote sites.

A PES™ system is located at each remote site on the network, providing communications with NOC 120. NOC 120 may be, for example, a hub station located at a user's headquarters or data center or an HNS operated "shared hub." The PES™ system effectively supports data-intensive applications and, at the same time, provides fast response times for interactive applications. Capacity is allocated to remote sites on demand, providing optimum response times for remote applications.

The PES™ network is made up of two components: an outdoor unit (ODU) and a digital indoor unit (DIU). The ODU is a small antenna with an antenna-mounted radio frequency (RF) unit that enables the transmission of signals originating at the remote site and the reception of signals originating from the hub. Functions performed by the ODU include signal reception and downconversion to intermediate frequencies, and signal transmission and upconversion to radio frequencies. The size of the antenna depends on the data rates used and the satellite coverage available. The ODU is installed at the remote site, typically on a nonpenetrating mount secured by ballast on the roof of the remote site.

The DIU converts signals to and from baseband frequencies and provides interfaces to user equipment. The standard DIU is provided with two ports. Additional interfaces are available through a variety of expansion options. Multiple protocols are supported enabling interfaces to a variety of data processing and computer equipment. Video is transmitted independently of data and voice. The DIU is attached to the ODU through a single IFL cable.

This system can operate, for example, at frequencies in the Ku-band, the C-band, and other satellite bands, at various data rates. Asynchronous data rates are supported up to 19.2 kbps, while synchronous data rates of between about 1.2 kbps and 64 kbps, at standard data rates, are supported. Interfaces supported include data interfaces, LAN interfaces, voice interfaces, and video interfaces, such as RS-232, RS-422, V.35, RS-530, Ethernet (UTP, coaxial), Token-Ring (Type 1, Type 3), RJ-11 (two-wire loop start or four-wire E&M). Protocols supported by the PES™ system include, but are not limited to, Ethernet (10 Mbps), Token-Ring (4/16 Mbps), SDLC (PU4-PU2, PU4-PU4), SDLC-to-Token-Ring, X.25, BSC 3270, TINET, Bit and Byte Transparent, HASP, Frame Transparent, X.3/X.28 PAD, Broadcast, and other, more specialized protocols.

Alternatively, a system such as that manufactured by DigitalXpress may be used in implementing receiving station 128 and receiver/decoder 135. One system from DigitalXpress includes an antenna kit and a receiver. The antenna kit consists of a 36" reflector, a non-penetrating roof mount, and Ku-band (11.7 to 12.2 Ghz) LNB (low noise block downconverter). The antenna is easily aligned and is secured via the mount to the roof with ballast. The antenna receives linearly polarized signals from the DigitalXpress transponder on the SBS-6 satellite located at 74 degrees west longitude. The LNB is located at the focal point of the Ku-band antenna, receives power from the DigitalXpress digital satellite receiver and generates an L-band (950 to 1450 Mhz) RF signal which is routed to the satellite receiver via an RG-6 coaxial cable. The antenna has a frequency range of between about 10.95 GHz and 12.75 Ghz. Also offered is a 1.2m antenna with similar characteristics

The DigitalXpress receiver is a tabletop, VCR-sized component that connects via coax cable to the LNB and antenna. The receiver has the following outputs:
- S Video
- Modulated Channel 3/4 TV
- Stereo Audio
- Wideband Data Port
- RS-232 Port
- RJ-11 Telephone Port
- RS-422 High-Speed Data Port
These outputs are similar to those of a VCR, with the exception of the Wideband Data, Telephone, and RS-232 ports, which are used for data applications. The receiver kit also includes a security system utilizing an access card. This credit card sized device contains active electronics, and employs a verification system that allows only authorized users to decrypt video and computer data.

### VI. DIGITAL DEPARTMENT SYSTEM™ ON-SITE NETWORK

Receiver/decoder 135 is preferably capable of receiving both digital and analog information. With regard to data reception and distribution, receiver/decoder 135 is connected to various network nodes in commercial sales outlet 130 via a network system 150. Network 150, while it may be directly connected to various other nodes in commercial sales outlet 130 is connected in Fig. 1B to multimedia server 160, as noted. For most of data files 122, once they are received by receiving station 128 at commercial sales outlet 130, they are passed to receiver/decoder 135, which in turn passes them on to multimedia server 160. Multimedia server 160 is connected via the network (e.g., an ether network using a TCP/IP protocol stack, and using FTP file transfers to distribute the promotional information) to various nodes in commercial sales outlet 130. These nodes include (but are not limited to) an in-line home video station 161, an in-line computer hardware and software interactive display 165, an in-store radio system 170, a wall-of-eyes 180 (which may be connected to either multimedia server 160, or to receiver/decoder 135 via a video switch 175, which is optional), listening posts 185, audio/video endcaps 190, audio/video endcaps in other departments 195, on-line services 200 and an entity LAN 210. Entity LAN 210 may be connected to an on-line internet commerce access system 220, a UNIX server 230 and/or a CBL server 240, among other such possible connections.

Preferably, each site (as represented by commercial sales outlet 130) houses a multimedia server (represented in Fig. 1B by multimedia server 160). Each multimedia server is capable of receiving distribution packs and, accordingly, distribute them in-store. Interactive Endcaps are capable of storing their own content and receiving content when distribution packs are received. Optionally, other audio content may be served on-demand from multimedia server 160 to the requesting listening post or audio/video endcaps 190. Additionally, multimedia server 160 is capable of driving wall-of-eyes 180 as a separate sub-system. Content intended for wall-of-eyes 180 may be included in a distribution pack (or sent separately) and may be hardware pre-empted when a live video feed is presented via video switch 175. DDS 100 is capable of gathering user usage statistics and performing periodic diagnostic checks on itself and audio/video endcaps 190. Gathered information may be sent by the DDS server to NMC 110 on a scheduled or on-demand basis (e.g., via an FTP backchannel communication). Optionally,multimedia server 160 may also provide certain in-store management functions.

### VII. MULTIMEDIA SERVER OPERATION

Software (not illustrated) residing on multimedia server 160 provides operational and database functions to support the distribution of promotional content and the gathering of system and customer statistics.

Multimedia server 160 is a computer (preferably, a PC-compatible computer) that preferably runs one or more of the following software packages:
- DDS distribution receipt module
- DDS maintenance module
- Endcap Log Server
- TCP/IP and FTP network services (or software providing comparable functionality)
- HTTP services
- Wall-of-eyes Script Module
- IP Multicast Software (or software providing comparable functionality)
On or more of the above software modules, aside from the distribution receipt module, are preferably loaded either as services or are run as background tasks. The wall-of-eyes script module is normally the focused foreground application and so should have CPU priority. The server preferably has network access to the endcap stations through network file services. Access to the listening posts may be, for example, through TCP-level communication. The software on multimedia server 160 provides the functionality required to manage content, allow the previewing of content, maintain system and consumer statistics, and the like.

One of the modules needed to implement the DSS system on-site is a satellite receiver communications module. Multimedia server 160 will periodically receive data from NOC 120. This may be via a satellite receiver at commercial sales outlet 130 (as shown in Figs. 1A and 1B), or may be by some other method, such as a wide-area network (WAN), an Internet connection (either by independent service provider (ISP) or leased line), or other method. The data will generally be contained in a ZIP file, alone with instructions regarding the directory into which it needs to be unZIPped. Alternatively, the files may be sent uncompressed, or sent separately, or packaged using a UNIX tar command or equivalent, or by another method.

Via an NMC communications module, multimedia server 160 preferably provides the ability to contact (via modem or other communications functionality) NMC 110. Alternatively, other communication methods may be used, such as a two-way communications system (e.g., WAN, Internet, and the like). For example, the Personal Earth station™ from HNS might be employed as described previously. Multimedia server 160 may contact NMC 110 either on a scheduled basis or an event triggered basis. An example of a scheduled dial-up could be to report daily usage statistics. An example of an event triggered dial-up could be a diagnostic failure.

Also provided is a data routing module. On a regularly scheduled basis, multimedia server 160 may be configured to search a pre-determined list of directories for the existence of new files or new versions of files. If new files are found, they may be sent to a network address associated with the directory in which they are found.

Also provided is a boot-up module. When the multimedia server boots up, it preferably commences normal server boot-up functions. Preferably, the boot-up module also checks for evidence of a previous abnormal shutdowns. This may include invoking the data routing module.

Also provided is a management module. The management module has the capability of providing store management with the ability to log on to the multimedia server as a user with limited access to make modifications to pre-defined files. An example would be to create or modify a text file containing a promotional message for a featured product.

Also provided is a distribution recipient and router module. The distribution recipient and router module is preferably started by the satellite communications module when a file (e.g., one or more of data files 122) has been received and is ready for distribution. The file transferred may be passed on the command line, or provided in another manner (e.g., by an operator). Functionality provided by this modules includes, but is not limited to the following:
- The ability to de-compress distribution packs
- The ability to determine from setup.ini file where files are to be decompressed to
- The ability to route appropriate portions of distribution packs to addressed Interactive Endcaps
- The ability to log the reception and routing of distribution packs
- The ability to view the distribution logs
- The ability to provide acknowledgment of packages directly to the NMC OPERATOR through direct FTP.

Any manner of user interface display may be employed, but preferably, a main window with a grid displaying distribution data log records for each distribution is presented to the user. No interface is displayed when launched with a command-line file argument. This module receives the filename of the distribution file on the command line when launched. After the file is located, the following operations can be performed:
- File decompression into the temporary directory into individual compressed files
- Parsing the setup file to determine the source files and destinations
- Recursive decompression of files into the appropriate destination directories
- Removal of temporary and original download files is then performed
- A log file record may be generated in the log file
Optionally, if a "delete" file is included in any of the individual files, those UPC's and files may be removed from the corresponding system(s). The multimedia server should have network access to the nodes referenced in the destinations. Otherwise, an error may occur and a distribution pack may not be successfully sent.

The purpose of the wall-of-eyes script module is to execute video playback scripts for wall-of-eyes 180. Functionality provided by this modules includes, but is not limited to the following:
- The ability to read the scripts designated for wall-of-eyes 180
- The ability to play and output to wall-of-eyes 180
This module may be provided with only a consumer interface, or may provide other interface functionality.

The video content (preferably MPEG-2 encoded and with no text or graphics overlay information accompanying same) is made available from, for example, data files 122 received by multimedia server 160. Content may be stored locally (on multimedia server 160) or remotely (at NMC 110, NOC 120, or on one of the nodes on network 150).

A maintenance module is provided to gather statistics on user usage. Listening posts (or other network nodes) gather daily statistics, and the module periodically gathers such data into a table and cleans out directories containing older versions of such information. A statistics file may be maintained for each one of listening posts 185, at one or more of listening posts 185, at one or more of audio/video endcaps 190, on multimedia server 160, at another of the many nodes connected to network 150, or at a remote location (e.g., NMC 110 or NOC 120). Following are examples of the data that may be logged for each network node (or groups of nodes, or for only one node) on a daily (or weekly, monthly, or other) basis, using a music CD selection as an example:
- Number of scans per product
- Number of times a song is accessed by the FWD button
- Number of times a song is accessed by the REV button
- Number of times a song plays by default
- All UPC codes not recognized by system
The system is also capable of scanning these and other in-store systems for possible errors and reporting them to NMC 110. On a regularly scheduled basis, multimedia server 160 preferably performs self diagnostics, as well as polls listening posts 185 and audio/video endcaps (e.g., audio/video endcaps 190) for diagnostic status, such as alive and well, low disk space, etc. Signal quality (impedance check) of wall-of-eyes 180 and other system checks may also be performed. If an anomaly is found, the NMC communications module can be invoked to report the problem to NMC 110 so that appropriate action(s) may be taken.

Functionality provided by this modules includes, but is not limited to the following:
- The ability to gather and catalog daily statistics files created by listening posts
- The ability to gather and catalog daily statistics files created by audio/video endcaps
- The ability to refresh statistics directories
- The ability to scan server disk for low disk space
- The ability to ping and scan interactive endcaps for low disk space
This module will normally be loaded at all times in multimedia server 160. At a pre-defined interval, usually at an off-peak time, the system preferably:
- Gathers ".log" files from the listening post directories in an area on multimedia server 160 and removes them from the log area
- Copies the log files to the statistics destination directory
- Ping listening posts and endcaps to ensure they are "alive"
- Scan endcaps (and local) drive space
Errors are reported to the SNMP agent running as a process in multimedia server 160 as a trap. Error thresholds are determined by stored settings

The interactive endcap module provides the functionality required to support in-line home video station 161 and audio/video endcap 190 in allowing users to scan UPC codes of featured products (or otherwise identify other products of interest) and be presented with video and audio clips relating to the product's content, product demonstrations, or the like. This module communicates with a listening post module through a connection over network 150. The interface for this module can, for example, allow one or more of the nodes connected to multimedia server 160 via network 150 to emulate a kiosk. Functionality provided by this module includes, but is not limited to the following (which are stated in terms of a CD music preview configuration):
- The ability to receive a UPC scan interrupt.
- The ability to play MPEG and video and audio content associated with a UPC according to a scan script.
- The ability to respond to navigation button presses sent from the listening post module and respond accordingly.
- The ability to read and play attract and bumper scripts

In this configuration, the module performs the following functions:
- Play an attract mode based on the current script definition.
- Perform TCP communications with the attached listening post device used as a scanning station to determine when a product is scanned and when buttons are pressed. Additionally, the software will have the ability to send text strings to the LCD panel on the listening post according to the attract script through this communication channel. The server-based management module will also use this communications channel pause the system while updates are being made. When a UPC is scanned, play the scan script based on the current script definition.
- Immediately display a product graphic and other information with any video content displayed.
- When playing the title video, display any text and graphics overlays. If the consumer does not press the forward button to hear more songs, the system at video completion, will display a graphic informing the user that more audio tracks are available and prompting them to press the forward button.
- When playing CD audio tracks, display a background with the album graphics and text overlays, including the audio titles, the currently selected track, and any prompts and sponsorship icons.
- Video content (which has been defined as MPEG-1, although other formats may be employed) and other content is stored on the endcap units local storage using the directory and file naming conventions described elsewhere in this document.

A wall-of-eyes script module allows multimedia server 160 to interpret the script(s) associated with wall-of-eyes 180, which are discussed infra. For purposes of this discussion, a "wall-of-eyes" is a display using two or more TV's, monitors, flat panel displays, or other display devices. The purpose of the script is to control the content which is displayed on the wall-of-eyes. Following are examples of elements that may be controlled by the script, although the elements should not be limited to those listed:
- Video clips displayed on wall-of-eyes 180
- Video clip order and frequency
- Video clip in/out date and time
- Graphic overlays per clip
- Text overlays per clip

For example, a continuous-play, 2-hour, non-interactive program can be displayed on wall-of-eyes 180, which may done during some or all of the site's hours of operation. In one embodiment, a mix of existing entertainment programming (music videos, home video trailers, first run movie trailers, for example) are played. Original entertainment features (interviews, behind the scenes looks at movies/videos, specials on concert tours), sponsor advertising spots and commercial entity spots/information clips may also be displayed.

Preferably, video is delivered in MPEG-2 format, but other formats, and even uncompressed, standard video, may be used. The original entertainment features are preferably provided by outside suppliers (such as production studios). The different programming elements are preferably assembled at NMC 110 into one cohesive show (although this may be done at an off-site location), and those elements bound together with short introductions, headlines, trivia segments, question-and-answer segments, commercial entity facts, station identifications, and the like, all created by the NMC operator (or other source), thereby creating a finished show image. One benefit of the present invention is the minimization of burn-out/annoyance of outlet personnel constantly exposed to the content displayed. Repetition is kept to a minimum, while still meeting advertising objectives of advertisers.

Programming may employ the following exemplary guidelines, although other scenarios will be apparent to those skilled in the art:

| Minute of hour | Description |
|---|---|
| 17.5 | Music Videos: 5 videos per hour, 3.5 minutes each, non-repeating during the 2 hour show |
| 5 | Home Video Trailers: 5 trailers per hour, 1 minute each, non-repeating |
| 4 | Theatrical Movie Trailers: 2 trailers per hour, 2 minutes each, repeating once per hour |
| 9 | Corporate Sponsor Ads: 9 Sponsor advertisements per hour, :30 each, repeating twice per hour |
| 20 | Production studio TV content: 4 segments per hour, 5 minutes each, non-repeating |
| 3 | Announcements for commercial sales entity: 6 segments/hour, :30 each, repeating once per hour |
| 1.5 | Glue segments: 9 segments/hour, 10 seconds each, repeating once per hour |

Total running time for this example is 60 minutes. Content is preferably completely revised on a monthly basis with 25% of content changed every week. Preferably, whenever possible, multiple versions of repeating content, particularly sponsor announcements, are rotated within each hour and on a weekly basis.

Preferably, programming is scripted with separate files for each content element (handled by the wall-of-eyes script module). This allows for seamless changing of content pods at any time via the chosen communications method. Also preferably, there are several regionalized versions of each month's program (the specific number of which can easily be configured). Each regionalized version emphasizes a different music genre (e.g., country, rock, alternative, and the like). Sponsorships may be changed between each of the versions, although that is not necessary -- sponsorships may be the same for all versions; any amount of the content may remain unchanged between the versions.

The program preferably has the capability to switch from prepared programming to delayed live feed programs (special events, messages from/interviews, and other live-action sources), with switching taking place at the level of the commercial sales outlet (using, for example, video switch 175) or at entity headquarters (NOC 120 or actual headquarters).

One of the primary functions of multimedia server 160 is the provision of content to nodes connected to network 150. These tasks are handled by an audio playback communications module. The following is an example of the functionality that can be provided by the audio playback communications module. When a barcode is scanned at a listening post, the UPC code is transmitted to the multimedia server via network 150. This is just one example of what can be done with such information, however. The information could be processed by computer of audio/video endcap 190, one of listening posts 185, another node on network 150, or a remote location (e.g., the NOC or NMC). The audio playback communications module "looks up" the UPC code and sends the data back to the requesting node, such as audio information for previewing a music CD:
- Compressed audio file for the first track preview
- Multiple lines of text associated with each UPC code (e.g., artist name, price)
Alternatively, the audio data may be streamed to the node using, for example, real-time audio compression and transmission technology. This is also true for video data sent throughout this system. In the audio file example, when the FWD button is pressed, the current audio preview is interrupted and a subsequent audio file is sent to the listening post The number of times the FWD button generates a new audio preview is dependent upon the number of previews available for a given CD. If the FWD button is pressed during the last preview, a text string (or other data) will be sent to the listening post indicating that no more previews are available. This data may be displayed, for example, on an LCD display at the listening post.

If the REV button is pressed during any subsequent audio preview, the preview is interrupted and the previous audio file is sent to the listening post. If the REV button is pressed during the first audio preview, a text string (or other data) may be sent to the listening post (again, that may be displayed on an LCD display) instructing the consumer to push FWD for more previews. If an audio file completes playing uninterrupted, the subsequent audio file will be sent. This action may continue until all audio files for the scanned CD have played, or may be re-run in an infinite loop. If a new CD is scanned during audio playback, the new UPC is processed, playback is interrupted and an audio file for the new CD is sent.

If a barcode is scanned and the UPC is not recognized by the multimedia server, a text string (or other data) is sent to the listening post for display, notifying the consumer that no previews are available for that barcode. If a CD barcode is scanned at the interactive endcap, and it is not a featured product (i.e., it has no video available), the endcap may be configured to emulate a listening post from the multimedia server's perspective in such a scenario.

### VIII. LISTENING POST

Listening posts 185 permit users to preview audio clips from various recorded media, including CDs, albums, tapes, DAT tapes, and other recordings. Wall-of-eyes 180 and audio/video endcaps 190 can be used to allow customers to preview both prerecorded audio material and prerecorded video material, prior to purchase, based on selections made using one of listening posts 185. Similarly, audio/video endcaps in other departments 195 allow users to learn about various products either visually or audibly by inputting identifying information into the system. For example, a customer could use a keypad, mouse, trackball, or other input device to select from one of a number of displayed products to learn more about that product. Alternatively, a universal product code (UPC) scanner could be used to read the UPC off of the product when the user scans that product with a scanner. A benefit of this method is that the UPC is guaranteed to be unique. Once a UPC is scanned in, informational material stored either on the endcap or on multimedia server 160 may then be provided to the customer to inform them about the product. In the case of audio or video material, audio or video (or a combination thereof) is provided to the customer to acquaint them with the selection they have chosen. For example, audio clips may be played at listening posts 185 and/or audio/video endcaps 190 (among other locations), and videos displayed on wall-of-eyes 180 and/or audio/video endcaps 190, in one embodiment of the present invention.

Listening posts (exemplified by listening posts 185 in Fig. 1B) are preferably provided in DSS 100 to allow a consumer to preview product content, although they can be configured to allow users to view product demonstrations, product stills, and other advertising content. A listening post is a dedicated device that can be configured, for exmaple, to play audio samples from CDs for users (e.g., consumers) to preview. Listening posts 185 are connected to multimedia server 160 via network 150. Several modules are employed in operating the Listening posts.

First is the user interface module, which implements a user interface, used by the consumer to interact with the Listening post. The user interface module provides one or more ways for the consumer to interact with the system. In the example of playing music clips from CD's, these include:
- A barcode scanner
- Forward (FWD) button
- Reverse (REV) button
- Volume up (UP) button
- Volume down (DN) button

The barcode scanner allows the consumer to scan the barcode any product in the department. When a barcode is scanned, the UPC is transmitted to multimedia server 160 to be handled by the audio playback communications module. The listening post will decode the compressed audio files which are streamed from the multimedia server and display the text on the liquid crystal display (LCD). When the FWD button is pressed, an interrupt is sent to multimedia server 160 notifying the audio communications module to take appropriate action. When the REV button is pressed, an interrupt is sent to multimedia server 160 notifying the audio communications module to take appropriate action. The volume buttons are self-explanatory.

A display module is provided to manage the display of information. The display module decodes the audio files which are sent from multimedia server 160. The display module also retrieves any text data sent along with the compressed audio data and displays it on the Listening post's display.

A multimedia server communications module is provided to allow communication between the Listening post and multimedia server 160. The server communications module is responsible for logging on to the multimedia server when the Listening post is initialized. When a barcode is scanned, the server communications module transmits the UPC to, for example, multimedia server 160 (although other nodes on the network, such as NOC 110 or NMC 120, may also be accessed). Similarly, when either the FWD or REV buttons are pressed, the server communications module notifies multimedia server 160, in order that the proper selection is provided to the user. The server communications module also acts as the "sentry" that recognizes a compressed audio file being sent from the multimedia server 160 and routes it to the display module.

The various providers provide content to NMC 110 (or other entity) for editing and storage in digital file format, in order to provide a constantly updated library of content to sample. Each content sample consists of a number of segments (e.g., several available music clips), preferably 3. In the example of music CDs, each segment is a music clip that is preferably a 25-30 second "hook" from a song, edited from a sample CD. Preferably, this is the second or third chorus of each song preceded by a 4-6 second transition phrase.

An average of 400 new 3-song album samples may be added to the network each month (although a greater or lesser number of samples could be added); simultaneously, a similar number of older samples will be deleted each month. Additions and deletions are preferably implemented twice per week (approx. 50 samples at a time), although this periodicity may be easily altered. Additions and deletions may also be scheduled ahead of time.

Content may be delivered to the consumer over headphones, which can be snapped out and replaced easily by NMC (or other) representatives, while still maintaining security and strain relief when in use. Wireless.headphones or speakers, among other audio output devices, may also be used. Enclosures will have the capability to be easily retrofitted for small speakers. Listening posts 185 may also be configured to provide video content, in order to enhance the consumer's previewing experience by providing video content, such as music video clips corresponding to the audio clip being played.

Listening posts may be, for example, of two types: dedicated and non-dedicated (although other configurations can easily be envisioned by one of skill in the art). Dedicated Listening posts include elements such as a barcode scanner, two-line LCD panel, ethernet card , TCP/IP stack, FTP client, and other components necessary to support the requisite communications and the previewing of content and advertising. Functionality provided by a dedicated Listening post includes, but is not limited to the following:
- Perform scanning functions
- Perform user button press functions (e.g., navigation, volume)
- Retrieve and playback audio files as well as read text files to display on LCD panel from server according to UPC code and user button presses

The listening posts communicates with multimedia server 160 via a networking protocol, such as FTP, over network 150. Files associated with each UPC are stored in a special directory on the server which will provide for rapid lookup given a particular UPC. Usage statistics and listening post files are stored in unique directories for each listening post.

In contrast, non-dedicated Listening posts, while similar to the dedicated posts, perform some slightly different functions. The audio output from the unit may be looped into the line-in on one of the audio/visual endcaps' soundcards. Functionality provided by a non-dedicated Listening post includes, but is not limited to the following:
- Periodically retrieving 'featured' CD list and home video list files from server and store internally for fast lookup
- Performing listening post functions for non-featured titles (non video titles), and perform normal statistics gathering for titles
- Notifying of UPC scans to the interactive endcap PC for featured-titles
- Button press notification to the interactive endcap

Listening posts 185 may be standalone, or may be associated with audio/video endcaps 190 and/or in-line home video station 161, which are connected to multimedia server 160 by one or more connections. One connection may be provided for the computer portion and one connection for the listening post, for example. The non-dedicated listening post and audio/video endcap may be configured to communicate over network 150 via, for example, a TCP socket connection.

For featured titles and home videos, the UPC is sent to the audio/video endcap's computer through a TCP socket connection. No audio need be played by the listening post during such a transaction. Optionally, for non-video and non-featured titles, a UPC code of 00000000000 may be sent to the audio/video endcap's computer to designate that a static graphic should be displayed.

All button presses are preferably sent to the audio/video endcap's computer (e.g., through a TCP socket). Volume settings and content navigation may be handled by the audio/video endcap's computer. The listening post output may remain constant at this juncture. The audio/video endcap's computer may be configured to ignore button presses when a non-featured title is currently being played by the listening post.

### IX. AUDIO/VIDEO ENDCAPS

Audio/video endcaps 190 allow users to preview audio and video samples. Examples of such endcap systems are described in commonly assigned U.S. Patents US 5,815,471 filed August 8, 1996 and entitled "METHOD AND APPARATUS FOR PREVIEWING AUDIO SELECTIONS"; and US 5,990,879 filed December 20, 1996 and entitled "METHOD AND APPARATUS FOR SIMULTANEOUS PLAYING VIDEO AND AUDIO DATA", both of which are hereby incorporated by reference in their entirety. Another example of such systems is described in commonly assigned U.S. Patent 5,084,768 entitled "METHOD AND APPARATUS FOR PREVIEWING RECORDED INFORMATION," issued to M. R. Stern and S. M. Stern, hereby incorporated by reference in its entirety.

Audio/video endcaps 190 may be PC-based systems, or may use another computer platform (e.g., a workstation, a single-board computer, or other processing platform). One or more of the computer's storage units preferably contains all of the content (video, audio, graphics, text, and so on) associated with the products featured at the endcap. It will be connected to the multimedia server via network 150.

The user interface of audio/video endcaps 190 includes several ways for the consumer to interact with the system, five examples of which are now listed. First is a barcode scanner, which allows the consumer to scan the barcode of products, such as CDs featured at an endcap, or any other product in the department. For example, when a barcode of a CD is scanned, the UPC is transmitted to the endcap's computer. If the CD is a featured product, content is played back per the scan interrupt script. If the CD is not a featured product, the UPC is transmitted to the multimedia server to be handled by the audio playback communications module. The endcap may then emulate a listening post by playing the audio files which are streamed from the multimedia server and display the text on the endcap's display (e.g., an LCD display). For example, if a home video is scanned at the interactive endcap, a graphic screen may be displayed instructing the consumer to scan the video at in-line home video station 161.

Several controls are provided to allow the user to control the presentation. The user can control which of the possible audio and/or video clips are being played. If the forward (FWD) button is pressed while the music video for a featured product is playing, the video is interrupted, and preferably, if an audio preview is available, it should begin to play. The number of times the FWD button generates a new audio preview is dependent upon the number of previews available for a given CD. If the FWD button is pressed during the last preview, a text string (or other data) may be displayed indicating that no more previews are available. Alternatively, the play may cycle back to the beginning. If the FWD button is pressed while audio files from the multimedia server are being played (i.e., the product scanned was not a featured product) the endcap emulates a listening post by sending a FWD button interrupt to the multimedia server.

The reverse (REV) button has no effect unless a second or subsequent audio file is being played. If the REV button is pressed during a second or subsequent audio preview, the preview is interrupted and the previous audio file begins playing. If the REV button is pressed during the music video or the first audio preview, a text string will be displayed instructing the consumer to press the FWD button for more previews. If the REV button is pressed while the PC is playing a second or subsequent audio file from the multimedia server (i.e., the product scanned was not a featured product) the PC will then emulate a listening post by sending a REV button interrupt to the multimedia server.

The audio/video endcaps allow the user to adjust the volume of the audio portion of the presentation. Pressing the UP button increases the audio volume within a preset range. Pressing the DOWN button decreases the audio volume within a preset range.

The audio/video endcap's display module of plays multimedia data based on information contained in the scan interrupt script and the attract script. Following are examples of the types of multimedia data that can be displayed, although the audio/video endcaps may be configured other types of multimedia may be displayed:
- Compressed video files with audio
- Compressed audio only files
- Graphics files - icons for video overlay
- Graphics files - icons and backgrounds
- Text files - video overlay
- Text files - overlaid on graphics
- Text files - displayed on the LCD

A script module is responsible for interpreting data contained in at least the "attract script" and the "scan interrupt script" script files. The attract script defines what is displayed on the color monitor and the LCD when no consumers are using the system. Following are examples of the color monitor display elements which may be controlled by the attract script:
- Video clips (incl. attract videos, product videos, sponsor videos and bumpers, etc.)
- Video clip order and frequency
- Video clip in/out date and time
- Graphic overlays per clip
- Text overlays per clip

The following LP display elements which may be controlled by the attract script:
- Text files (instructional text, promotional text, advertising text, etc.)
- Text file order and frequency
- Text file in/out date and time
LCD text files (or the files containing the data to be displayed) may be linked to particular video clips or played independently.

The scan interrupt script defines what is displayed on the color monitor and the LCD when a consumer scans the barcode of a featured CD. The scan interrupt script may be configured to contain a look-up table which references the UPC of featured products to elements associated with that product. This is likely the simplest method, but other methods exist which are equally effective (e.g., a list of names and descriptions). For example, the following are elements which may be associated with a CD's UPC, among others:
- Music video file
- Graphic icon overlays for music video
- Text overlays for music video
- Audio files (multiple)
- Graphic screens for display during audio only playback
- Graphic screen for display when a home video is scanned
- Graphic screen for display when the UPC is not recognized
- Icon overlays for audio only screens
- Text overlays for audio only screens (song titles, liner notes, etc.)
- Text files to be displayed on the LCD

The scan interrupt script may also define data, such as corporate sponsor bumpers, that can be displayed on the color monitor and LP display before or after the scanned product data is displayed.

A statistics file can also be maintained on the audio/video endcap. Data logged on a daily (or weekly or monthly or other) basis by any one of the nodes in the present invention includes, but is not limited to:
- Number of scans per product
- Number of times a selection is accessed by the FWD button
- Number of times a selection is accessed by the REV button
- Number of times a selection plays by default
- All UPC codes not recognized by system

The server communications module is responsible for logging on to multimedia server 160 when an interactive endcap initializes. Multimedia server 160 may be configured to periodically send new or updated files to the interactive endcap. The multimedia server communications module (or software modules on the Listening post or audio/video endcap) processes the files, optionally in background mode. This is done to ensure that files that are replaced are not in use. The files that are no longer required by the scripts may be deleted, preferably at this time. On a scheduled basis (also, optionally, in background mode), the multimedia server communications module (or other, as indicated) may send the daily statistics data to multimedia server 160, NOC 120, NMC 110, or other node/entity on the network (e.g., the information might be supplied to a distributor, or directly to the manufacturer, for marketing purposes, or to implement just-in-time stocking).

The system may be configured to offer shoppers a video clip (e.g., a 30-second full-motion MPEG-1 video clip), followed by one or more audio clips (e.g., three 25- to 30-second audio clips). This may be done each time a featured title is scanned, for example. Sponsorship may employ a model that provides a number of sponsor slots in the unit's programming. The system may also provide placement on wall-of-eyes 180 to sponsors that are on audio/video endcaps 190 (or other sponsors or entities).

A display (e.g., a 20" TV monitor) is preferably mounted on top of and slightly behind the existing endcap fixture, with a scanner enclosure preferably mounted into the top center slot of the fixture. Input from the user may take many forms. This could be, for example, a scan of a UPC code or a button touch on a system keypad. The fixtures on a rack are preferably configured to hold one or more of the products for which information is available at the endcap. For example, the fixtures on a rack might hold 42 CD facings (jewel cases) (6 rows x 7 columns) or 28 facings (long-box security cases, 4 rows x 7 columns). Other configurations for holding CDs (or other audio/video products, or other products in general) are, of course, possible.

Assuming a CD music configuration with 42 facings, most or all of the content preferably changes monthly, with 10-11 titles added/deleted once a week. Video content may be from several sources and in several forms. Such content might, for example, be edited from tape provided by the recording company. Audio content is preferably identical to the content developed for the Listening post system, but that need not be the case. Preferably, the system plays audio-only samples of any title in the department through its speakers, with an onscreen graphic explaining that only audio is available for that title. A custom attract mode may also be provided for the initial system launch, and revised at prescribed intervals. Attract modes may be customized for seasons, holidays, special themes, or for other reasons, to provide an appropriate for the recordings/videos/products being promoted.

Audio/video endcaps 190 may run the following software, among other software:
- Audio/video Endcap Software
- TCP/IP services
The above modules may be loaded at initialization, if desired, or may be loaded at a later time. The audio/video endcap software provides the basic functionality required for the endcap's operation, while the TCP/IP services provide connectivity to multimedia server 160 (although other networking protocols and standards could be employed to provide such functionality). Each endcap may store content locally (or may retrieve content from one or more nodes one the network) and need not feed data from the server over the network in real-time, if that is desired. Preferably, however, content is delivered with normal distributions.

### X. IN-LINE HOME VIDEO STATION

In-line home video station 161 is preferably based on a PC-compatible system, although a single-board computer of any architecture, a workstation, or other system may be used. The computer of in-line home video station 161 preferably contains the content (video, graphics, text, etc.) associated with the home video products featured in the department. This may be 400 or more such items. Preferably, the computer is connected to the multimedia server via ethernet, although other networking architectures may be used, as may serial lines and other modes of communication. In-line home video station 161 possesses functionality similar to that of an audio/visual endcap, although certain features may be deleted or changed.

The content displayed by in-line home video station 161 is preferably in-home video selections, although other audiovisual information (e.g., product demonstrations) can be displayed by in-line home video station 161 in response to its selection by a consumer. Users can pick up any video box in the section, scan the UPC code (or indicate the identity of the video by some other input means), and receive a video sample of the film (e.g., a 30-second, full-motion video review or advertisement for the selected title).

Using this system, video previews may have a superimposed box cover and title on-screen during the video. Other on-screen graphics (such as pricing and release date info) may be made available and are easily changeable using the present system. Videos and video clips may be delivered in a compressed, digital format (e.g., MPEG-1 format). Content may be edited, for example, by pulling 30 second clips directly off tape supplied by manufacturers (the preferred method), editing-down the 90-120 second dealer trailers supplied by labels, or editing out two 15 second segments from the full length movie and splicing them to a 30 second clip. Preferably, all titles in the department are previewable.

Preferably, the commercial entity provides the NMC operator a monthly list of titles to be updated, along with key contact names at video manufacturers. Of course, any method of title selection may be used to determine which titles will be used. For example, tapes (and titles) may be provided directly by manufacturers. Sponsor messages from one or more Sponsors may precede requested videos. As with the music endcap, home video Sponsors will appear on wall-of-eyes 180. in-line home video station 161 preferably has a custom attract mode, which may be changed periodically and be tied to seasons, holidays and special events, for example.

### XI. IN-LINE COMPUTER HARDWARE AND SOFTWARE DISPLAY

The in-line computer advertising of computer hardware and software (exemplified by in-line computer hardware and software display 165) may use, for example, a PC-compatible, interactive hardware and software preview system (preferably displayed "onshelf" as a standard computer available for sale), although another computing platform could easily be used. Thus, information is delivered on computer products for sale at the commercial sales outlet and/or through the commercial entity. As such, it may be located in-line in the computer aisle, or elsewhere, if desired. Access may be with a mouse and keyboard, for example (although any one of a multitude of common input/output devices may be employed). The in-line display computer will be connected to the multimedia server via a connection to network 150.

The user interface is defined by the user interface module. If consumers wish to purchase a previewed product, they may select the product(s), input name/address information via the keyboard, press a "print" button and receive a dot matrix printed ticket with an order number. They need only to hand the ticket to a cashier to pay for the product and have it shipped home or delivered to the store within a few days. NMC 110 need not be involved in the transaction process beyond providing content, collecting information, and ticket printing.

Alternatively, the user might enter a code into the system (e.g., the person's phone number), make the desired selections, and send the information to the commercial sales outlet's computer via the network. The user might then pick up and pay for the item when departing the commercial sales outlet, or may have the item shipped to a desired location.

In order to track consumer information, a statistics module is also provided. The statistics module will maintain a statistics file on the PC (or elsewhere on the network (e.g., on multimedia server 160)). Following are examples of the data that may be logged on a daily basis:
- Number of selections for previewing per product
- Number of tickets issued per product

Content is provided from multimedia server 160. Consumers have access to previews of multiple computer hardware and software products, representing computer products available through the commercial entity. In operation, for example, by clicking on-screen with a mouse, the user may search by manufacturer, feature set, price range, and/or other criteria, and will be presented with full-color graphics, text, audio, video, and so on, summarizing the key features and benefits of each product.

The NMC operator (or another entity) can collect camera-ready art of the computer products to be offered for sale from the manufacturers, along with key selling points, and may create and deliver informational messages on each product available for sale. A basic fee may be charged to the manufacturer, on a per message basis. Content is preferably changed periodically. For example, content may be changed at the rate of 5-10 titles per month, and delivered to stores on a semiweekly basis (or more- or less-often) if desired (or necessary). The NMC operator (or another entity) may develop attract modes highlighting various computer products, features, tips, and/or other information. Sponsorship may come from a number of sponsors, for example computer related product/service companies, or from companies unrelated to the computer industry.

### XII. DIRECT VIDEO

As noted, data sent via communications network 125 can be of several types. For example, receiver/decoder 135 may provide audiovisual training information to video cassette recorder (VCR) 140 via the direct video capabilities that communications network 125 may support (e.g., real-time analog, high-definition television (HDTV), or digital video information). Training VCR 140 allows such audiovisual information to be recorded for later playback, to allow the audiovisual information to be replayed for off-line training or during multiple training sessions.

Alternatively, the audiovisual information transferred via the direct video capabilities that communications network 125 may be displayed on television 141 in real-time by properly configuring VCR 140. Such information may include informational programs, training programs for outlet employees, and other business-related information intended for personnel at commercial sales outlet 130.

### XIII. GENERAL SYSTEM OPERATION

Digital department system 100 operates in the following manner. Promotional content and informational content from advertiser 102, recording company 104, movie studio 106, and/or other content provider 108 (among other such providers) is collected and compiled by NMC 110, and converted into digital data files 122 by digitization. Alternatively, NMC 110 may assemble the necessary promotional materials from publicly available or privately available information sources (CDs, other recordings, videos, and other sources) for distribution. Additionally, such promotional materials may not require digitization, in which case the information may be distributed using analog techniques.

Assuming that digitization is the preferable means of distributing this information, digital data files 122 are provided to NOC 120 for distribution via satellite to one or more commercial sales outlets (as exemplified by commercial sales outlet 130). However, satellite distribution is but one way of distributing digital data files 122. Other methods, such as wide area networks (WAN), internet connections (via, for example, an independent service provider (ISP)), or other electronic distribution medium could be employed in place of communications system 125 (Fig. 1A).

Again, assuming a satellite multicast system is employed, receiver/decoder 135 receives and decodes the digital information representing digital data files 122 at commercial sales outlet 130. Digital data files 122 are then forwarded from receiver/decoder 135 to multimedia server 160 for distribution. Digitized video or analog video may then also be supplied to training VCR 140 and/or to television 141, for the in-store use of employees being trained, for example. Multimedia server 160, as indicated in Appendix A, distributes the promotional information in digital data files 122 to various points in commercial sales outlet 130 (e.g., wall-of-eyes 180, in-store radio system 170, in-line computer hardware and software display 165, audio/video endcaps in other departments 195, listening posts 185, and other destinations).

Additionally, multimedia server 160 may be connected to on-line services 200 or (either directly or via entity LAN 210 to on-line internet commerce access system 220) to provide on-line access to promotional materials by customers accessing the system over the internet or by dial-up lines, for example. Information provided to in-store radio system 170 may either be digitized or analog audio, and may be provided in predetermined segments and timeslots, or may preempt current in-store programming.

In-line computer hardware and software 165 displays promotional materials stored either on storage systems within in-line computer hardware and software display 165 or on multimedia server 160, for example. The promotional materials, preferably relating to computer hardware and software, offer the customer an on-line catalog which the customer can browse and select products for purchase end. An example of its operation would be as follows.

A customer would browse the on-line catalog, select the desired computer products, enter a unique code identifying the customer (e.g., the customer's phone number), and then proceed in one of two ways. First, the customer could simply print out an order and proceed to the checkout area, provide the slip to a clerk who would then provide the computer products to the customer. Alternatively, the customer could go to the checkout and simply provide their customer code to receive the desired computer products. Another alternative would be for the customer to pay for the products at the checkout and have the commercial entity ship the computer products to the customer home address, or to another location. The system would display graphics, full-motion video, and technical information, possibly along with audio information, in informing the customer as to the various computer products for sale. In-line computer hardware and software display 165 allows integration into digital department system 100 and offers yet another avenue of promotional content delivery.

An example of DDS 100 is al Department so provided in the accompanying Appendix. The Ditigal System™ described in the Appendix includes certain elements, features and functions of a system embodying the concepts of the present invention.

The foregoing description of preferred embodiments of the invention has been presented for the purposes of illustration and description. It is not intended to be exhaustive or to limit the invention to the precise form described, and many modifications and variations are possible in light of the teaching above. The embodiments were chosen and described in order to best explain the principles of the invention and its practical applications to thereby enable others skilled in the art to best utilize the invention in various embodiments and with various modifications as are suited to the particular use contemplated. It is intended that the scope of the invention be defined by the claims appended hereto. It should be noted that all trademarks and copyrights used or recited herein are the property of their respective owners.

### LISTENING POST DESIGN

### I. Product description

This is a design specification for the design and implementation of the Listening Post hardware and software. Listening Post hardware design includes one or more components, but likely includes three components which support the overall Digital Department installation. These are: CD audio delivery station with ability to read the Universal Product Code (UPC) and play one or more audio clips and display text based data for the album. Second function preferably supports the UPC scanner, button and text display for the Interactive End Cap delivery PC. Third function as a wireless modem routing controller which has the capability of driving a local LAN within the sales island.

### Customer "view" of system

The user interface may consist of at least five ways for the consumer to interact with the system, although a greater number, or fewer ways of interacting may be provided:

### Barcode scanner

A barcode scanner may be provided to allow the consumer to scan the barcode any CD in the department. Alternately, a keypad, mouse, touchscreen or other input device may be employed. When a barcode is scanned, the UPC is transmitted to the multimedia server to be dealt with by the audio playback communications module. If the configuration employs audio files streamed from the server, the listening post decodes the compressed audio files which are streamed from the multimedia server and display the text on the liquid crystal display (LCD).

### FWD button

When the FWD button is pressed, an interrupt is sent to the multimedia server notifying the audio communications module to take appropriate action.

### REV button

When the REV button is pressed, an interrupt is sent to the multimedia server notifying the audio communications module to take appropriate action.

### UP button

Pressing the UP button increases the audio volume within a preset range.

### DOWN button

Pressing the DOWN button decreases the audio volume within a preset range.

Optionally, other user input devices (mouse, trackball, touch-sensitive screen, or other input device) may be employed to allow the user to make selections or otherwise control functions of the system. While output is expected to be performed using an LCD display module (as described below), a flat-panel display or other alphanumeric/graphical output device could be employed to provide the functionality described below, and to also provide expanded display (data output and display) functionality, should that be desired.

### Display module

The display module decodes the compressed audio files which are streamed from the multimedia server. The display module also retrieves any text data sent along with the compressed audio stream and displays it on the LCD.

### Information flow within system

Audio and configuration data flows from the network management center (NOC) satellite link, wide area network (WAN), Internet connection, or other data source to the individual commercial outlets. Preferably, data flow occurs as a single file (a ZIP file) and that this file contains all new required data and scripts that run on the multimedia server that take care of copying, deleting and packaging any return files containing statistical (or other desired) data. Alternatively, multiple files may be sent and received, with or without operator intervention.

### Listening Post, Audio Playback Station Description

In one configuration, the station detects the presence of a CD containing a UPC code. It continuously scans for the UPC code presented to the reader. When a valid code comes from the reader, the application program retrieves associated audio play files for the CD. Also, general information is retrieved to display on the LCD display while playing. Three audio clips are stored for each UPC code. The three clips play automatically in sequence unless the user presses the track forward/reverse buttons. Alternatively, the selections may be randomized, or consistently played in another order. The LCD may be updated as the track button is pressed. The station can provide the capability of recording each user UPC and track play information with a time stamp in a data file for retrieval by the NOC system operator. Communication to the file server is preferably via the 10BaseT Ethernet connection and TCP/IP protocol, although any suitable network protocol may be employed.

### A.Listening Post, I/O Station Description

This station is similar to the LP in the above section. The difference is the local audio playback hardware is not necessarily utilized. This station forwards user input request data to the associated PC that is mounted in the end cap kiosk. The LCD may be updated as the track button is pressed. The station records each user UPC and track play information with a time stamp in a data file for retrieval by the multimedia server or NOC system operator. Communication to the end cap PC may be via a serial UART with direct wired connection and PPP (point-to-point-protocol) and TCP/IP, although any suitable method of communicating between the end cap PC and LP I/O station.

### I. Listening Post General Design

The Listening Post design describes a cost limited unit that performs up to current requirements using the minimum of IC's, power supply and packaging. The design provides as much expansion and future capability that is reasonably expected to keep it useful for several years in the field. The board may, of course, include capabilities allowing it a great deal more expansion capabilities, if desired.

Listening Post hardware preferably consists of a custom designed PCB with a form factor of 6"x6". Optionally, additional boards may be layered (pin connected) for future options. The base boardpreferably contains all logic required to perform up to the initial requirements.

Preferably, the board has a high-preformance CPU, such as the National Semiconductor embedded 486 CPU. Also, support for the Motion Picture Experts Group's (MPEG's) standard formats and Ethernet compatibility. For example, on board support for receiving and playing MPEG audio data files could provided by a Crystal Semiconductor MPEG decoder, the CS4922. Ethernet support could be provided by a Crystal CS8900 Ethernet controller.

Preferably, an embedded operating system component is used which has task control and full TCP/IP network protocol stack. Additionally, the OS selected should preferably contain a UNIX-compliant NFS (Network File System), which may be used to copy MPEG audio files to the play station from the multimedia server.

### A.Hardware Design

Central to the Listening post hardware is a National Semiconductor NS486SXF embedded processor core. This device contains most peripheral sections to reduce the total parts count of the board. Additionally, an integrated I/O controller may be added to support two more serial, one more parallel, an IDE hard drive, a floppy disk controller, and/or other features. The system features high integration, which the Ethernet controller and MPEG audio decoder enhance.

### 1. Hardware Block Diagram

Figure 1 shows the printed circuit board's major details, its components positioning, and the connectors supplied to permit communication with the outside world.

### 1. Embedded processor

The NS486SXF embedded PC controller was evaluated and possesses the functionality necessary to support the LP features required in the Digital Department system. Of course, other CPUs could be used as the processor for the LP. The NS486SXF operates at 25MHz and contains many features which reduce glue logic. The NS486 processor contains no math-coprocessor, memory manager or real mode support. The processor contains all of the I/O devices and methods required for the basic Listening Post design. Network and audio play may, of course, be handled by other integrated circuits.

### a)On board Chip Select utilization

Eight internal chip select pins are available with the NS486 which may be utilized to reduce the glue logic required by some embedded designs. The eight selects are:

**Table 1 Chip Select Pin Allocation**

| ***Chip Select Pin*** | ***Application*** |
|---|---|
| System FLASH ROM | 256/512 Kbytes x 8 bit |
| System DRAM | SIMM module, 2/4/8 Mbytes x 32 bit |
| Ethernet I/O | CS8900 Ethernet controller |
| MPEG Audio I/O | CS4922 MPEG audio decoder/driver |
| PC/104 Extension I/O | PCMCIA/PC 104 extension select |
| Onboard Extension I/O | On board I/O extension circuit |
| LCD display read/write I/O | LCD display |
| I/O Expansion IC | Expansion I/F, 2 Serial ports, 1 Parallel port, IDE, FDC |

### On board IIC (I²C) utilization

The MPEG audio decoder has I²C controller requirements. This is the only device on this serial bus. The MPEG decoder is initialized and it's microcode loaded via a serial input. I²C is directly provided by the NS486 CPU as an internal peripheral function.

### PCMCIA and PC 104 expansion connectors.

An optional PCMCIA and/or PC 104 connect may be provided to permit connection to various processing system elements. The PCMCIA slot may use, for instance, a Type 1 or 2 card. This card can be a modem, non-volatile memory, RAM, hard drive, cell/wireless communication or other device. A wireless RF modem may be plugged into this slot to allow wireless operation. The PC 104 can take future boards that are designed and developed in-house or any of the off the shelf devices now available.

### 1. Audio Player

For digital audio file decoder and playback a multimedia integrated circuit such as the the Crystal Semiconductor CS4922 may be used. This IC has the advantage of being a complete design solution in one package. The device is self-contained and requires only a simple software driver. The multimedia IC preferably has the following features:
1. Onboard DSP with RAM based microcode storage.
2. MPEG-1 & 2, Layer 1 & 2 decode.
3. Packetized Audio stream synchronization.
4. Onboard decode RAM.
5. Internal volume/mute stereo controls.
6. Simple connection to the NS486SXF processor.

Using the Crystal IC, audio MPEG data may be fed to the decoder via two serial pins that are programmed as software shift registers. The decoder IC has internal buffer memory and loads data packets fast enough that the device can play for several seconds with out further service by the CPU.

Advanced integrated circuits are available now which incorporate both MPEG video and audio playback function. These chips are roughly $24 in volume and some require an additional DRAM for video decode. The DVD and CD-video market are driving chip development and are suitable for this application. The chips load MPEG data from parallel bus rather than serial bit stream as certain broadcast chips.

### 1. Ethernet Controller

An Ethernet communications IC such as the Crystal Semiconductor CS8900 is used to provide networking capabilities. The Crystal Ethernet IC is a complete design solution in one package. However, other solutions (i.e., ICs) could be employed with equal success in the present system. The device is self contained and requires only a simple software driver. The Ethernet IC preferably has the following features:
1. Onboard Memory Manger for packet storage.
2. Onboard EEP controller for physical Ethernet address storage.
3. Boot strap detect for future use as BOOTP/TFTP startup.
4. Onboard packet I/O RAM.
5. Simple connection to RJ45 transformer.
6. LED net I/O indicators.
7. Direct connection to ISA bus.
8. Simple connection to the NS486SXF processor.

### 1. Bar code reader

A bar code reader may be used in the present system as an input device. An example of such a bar code reader is a Symbol, Inc. bar code scanner. This device may be connected to an internal UART within the NS486 CPU. Communications to and from the reader are provided. An initialization module can be used to reload the reader configuration parameters on boot up to ensure the reader is ready and in the proper configuration.

### 1. LCD display

The persent system can output information to a variety of display devices for communcating information to the user (i.e., customer). For example, the present system may drive a 2 line, 20 character Alpha text display to communicate textual information to the user. Such displays often require TTL level signals, which may be supplied by the NS486 pins directly. The same pins on the NS486 CPU that the more advanced LCD display would use may be used in this configuration. Other display options include a full graphics display designed for direct connection to the NS486.

The display may be connected to the CPU in several ways, but is preferably connected via 4 bits of data and one strobe bit. These bits can be programmed as general purpose I/O TTL lines or as specialized LCD data out/refresh pins for a graphic display of the NS486SXF.

For graphics display the NS486SXF can provide 16 gray scale pixels in any of 320x200, 320x240 or 480x320 resolutions. One option would be to use a graphics display for a PDA-like display capabilities. If a simple text display is incorporated, the same 7 I/O lines used above can be setup as general purpose I/O pins to communicate to the display, or communication may be accomplished serially, or by another method. Alternatively, a flat panel display or standard graphics monitor could be employed.

### 1. User buttons

The user buttons input bits for reading a number of selections (e.g., 8 selections). More selections and/or other types of information input could be provided, if desired. If the LCD is utilized in the graphic mode, these lines may have to be supplied from those on the printer port or an optionally added expansion I/O IC, for example. Using 4 (or another number of) bits from the printer port as button input will not circumvent a printer being connect and driven, in most systems.

### 1. Headphones

Analog audio signals for right and left are amplified and gain-controlled by the NS486 via the I²C two-wire control port and the CS4922 chip. Other methods of controlling the audio signals in the present system will be apparent. The design may utilize, for example, a fixed gain buffer amplifier to drive the head phones or small speakers.

### A.Software design

This application may use, for example, Ethernet communications and a TCP/IP protocol stack to move audio data from the remote server to the Listening Post player. With the TCP/IP stack, a real-time operating system may be required to manage the stack as a reliable, deterministic communication protocol. Such a system might be, for example, Wind River Systems' "VxWorks" and TCP/IP package. This package reduces the work of communicating over a network while maintaining compatibility with Internet protocols.

On startup, the Listening Post operating system (VxWorks) may be resident in a non-volatile memory subsystem, such as FLASH ROM. System software initializes internal and external peripherals and then attempts to communicate to the multimedia server. Its first task is preferably to identify this Listening Post and assign its IP address.

Next, the Listening Post can download one (or more) of the application programs (of which there may be a number) that the system design provides.

### 1. Software Pictorial Overview

The software is organized around the physical devices that are connected to the CPU. For example, a serial driver may be committed to the bar code (UPC) scanner. Also, a parallel driver may be committed to the buttons, LCD drivers, and printer. A pin driver module may be used to feed MPEG data to the decoder. An I²C driver may be used to communicate with the decoder IC.

Task management and general CPU services allocation may be maintained by the selected operating system software, or may be maintained manually by an NOC or multimedia system operator. A network protocol stack allows the software to communicate in full TCP/IP compatibility.

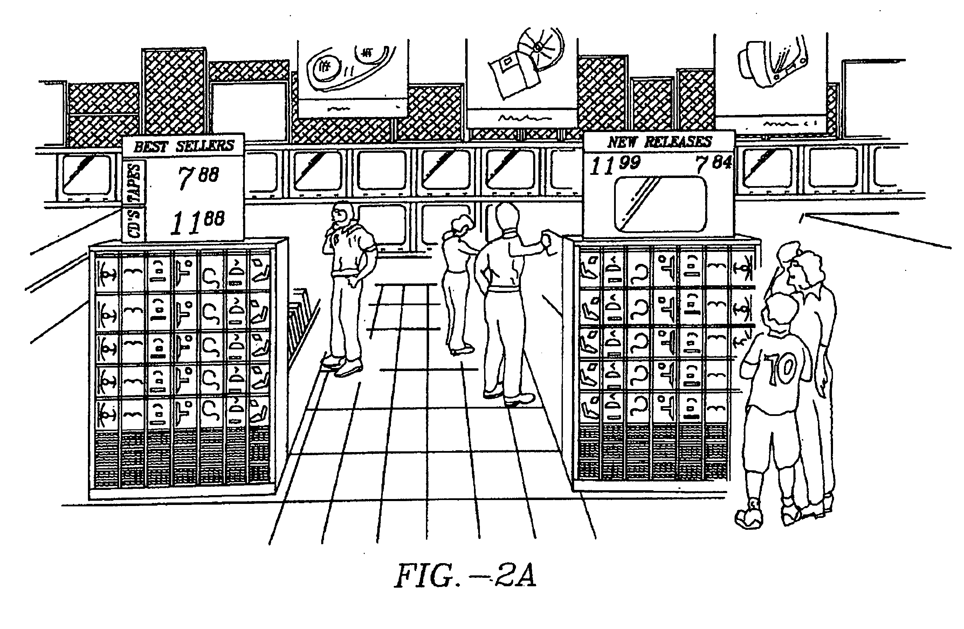

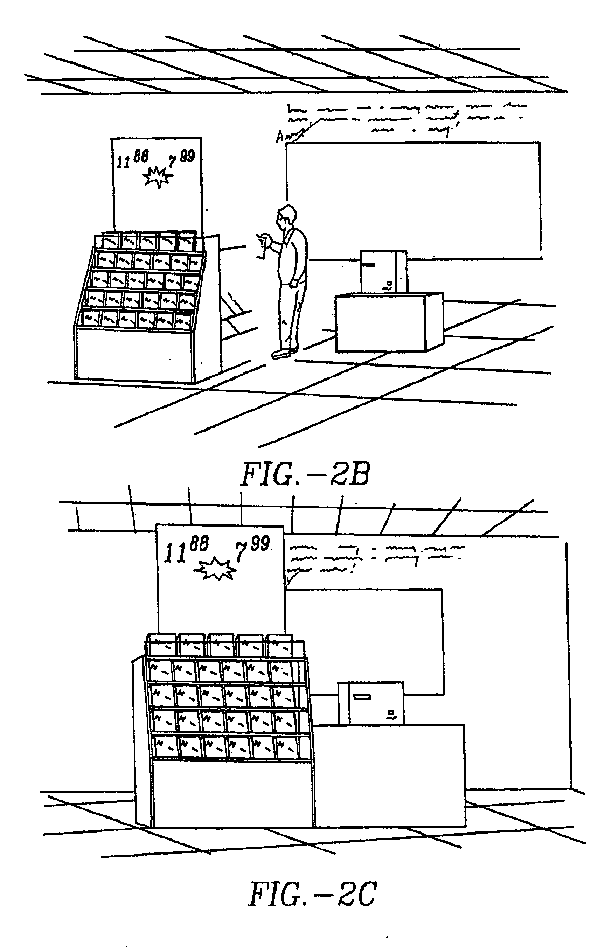

Figure 2 depicts the basic software organization for a Listening Post. Some modules are not loaded if the device is utilized as an I/O or Routing application.

### 1.Digital Audio player

The MPEG audio IC may be fed data from several sources, but preferably data is fed via direct connection to the NS486 bus. The MPEG audio IC may play data from local DRAM storage as it arrives from the network under program control, or may take input data from another location (e.g., a hard disk or zip drive connected to the LP system). The MPEG audio IC may contain an on-board volume control, controlled by commands received via an I²C serial bus connection. Time stamping (PTS) need not be performed because clock synchronization problems will not likely exist (since there is no accompanying video presentation in this mode). The corresponding audio clip is preferably about 400Kbytes of data. The unit may begin playing immediately upon receipt of the first packet. The remaining data may stream in as it is buffered and played. Alternatively, the audio clip may nto be played until the entire audio file is downloaded (e.g., in the case where streaming is not used). The audio clips may continue to be downloaded into a buffer as the initial audio clip plays. If the user plays the same CD repetitively, audio may be provided from the local buffer. Local buffer data is preferably only deleted (i.e., the buffer space re-used) when space is required for new incoming data for another CD title.

Play back volume level is pre-set for each new CD UPC that is scanned in after a configurable inactivity time delay has elapsed. This is so that the last user's volume is not inadvertently set for the next user. The user may increase or decrease the volume locally via an up/down push button. The local processor preferably makes the required adjustment to the MPEG player circuit. The application also offers the option of muting output if the network stream data fails to deliver on time.

### 1. Network protocol

The system may use any networking protocol as the backbone of the communications to the LP system. Preferably, a TCP/IP protocol stack is used as the backbone of the network for audio and data file communications to the Listening Post unit. For example, Wind River Systems "VxWorks" may be used. VxWorks contains a set of tools and run time support for networked file systems (NFS). This allows the Listening Post to open files directly on the multimedia server without actually having to have a program to transfer on the multimedia server. The use of a TCP/IP stack mandates that the real time operating system support TCP's inherent multiple process reliable communication mechanisms.

### 1. Device drivers

The multimedia IC (e.g., a CS4922) and the Ethernet IC (e.g., a CS8900) likely require the support of one or more software drivers. Device drivers may be designed, coded and integrated to support the exemplary architecture. Additionally, such a system will likely require character drivers for the LCD and push buttons. A standard serial driver, supplied with the aforementioned operating system can read and write to the bar code scanner.

The CS8900 Ethernet IC has a supplied driver with VxWorks and may not require any thing more than simply compiling it with our ports and hardware configuration parameters.

The CS4922 multimedia IC may feature functionality such as sample/demo programs that are utilized as startup code for the drivers.

### 1. Application program

the application program manages all user I/O data and gathers statistics for playback activity, among providing other functions.

### a)Application module operation

A Listening Post can startup a processor initialization module to configure the NS486 peripheral controller registers, the internal timers, interrupt controller, DMA circuits, and other subsystems. Next, the startup code performs initialization of the networking software modules (e.g., starting the VxWorks operating system and initializing the TCP/IP protocol stack), and finally jump to the ROOT module.

In one embodiment, the ROOT module communicates with the server and utilizes the configuration file to download the application program into DRAM. The ROOT then forks the application program and suspends itself.

The Listening Post application program initializes the bar code reader device and then forks a monitor/scan process for it. Next, it forks a process to scan and de-bounce the user button array. Finally, the application bootstraps the MPEG decoder chip (e.g., a CS4922) by loading it's microcode into RAM via the I²C (or other) port.

The application program initializes the LCD display by briefly flashing a system identity message which contains a version and release number as well as device readiness to play files.

### Application module organization

The application program may be divided into three layers which are: hardware drivers, application program interfaces, and the application program. This is pictured in the following figure. This is configuration is exemplary and is but one possible configuration for the LP's software system.

### UPC_INPUT Module

UPC_INPUT initializes and manages the bar code reader device via a serial port driver. This module is a separate process started by the root module. It reads in an entire UPC data packet, formats it as a message and sends it to the application program for processing. This module can be configured to periodically activate the laser scanner for CD product detection. The serial port driver is part of VxWorks and is interrupt driven.

### User_Button_Input Module

The User_Button scanner is a separate process started by root that scans and debounce contact closures on the parallel port. It executes at a 40Hz rate and formats contact closures into predefined messages that are sent to the application program for processing.

### LCD_Display_Driver Module

The LCD_Display driver receives string data for presentation on the display. It contains a simple cursor X,Y position command, clear, fill to character and present a text string capability. We may additionally add the capability for it to scroll text on a timed basis with as many lines as sent to it. Other special effects methods can be added which allow the NOC operator to control the display for each CD with horizontal, vertical, flashing effects for any selected string. Other effects and functionality may also be provided, such as the display of graphics (in the case where a flat panel display is used, for example). This control method could be in the form of ESC code sequences in a manner such as ANSI terminal control standards.

### MPEG_File_Player Module

MPEG File player handles the task of moving MPEG encoded files to the device for decoding and playing, and may also control buffering blocks of data and moving them to the IC. A simulated serial port driver may be used to handle the chore of shifting MPEG data to the decoder. Note that an hardware shift register option may be added by the hardware designer to reduce the CPU's burden of loading MPEG audio data into the decoder IC.

### MPEG_Audio_Play_Control Module

Audio file playback control to the decoder IC is handled via this module and the I²C driver. Left and right volume, mute and other features provided by the decoder may be channeled through this module.

### Application Program Operation

The application program receives and sends messages between the various drives within it's control. Upon receiving a UPC code the application program access the server's file structure via network file system (NFS) to read the CD's information file, statistics file and the MPEG data file. This is depicted in the following figure.

The information file may be used to load the LCD display with the opening text for the CD and then as track 1 begins to play show the song title and track number. As the song plays, the user may adjust playback volume by two buttons and advance or rewind to the next available track. All track plays and movement are preferably recorded in the statistics file for this Listening Post on the server's directory structure. Each LP in an installation may have it's own directory for statistics and configuration information.

The application program relies on the operating system and it's TCP/IP (or other) protocol stack to facilitate data motion within the system. The application program begins reading and buffering MPEG audio data and feeding it to the MPEG file player level as blocks are assembled in the system's memory. The application preferably continues reading audio clip files for a CD from the server as directed in the information file section. As the user plays and presses the track buttons, the application plays audio information from the system's memory if the clip is present. The system is capable of buffering CD data, until a different UPC is scanned. Additional plays and scans of the same CD thus need not read files from the server. Rather, the audio may be played from local system memory.

The application program detects the end of a CD data set, user interactively loss so that after a period of time (configurable) clear the LCD display to a predetermined message, set the volume to a preset level. The application program also supports updating the server file structure with the latest statistics collected. If enough system memory is present, the application program provides the capability of buffering several CD's of data and maintaining a simple data structure to be searched first upon UPC code scans.

The local file caching method can reduce network traffic and multimedia server traffic for those customers who have a handful of CD's that they keep shuffling through while deciding which ones to buy. A method of verifying or deleting these files on a timed basis may be provided to make their persistence determinable.

### Application module hierarchy

Software control of the Listening Post begins with the ROOT which is stored in a non-volatile memory unit, such as FLASH ROM. ROOT is a minimal program which initializes the network stack and requests an IP address then loads the appropriate application program. Each application program (3 types planned, but more or less could be supported) preferably contains any required I/O drivers and functional performance code within it's code download.

### Application module data flow

Data files residing on the multimedia server's disk space and are moved through the network via a networking protocol, such as NFS or TCP I/O streams. This is depicted in the following figure.

The application program preferably attempts to access files on the server under it's own directory for configuration data and under the UPC code directory tree for MPEG, information and statistic data.

### A.Listening Post, I/O Station

The Listening Post as an I/O extension for the end-cap station basically is the same application program as the standard Listening Post except that some or all user I/O is communicated to the end cap PC via the network (e.g., the TCP/IP connection method), using a standard network communications technique, such as that known as streaming. The Listening Post software opens a stream to an associated End-Cap PC and maintain readiness to relay commands to the player in the PC (assuming TCP/IP is used -- other protocols can provide similar functionality, albeit in different ways). Alternatively, other modes of communication between the LP and End Cap unit.

For each scanned UPC code, an interrogation phase to the End-Cap PC may be performed to see if the selected CD has an associated video to play with the clip. If so, the End-Cap replies that it is handling the clip audio and video. If not, the End-Cap sends back a message indicating that the Listening Post is to play the clip as it normal would for this CD. Play statistics may be accomplished by the Listening Post for some or all of the plays. Alternatively, this data may be collected by the End Cap PC or by the multimedia server. Also, the NOC may be selected to collect such data, using the NMC to do so.

### 1. Network Audio/Video Traffic to End Cap Audio/Video Player

After the Listening Post I/O extender application has loaded, the extender application may connect to the End Cap PC (which may be defined in the configuration file) via a networking connection, as by a TCP/IP socket (or the like). If that method is used, this TCP/IP path is via the ethernet direct connection. This allows the Listening Post I/O station to connect using standard TCP methods as well as remotely locating and mountimg the file system on the multimedia server. The End Cap PC may be defined in the configuration file, or may be selected in another manner (e.g., by searching the network and accessing those End Caps responding). This TCP/IP path is preferably via the Ethernet connection, but other networking methods may be employed. Using the Ethernet/TCP/IP combination allows the Listening Post I/O station to connect in the normal TCP methods as well as remotely locating and mounting the file system on the multimedia server. (Provided the operating system on the End Cap PC is setup for routing through.) An I/O stream can be opened and maintained with the End Cap software using this method. The stream may support basic command functions such as identifying the UPC scanned and the state of the user buttons, or may include support for more advanced functionality. The stream may have basic command functions such as what UPC was scanned and what the state of the user buttons is, or may have extended functions, such as indicating product and price for non-A/V items (i.e., items that are not audio or video recordings). The Listening Post software preferably supports the management of the LCD display (or whatever display is used) as it does in the standard software program. Statistic files are preferably maintained by the LP, relieving the End Cap PC from duplicating this programming function. Alternatively, the End Cap PC or the multimedia server can maintain this information.

**Table 3 Exemplary LP to End Cap Stream Messages**

| Message ID | Function | Type | Reply |
|---|---|---|---|
| UPC PACKET | scanned UPC code & header | 20 char | yes |
| VOL UP | user pressed volume up button | int | no |
| VOL DOWN | user pressed volume down button | int | no |
| PLAY NOW | play current track/cut | int | no |
| FWD TRACK | skip forward a track/cut | int | yes |
| REV TRACK | skip back a track/cut | int | yes |
| STOP CLEAR | stop and clear data now | int | yes |

The following presupposes the use of the Ethernet/TCP/IP combination. Several stream messages may be passed between the LP and the End Cap PC. The UPC_PACKET message is sent when a CD code is scanned in to the application program. The End Cap can retrieve video/audio files and prepare to play. The End-Cap replies with an acknowledge of the UPC and whether or not the UPC has video. In any case, the Listening Post retrieves LCD data and issues a PLAY_NOW command to start things rolling in a coordinated fashion. The LP plays track-to-track unless a forward or reverse button is pressed, in which case the LP sends a message indicating this (that the FWD_TRACK or REV_TRACK button was pressed) to the End Cap. If the user changes volume, the LP issues either VOL_UP or VOL_DOWN messages, as needed. The End Cap can be configured to set it's volume to a preset value when a STOP_CLEAR message is issued (also doing what ever is required to reset the video decoder channel). The PLAY_NOW message normally issues after FWD_TRACK or REV_TRACK messages, to keep the LCD coordinated with the sound and video display streams. The LP opens and records statistics on CD playback in either case of playback (although the End Cap PC or multimedia computer could perform this function).

### A. Listening Post Internal Data Structures

Internal data structures perform many functions, such as maintaining I/O activity from users during store operation. Additionally, an internal database (loaded from the multimedia server) may contain volume and LCD background data to be displayed when no CD is playing.

When a CD is scanned, the corresponding UPC related files are retrieved from the file server and updated for the local play session. A file locking method may be incorporated so that multiple UPC's can be utilized simultaneously with out corrupting the data file on the server.

The data file on the server may be recovered by the NOC or multimedia server system operator.

**Table 4 Exemplary Listening Post Data Record**

| Data Element | Function | Type | Size | Range/Example |
|---|---|---|---|---|
| UPC index | CD prod. Code | char | 12 | "000100400050" |
| CD Title | title of CD | char | 32 | "Pink Floyd" |
| CD Publisher | publisher of CD | char | 32 | "Zeff Records" |
| CD Price, opt. | Price of CD | char | 5 | "12.34" |
| LP identifier | which player | char | 12 | 123.456.789.00" |
| Number Tracks | how many tracks | char | 2 | "00" to "255" |
| Track 1 info. | Title of song | char | 32 | A...Z, 0...9 |
| Track 2 info. | Title of song | char | 32 | A...Z, 0...9 |
| Track 3 info. | Title of song | char | 32 | A...Z, 0...9 |
| Track N info. | Title of song | char | 32 | A...Z, 0...9 |

For each CD played, statistics may be maintained, such as counts of FWD and REV track accesses, and default play through of songs. A total count of times a CD is scanned-in may also be included.

A set of records is maintained which allows for several CD's of data to be cached by the Listening Post Player application. This cache facilitates playing of several CD's with out further network traffic to the server. On a timed basis the statistic data may be sent to the server and the audio data files deleted. The file may contain ASCII (or other) data, each line being entered as an I/O event occurring on the Listening Post unit. Of course, other formats (e.g., a standard or proprietary binary format) may be used instead of the ASCII data. Any mix of events may occur in the file and it is expected that the file is organized by chronological time stamp order of event occurrence.

**Table 5 Exemplary User I/O Activity Counts**

| Data Element | Function | Type | Size | Time Stamp |
|---|---|---|---|---|
| CD-UPC-SCANNED | CD scanned cnt. | long | 32 bit | MMDDYY,HH:MMS |
| Track1 FWD | song 1 fwd. Plays | long | 32 bit | MMDDYY,HH:MMS |
| Track1 REV | song 1 rev. play | long | 32 bit | MMDDYY,HH:MMS |
| Track1 DEF | song 1 default play | long | 32 bit | MMDDYY,HH:MMS |
| TrackN FWD | song N fwd. Plays | long | 32 bit | MMDDYY,HH:MMS |
| TrackN REV | song N rev. Plays | long | 32 bit | MMDDYY,HH:MMS |
| TrackN DEF | song N default Plays | long | 32 bit | MMDDYY,HH:MMS |

A file of scanned UPC codes is maintained for all product UPC's which are not on file as a playable media. Each line in the file contains the offending UPC bar code, which Listening Post it originated from and the time of day and date. Optionally, and especially of interest for Retail applications, would be to interface with their NCR UPC product code look-up (point of sale registers) for these UPC's which would then display an item's name and price to the customer.

**Table 6 Example of a Scanned UPC that is unassigned**

| UPC Bar Code | Listening Post # | Time Stamp |
|---|---|---|
| 1234568901 | 192.200.100.010 | 04/28/97-20:34 |

### A.Listening Post files on Multimedia Server

MPEG audio files are stored on the file server under their UPC code name. Alternatively, another identification key could be used to identify each product, and so each related audio file. However, the use of a UPC code is the most practical, as all (or most) of the products concerned may be expected to have such markings, simplifying identification. The name may be up to 12 alpha-numbers and an extension which indicates what the file is. This method could, of course, be modified to use other identifying information, in other formats.

A simple method of storing song clip files and data may be used, whether the system employs direct access to the multimedia computer's file system by the Listening Post or if the song clips are accessed via a supplied FTP (file transfer protocol) method of transferring them to the target LP. Additionally, while it is expected that no database is required on the multimedia server for UPC-to-appropriate-file naming conventions, a database may indeed be desirable in certain situations.

### 1. File Naming Convention

File names may be composed, for example, of the unique code number assigned to each product, such as Universal Price Code ("bar code," for short). These numbers are assumed to be totally unique for each CD and can therefore be utilized for the major file name for data pertaining to the product. The file names should, whichever identifying paradigm is used, be uniquely identifiable.

The file name, if UPC is used as an identifier, is UPC major and an extension minor that indicates the file type and which clip it is.

**Table 7 File Naming Convention**

| UPC Code Digits | DOT | File Type | Track Number |
|---|---|---|---|
| 12 Characters, 0...9 | "." | 1 character, M, I or S | 1 Characters, 0...9 |
| | | | |
| | | | |

### MPEG audio file examples:

"012345678901.M01"
"012345678901.M02"
"412345678901.M05"
---- UPC NAME --- -EXT-
and corresponding information file examples:
"012345678901.I01"
"012345678901.I02"
"412345678901.I05"
---- UPC NAME --- -EXT-
and corresponding play statistics file examples:
"012345678901.S01"
"012345678901.S02"
"412345678901.S05"
---- UPC NAME --- -EXT-

### 1.File Server Directory Structure

The multimedia server's directory structure is organized by the first digit of the UPC code from the CD products. This method keeps the total file count lower in any given directory on the server hard drive.

### 1. MPEG File Type, "Mxx"

These files contain information such as audio information in a standard format such as MPEG 1, Layer 2 compressed audio. The actual length of the file determines the duration of playback audio. If audio information in a standard format such as MPEG 1, Layer 2 compressed audio is used, the files are binary MPEG bit stream data which is transferred to the Listening Post and shifted into the CS4922 IC for decode and play. This file format consists of stream data as prepared by an MPEG2 Layer 2 audio encoder workstation compression engine.

### 1.Information File Type, "Ixx"

This file type contains LCD (or other display) information to be presented when a CD is being played. For example, the file may be comprised of a random number of lines that are to be placed on the LCD display as a CD cut is playing.

**Table 8 Information File Structure**

| Track # | LCD Line # | String Data | EO L |
|---|---|---|---|
| 00 | 01 | "Mike and the Tin Pan Quartet" | CR |
| 00 | 02 | "Speak Easy Music & Silent Groove" | CR |
| 01 | 01 | "Mike and the Dilberts" | CR |
| 01 | 02 | "On Sale! $9.99" | CR |
| 02 | 01 | "Mike Falls Asleep" | CR |
| 02 | 02 | "Speak Easy Music Releases New Hit" | CR |
| 03 | 01 | "Mike Takes a Break" | CR |
| 03 | 02 | "Silent Groove Records" | CR |

### Table 8 Information File Structure

### 2.Statistics File Type: "Sxx"

This file contains statistical data for each CD/UPC that is played.

**Table 9 Statistics File Structure**

| Cut Number | Total Plays | Total Skips | Play Thru's |
|---|---|---|---|
| 01 | 123456 | 123456 | 123456 |
| 02 | 123455 | 123456 | 123456 |
| 03 | 123456 | 123456 | 123456 |
| | | | |
| | | | |
| | | | |

This file is read by the Listening Post as a UPC code is presented. It is updated after a CD is finished playing (or apparently so on the Listening Post). A mechanism in the listening Post may provide the capability of queueing changes for this file to occur as a background task so that if the file is checked out' by another LP the current request to update is preferably pended in the queuing system of the operating system on the LP.

### I. Multimedia Server Support Requirements

### A.NFS, Network File System Server

Audio files may simply be transferred to the LP via the network, for playback. Preferably, a UNIX-like network file system protocol is utilized to transfer audio data files between the server and Listening Post device. In such a system, VxWorks may be used to allow mounting of the multimedia server's hard disk partition on it's RAM drive. This allows the Listening Post to simply begin playing files with out network programming to actually move the files to the player.

While any one of a number of NFS server suites may be used on the multimedia server, NetManage NFS package and Omni-NFS are attractive alternatives. Several choices are available. Alternatively, there are several other packages located on the Internet.

### Listening Post Diagnostic Sensory Module

This module operates as a background program on the server machine. It periodically pings each Listening Post to see if it is operating normally. Preferably, the Listening Post replies with any error codes if they are present. Alternatively, other information may be returned. Preferably, the server logs each returned error code in a file that the multimedia server or NOC operator can later retrieve. Alternatively, updates may be provided in real-time, for constant monitoring of the status of the LP's in the system.

### I. System Configuration & Startup

This section deals with configuring a system for the initial boot-up. There may be install diskettes that setup the multimedia server directory and files structure the first time so that it is ready. Each Listening Post may store the operating system in non-volatile memory (although it could be downloaded upon boot-up), such as FLASH ROM, at the time of manufacture, the 6 byte Ethernet address stored in EEP and the ROOT loader ready to go. The local file caching method tends to reduce network traffic and multimedia server traffic for those customers who have a handful of CD's that they keep shuffling through to decide which ones to buy. A method of verifying or deleting these files on a timed basis may be provided to make their persistence determinable.

### Application module hierarchy

Software control of the Listening Post begins with the ROOT which is stored in FLASH ROM. ROOT is a minimal program which initializes the network stack and requests an IP address then loads the appropriate application program. Each application program (3 types planned, but a greater or smaller number of application programs could be supported) contains any required I/O drivers and functional performance code within it's code download. Alternatively, files associated with the application could be downloaded separately, or the entire package (application and associated files) could be downloaded and unpackaged using a utility such as the pkzip program or UNIX tar.

### Application module data flow

Data files preferably reside on the server's disk space and so are moved through the network via NFS or TCP I/O streams. Alternatively, this information may reside in storage at the listening post or on the End Cap's PC. If the information is stored on the multimedia server, the application program attempts to access files on the server under it's own directory for configuration data and under the UPC code directory tree for MPEG, information and statistic data.

### Obtaining Ethernet Board Address

6 Byte Layer 1, Physical Ethernet Address

### Configuration Files on Multimedia Server

Hosts
DHCP
NFS Allow

### Files copied to Listening Post on boot

### Application Programs

Remote Hosts
ETC Directory Image

### Configuration Files

Hosts
DHCP

### Application Program

Resides in support directory on the multimedia server. Can be easily changed and new version downloaded remotely from NMC operator's control (or by an operator at another location on the network).

### Booting System Daily

Multimedia server's operating system boots as normal, starts networking communication software, including distributed file system software, such as the daemon for NFS.

Listening Posts boot, have operating system in non-volatile memory, such as FLASH ROM. One or more applications are then loaded.

### Maintenance Modes

Reprogramming non-volatile memory (e.g., FLASH ROM) REMOTELY.

Reprogramming non-volatile memory (e.g., FLASH ROM) LOCALLY.

### Setting up IP addresses

Remote and Local action to:
1) Install system and start first time; and
2) Reinstall system remotely.

### Listening Post PCB Manufacturing Test Points

Test verification points are placed in the onboard software so that in production each subsystem of the product is tested and reported to a testing jig PC on the production line. These steps include production initialization of all devices, and loading the FLASH ROM and Ethernet Address. A complete sub-system checkout procedure is performed.

It should be noted that the multimedia server uses an appropriate operating system. Any modern O/S could be used, but an O/S such as Windows™ NT™ or one of the many UNIX-derived operating systems is preferable. The use of a multi-tasking operating system of these kinds is preferable, as it allows the system to respond in a timely manner to a variety of stimuli, such as user input, download requests, uploading operations, and the like.

### DDS Software Documentation

### Statement of Purpose

### I. Introduction

A. Logical Segmentation

### II. System Overview

A. Module Relation to Logical Segments
B. Module Overview
C. Data and Process Relationship Overview

### III. Module Detail

### I. Introduction

The Digital Department System (DDS) is a set of software modules which implement a set of functionalities intended to provide centralized management, remote distribution, and interactive consumer playback of digitally encoded product previews in a retail market. Retail previews are provided to the consumer in a retail environment in the form of non-interactive advertising and kiosk-based interactive previews initiated by the consumer by UPC scan codes on product packaging. The previews are presented via a network of computers which provide the ability to store and present digital content both non-interactively and interactively on a per product basis. Content intended for playback in the retail environment is input into a centralized database. Potential retail environments (or stores) are also input and are related to content on a grouped basis. Distributions are initiated by group and date range of validity. Distribution 'packs' of new content are generated which are then sent over a satellite based network to the designated stores. Each store, when receiving a distribution pack, manages the process of distributing the pack within the store. The store then acknowledges the distribution through a back-channel network which is then used to update central database. Additionally, statistics and logs which reflect consumer use patterns and operating conditions are gathered and returned to a centralized location on specific intervals. Critical error conditions which occur during operation of the store system are related through the standard SNMP trapping mechanism which can be monitored for each installation.

### A. Logical Segmentation

The system is mainly comprised of a centralized database, nine individual software modules, a one-way satellite network, a two-way switched-network, and an in-store network of computers. Logically, the system is divided into five logical segments.
- Centralized Content Catalog and Store Management
   Content , group information, dates of validity, and kiosk scripting information are input into the system by Network Management Center (NMC) employees. Additionally, stores which are to receive content are also managed in this manner.
- Distribution Building and Packaging
   Distributions are created by performing data analysis on existing content and new content. Files are gathered and compressed into one file. A 'group file' or address list is built containing store addresses that are to receive the distribution. The modules responsible for this segments are: Distribution Editor, Builder, and Sender.
- Transmission and Acknowledgment
   The compressed distribution file and the group file are sent to a Network Operations Center (NOC) via FTP. They are then processed and the compressed file is sent via multicast to each store which has been added to the group file. Each store will then on reception of the compressed distribution file process the file and distribution the files within the store appropriately. Upon completion, an acknowledgment file is sent back to the NMC via FTP over the switched-network backchannel. At the NMC, the acknowledgment file is received and the centralized database is updated to reflect the current state of each store.
- Consumer Operation
   This consists of several computer systems connected to a central file server via a TCP/IP network. Each of the systems are each digital video (MPEG-1 and MPEG-2) playback systems. The first of which serves as the network file server as well as a non-interactive advertising kiosk of which the output is NTSC converted and sent to a group of television sets within the store. The second is an interactive kiosk which displays advertising and CD product video and audio previews which are prompted by the consumer through a UPC scanner connected via TCP/IP. The third is also an interactive kiosk which behaves similarly to the CD kiosk but provides previews to Home Video titles.
- Statistics/Log Gathering and System Maintenance
   This consists of gathering statistics generated during UPC product scans by the consumer, gathering logs generated by the software modules, and querying for and gathering of system information of the various computers. The information gathered is compressed and sent via FTP to the NOC. Critical operation errors are reported back via SNMP traps and system logs.

### II. System Overview

The system is divided into nine modules. Together they comprise all of the logical segments within the DDS system. Each module is to some extent related and/or reliant on one or more of the others. They communicate through either database records, files on disk, or through IP messages.

### A. Module Relation to Logical Segments

The software modules implemented in DDS are related to the logical segments as follows.
- Centralized Content Catalog and Store Management
   * Cataloging Module
- Distribution Building and Packaging
   * Distribution Editor Module
   * Builder Module
- Transmission and Acknowledgment
   * Sender Module
   * Maintenance Module
   * Reception Module
   * SNMP Agent Module
- Consumer Operation
   * Proxy Module
   * Video Kiosk Module(s) (Wall of Eyes, CD Endcap. Home Video)
   * SNMP Agent Module
- Statistics/Log Gathering and System Maintenance
   ***** Maintenance Module
   * SNMP Agent Module

### B. Module Overview

### Cataloging Module

This module is responsible for the maintenance of the NMC central database. All content is input and associated with a date range and one or more group definitions. Additionally, all potential stores are also input and associated with a group definition. Scripts which define the type and order of content previewing on each kiosk is also maintained here. It is comprised of two databases (which are collectively referred to as the NMC database). A front-end software module is used by NMC users to input the data. This module resides at the NMC server computer.

### Distribution Editor Module

This module is responsible for initiating the distribution process. This entails maintaining the Distribution database. When a distribution is to be initiated, a record containing parameters defining the subset of content and stores to be distributed is created. This record is then used as a signal for the Builder Module to perform its functions. This module is comprised of a database and a front-end software tool used by NMC users to input data. This module resides on the NMC server computer.

### Builder Module

This module is responsible for creating the compressed distribution file to be ultimately sent to each store that is a participant in any particular distribution. This entails performing an analysis of the NMC database according to parameters input in the Distribution Editor Module when a distribution process is initiated. This analysis is then used to determine which files are to be included in a distribution file. Additionally, the distribution file is compressed. The Builder Module communicates with the Sender Module by placing records in the Send Database which is used as a signal for the Sender Module to perform its functions. This module resides on the NMC server computer.

### Sender Module

This module is responsible for sending a compressed distribution file to the Network Operations Center (NOC) and also processing acknowledgments that return form each store participating in a distribution. A record created in the Send Database by the Builder Module is a signal for the Sender Module to begin processing the pre-constructed distribution file. This entails creating a group file or address list which contains the IP addresses of each store to receive a particular distribution. This file and the compressed distribution file are sent via FTP to the NOC. Once these files are sent, this module contains logic to process store acknowledgment files sent back to the NMC. This includes updating the NMC database to reflect the current state of each store when these are received. This module resides on the NMC server computer.

### Maintenance Module

This module is responsible for a scheduled nightly batch process which includes: collecting consumer usage statistics on the Kiosks and other interactive devices on the store network, querying for and gathering system information from the Kiosks, detection of new distribution files, and launching of the reception module when a distribution is pending immediate processing. This entails sending network IP messages to the Proxy Module to initiate shutdown of all the Kiosk processes.. Once these systems are suspended, the appropriate log and statistics data is collected, compressed, and sent via FTP to the NMC server computer. When a valid distribution file is detected, the Reception Module is launched and its return code is used to create an acknowledgment file which is sent via FTP the NMC server computer. When a distribution is completed successfully, the Proxy Module is then signaled to re-start the Kiosk processes, which would then reflect the new content and/or scripts that have been distributed. Errors incurred during execution of the Maintenance Module are communicated over IP to the SNMP Agent Module. The Maintenance Module resides on the in-store server.

### Reception Module

This module is responsible for processing a compressed distribution file that has been prepared by the Builder Module and transmitted via the Sender Module. This entails decompression of the distribution file, deleting content no longer valid as designated by the distribution file, moving the content contained in the file to the designated Kiosks and/or server on the network, and returning an return code to the Maintenance Module specifying any errors that may have occurred during processing.. Additionally, errors incurred during processing are communicated over IP to the SNMP Agent Module. The Reception Module resides on the in-store server.

### Video Kiosk Module(s)

This module is responsible for implementing the behaviors provided to the consumer. This includes a non-interactive informational kiosk and two interactive retail product preview kiosks. The functionality of the non-interactive portion includes playback of MPEG-2 videos whose order is configured via a script or playlist specified in the NMC database which is ultimately packaged and sent with a distribution. The interactive portion includes two computers which playback MPEG-1 video previews according to consumer prompts and a script defined in the NMC database which is ultimately packaged and sent with a distribution. The software communicates via IP with a dedicated scanner computer which processes consumer scans of product UPC codes. Additionally, critical errors which occur during the processing are communicated over IP to the SNMP Agent Module. The Video Kiosk Module resides on the in-store server, the CD endcap kiosk, and the home video kiosk.

### Proxy Module

This module serves as a front-end process to the Video Kiosk Module. Its main responsibility is to start and stop the Video Kiosk Module according to IP messages sent from the Maintenance Module during the batch log/statistics gathering process. When the batch process is about to occur, the Maintenance Module sends an IP message to the Proxy designating it to shut down the Video Kiosk Module and place a graphic on the screen informing the consumer that an update is occurring. When the Maintenance Module process is completed, it sends another IP message to the Proxy Module, informing it to restart the Video Kiosk Module. The Proxy Module resides on all the computers that host the Video Kiosk Module.

### SNMP Agent Module

This module servers as a centralized process to gather various critical errors reported by the in-store software modules and create SNMP error-trap conditions which will be reported to any local or remote SNMP manager which is listening for these traps. The SNMP manager used by DDS currently resides on the NMC server This entails listening for IP messages which contain information about the error including the location and level of criticality. Once an error is received, an appropriate SNMP error trap. This software resides on the in-store server and accepts IP error messages from any device on the in-store network.

### • Centralized Content Catalog and Store Management (0)

NMC user(s) input data into the NMC database via third part front-end tool. Data includes new CD's and Home Video information including audio and video MPEG file pointers and dates of validity for each valid store group. Scripts that define the the order of videos and playback behavior of the kiosk modules are also input. Additionally, data is input to track stores that are to potentially receive content by providing their IP address and associating them with a group.

### • Distribution Building and Packaging (1, 2)

NMC users initiate a distribution by entering a record into the Distribution Database via the Distribution Editor. The record contains the date when the distribution is to be sent as well as the range of dates and grouping by which to select viable content. Additionally, script definitions are associated with each kiosk module in the store(s). The Builder Module periodically monitors for new records in the Distribution Database. Once a valid record is found, the module performs a series of database queries to return a set of content ('Distribution Set') that is defined by data fields in the Distribution record. Once this set is known, another series of queries is performed to determine a subset which represents the difference between what each store in the group already contains and what is included in the Distribution Set. Once this is known, all content files referenced by that set are collected and compressed into one file (a big file). Additionally, the script definitions for each kiosk are added as well as any graphics data files referenced by the script(s).

Once the .big file is created, the Builder Module creates a record in the Sender Database containing information about the distribution, most notably the name and location of the big file and date to be transmitted. Additionally, a table containing store addresses for each store to receive the distribution is generated and referenced in the Sender data record. This record will later be used by the Sender Module to ultimately transmit the file to each store in the group designated by the NMC user when the distribution was initiated.

### • Transmission and Acknowledgment (3, 4, 5, 8)

The Sender Module periodically monitors for new records in the Sender Database. Once a valid record is found, the module retrieves the store IP addresses for each store in the group designated in the distribution referenced in the record. The Sender Module renames the .big file to a special name with timestamp information embedded in it which specifies when the file is to be processed once reaching the store(s). The Sender Module then creates a 'group file' or address list which will ulitmately be used by the Starburst software to transmit the .big file to the appropriate store satellite downlinks. Once this file is created it, along with the .big file are sent to the NOC via FTP. Once the transmission is complete, a record is created in the Receive Table of the Sender Database for each store added to the group file. This record contains various information, most notably of which being the expected name of the acknowledgment file that is expected to be received back from each store added to the group list.

The NOC, once receiving the group file and the big file directs these files to the Starburst Server software which transmits via multicast only the .big file over the satellite network to each store address specified in the group file. The file is ultimately copied to a known download directory in each designated store.

Within each store, the Maintenance Module is scheduled to run. The Maintenance Module, after performing its normal gathering of statistics/log/system information, scans the known download directory for any valid big files that have timestamp information which direct it to begin processing the file that day. If the file is to be processed, the Reception Module is launched with the name of the new file passed as a command argument and the Maintenance Module halts until a return code is received signaling that the Reception Module has finished processing the .big file.

The Reception Module processes the file in that it reads an instructional file contained in it which lists the names and directories of the files to be removed (no longer valid as defined by the NMC database information) and directories and files which are to be added. Once this process is complete or a critical error occurs before completion, the Reception Module terminates with an appropriate error code. Additionally, the Reception Module signals the SNMP Agent Module to generate error traps accordingly. If the Reception Module terminates without returning a critical error code, the Maintenance Module generates an acknowledgment file which is assigned a special name. The filename contains timestamp information, the ID of the Send event, the address of the store which generated it, and the returned error code (if the Reception Module generated a non-critical error). This file is then sent via FTP to the NMC server to a known acknowledgment directory.

The Sender Module periodically scans the known acknowledgment directory for valid acknowledgment files. When one is detected, the filename is compared to records in the Receive Table. The matching Receive record is then flagged as being correctly acknowledged and the Sender Module updates the Store's information in NMC Database, reflecting the current state of the content residing in a store. When all acknowledgment files for a particular distribution have been received, the Sender Module updates the NMC and Sender Databases effectively completing the distribution cycle.

### • Consumer Operation (6, 7, 8)

The software module which has output visible to the consumer within each store is the Video Kiosk Module. It is replicated on three computers: the in-store server, the CD Endcap, and the Home Video kiosk. The in-store server plays a scripted advertising loop in MPEG-2 format which is NTSC encoded and then sent to a set of television sets. The CD Endcap also plays a scripted advertising loop but additionally provides interactive previews of retail CD products. The Home Video kiosk performs the same function with retail Home Video products. The consumer interfaces with the system via a scanner which is connected to a third-party computer. This computer sends signals via IP to the Video Kiosk Module providing scan codes of previewable products which have been scanned. The Video Kiosk then plays a scripted advertisement, the CD or Home Video video preview, a graphic advertisements, and then a 'drill-down' screen of additional options. This may include graphic information concerning the product and audio-only songs which can be selected with via buttons on the scanner device. The consumer can also set the playback volume via buttons on the scanner device. All relevant button press information is sent via IP to the Video Kiosk software which processes the button presses, when appropriate.

Each replicated Video Kiosk Module has the Proxy Module serving as its front end. It processes messages sent from the Maintenance Module to direct it to stop and start during the distribution update process.

All errors generated by the Video Kiosk Module and Proxy Module are sent to the SNMP Agent via IP which generates the appropriate error trap.

The Video Kiosk Module generates a log file which is gathered and sent back the NOC during each Maintenance Module process. The scanner devices also generate log files for operation including consumer button presses. These are also gathered during the Maintenance Module process.

### • Statistics/Log Gathering and System Maintenance (4, 8)

The Maintenance Module, during its scheduled nightly batch process, gathers all log files and statistics files generated by the other DDS software modules and scanner devices attached to the network. Additionally, each Video Kiosk computer is queried to determine if the Video Kiosk software is functioning as well as for available disk space. This information is placed into a log. This file, along with previously gathered files are compressed into one zip file and sent back to the NMC server computer via FTP. Critical errors are sent to the SNMP Agent Module via IP which then generates an appropriate SNMP trap.

### III. Module Detail

*Note: Refer to the DDS Design Specifications Document for all data table definitions. Only names of databases, tables and fields are reference here. NMC refers to the UpdateDB.mdb and StoreDB.mdb Access databases, Sender refers to the Send.mdb Access database. Distribution refers to the Distribution.mdb Access database.*

### Cataloging Module

### Summary

The Cataloging module consists of a the central NMC database and a third-party application to manage the data (not documented here). All store data, content references, data concerning group relationships and valid date ranges are stored and managed here.

### Database

The NMC database consists of several tables, some of which are not used directly by the NMC. Nonetheless, all data tables within NMC are managed within this module.

### Files

No files are created or manipulated.

### Network

No special network communication is implemented.

### User interface

Software provided by a third party represents the user interface for this module. That software is not documented here.

### Registry

No registry settings exist for this module.

### Detail

NMC users input data which is necessary for DDS operation.

### Distribution Editor Module

### Summary

The Distribution Editor Module consists of a database and a user interface for creating new distributions and viewing previous distributions.

### Database

Manages the Distribution.distribution table. Performs lookups on NMC.tbl_Groups.Group_Name, NMC.Scripts.Script_ID fields. Data is accessed through the BDE (Borland Database Engine) and the Access ODBC driver.

### Files

No files are created or manipulated by this module.

### Network

No special network communications is implemented.

### User Interface

The user interface consists of a data entry screen with edit fields for all required data. An additional screen is provided to a time and date for the Send_Date field. Data is navigated through a set of navigation buttons and grid layout is provided for viewing multiple distribution records.

### Registry

No registry settings exist for this module.

### Detail

This module provides a management tool for manipulating the Distribution Table . The fields in the user interface directly correspond to fields in the distribution database.

To generate a new distribution, the user will (at a minimum) specify:
1. A target group name from the 'Groups' table. Only stores within that group and content assigned to that group will be included in the distribution.
2. A date when the distribution is to be sent. A blank date will specify ASAP status.
3. A beginning and ending date range from which to select content to be distributed and/or removed from a current distribution.
4. A script definition identifier for the wall of eyes, home video endcap, and the interactive endcap.

### Builder Module

### Summary

The Builder Module is responsible for gathering media content files, generating scripts, and packaging these into a single file for distribution to multiple stores. The Distribution.Distribution table is periodically scanned for new distribution records. When one is found, this module:
1. Determines the set of content files defined by the distribution (Distribution Set).
2. Generates a script file for each script definition: Distribution.Endcap_Scrip_ID.Distribution.Video_Wall_Script_ID. Distribution.Home_Video_Script_ID
3. For each store referenced by the Distribution.Group_Name field, a set of files to be added and/or removed from the existing in-store set is determined (Difference Set).
4. The files for each distinct Difference Set along with additional necessary files are gathered and compressed into the .big file format.
5. A table containing all store addresses defined by the Distribution.Group_Name field is created (Store Set).
6. A Sender.Send record is generated for each distinct .big file (difference set) containing data necessary for transmission to be queued.

### Database

Builder will manipulate the existing NMC database as well as the distribution and send table described below. Existing NMC tables utilized by this module:
- tblUPCMaster
- tblGroups
- tblUPCGroups
- tblPersons
- tblVideoMaterials
- tblAudioMaterials

### Files

### BIG Files

Each distribution package is a compressed file in the .big file format. This file includes:
- New Content - one or more separate compressed (.cab format) file(s) for each target device in the store for new content to be added. Content includes:
   - Audio files used by stand-alone Listening Posts which for each CD include the audio track MPEG-1 files (audio channel only) and a text file containing the Artists Name. Album Title, and track names. These are used by the Listening Post for LCD display during playback.
   - Featured List' file containing list of featured titles for each of the CD Endcap and Home Video kiosks. This file is read by the Listening Post devices attached to the Video Kiosk (acting as scanner devices) and only UPC codes that reside in this file are forwarded to the Video Kiosk software. UPC codes not contained in this file are treated in the same manner as a stand-alone Listening Post.
   - Video files used by the Video Kiosk Module. These include title previews and advertisements (bumpers and attract videos).
   - Graphic Files used by the Video Kiosk Module. These include static graphics related to the titles and advertisements.
- Instruction File - a file containing a set of instructions which include the source and destinations for all compressed content files as well as a deletion list containing the list of files to be removed during the distribution.

### BIG File Format

The name of the .big files used in distribution will have the following format: DsetX_Y.big. Where x is the distribution set ID and y is the difference set ID. Within that file, there will be a set of compressed .CAB files each representing the content that will be destined for a particular location. Each .CAB file specified will contain all the appropriate content compressed *in precisely the same directory structure as exists in the store.* Files contained include:
- LP.cab - the audio-only files for the non-featured CD titles.
- AudioEC.cab - the featured CD's with both audio and video that will reside on one or more endcaps.
- VideoEC.cab - the home video content that will reside on the home video unit.
- WOE.cab - the video wall content.
- setup.ini - configuration file detailing where to uncompress each file.

### Setup.ini File Format

### [installSectionName]

### extractFiles=cabFiles

### deleteFiles=deleteFiles

### [cabfiles]

LPData.cab=e:
audioEC.Cab=\\cd1\c
videoEC.cab=\\hv1\c
woe.cab=e:

### [deleteFiles]

filename1.ext
filename2.ext
filename3.ext

### Listening Post Files

Refer to the ARMA documentation for the Listening Post CD title file (*UPC.*ini) format and the 'featured list' file format.

### Script Files

The Builder Module generates a textual script file in the Windows .ini file format for each script definition (Wall of Eyes, CD Endcap, and Home Video Kiosk). This file is ultimately added to the .big file and copied with the distribution transmission to the appropriate in-store computer where it is used by the Video Kiosk Module. A script file contains all the data used by the Video Kiosk Module, including:
- Content Files - names and paths of video files, audio files, and graphic files
- Playlists - list, order and sequence of video files that are to be played during interactive and non-interactive modes
- Text Data - text to be displayed on the screen and/or sent to the LCD panel on the scanner device
- Setting Information - NMC user configurable data used to define the behavior of the Video Kiosk during interactive mode

### Script File Format

### [BUMPEREXCLUSION]

For every record <R> in tblBumperExclusion where tblBumperExctusion.ScriptID=ScriptID
1=<R1>
2=<R2>
x=<Rx>

### [<R>]

BV = <R.Bumper_upc>

EVx = <R.Title_upc>

### [LCDTEXT]

For every record <R> in tblLcdText where tblLcdText.ScriptID=ScriptID
1=<R1>
2=<R2>
x=<Rx>

### [<R>]

1= <R.lcd_text_line1>
2= <R.lcd_text_line2>

### [SETTINGS]

For the single record <R> in tblAudioSettings where tblAudioSettings.ScriptID = ScriptID <R.Field Name> = <R.Field Contents>

### [ATTRACTSCRIPT]

For every record <R> in tblAttractScript where tblAttractScript.ScriptID = ScriptID

<R.Sequence> = <R.Command>;INDEX(<R.Content>);<R.Method>;<R.Interruptable>

### [SCANSCRIPT]

For every record <R> in tblScanScript where tblScanScript.ScriptID = ScriptID

<R.Sequence>= <R.Command>;INDEX(<R.Content>);<R.Method>;<R.Interruptable>

In reference to ATTRACTSCRIPT and SCANSCRIPT INDEX <(R.Content>)

Where <R.Command> is 'PA', 'PB', 'PT' then <R.Content> is a <UPC> code
and Index (<UPC>) is the index in the [ATTRACTS], [BUMPERS], [TITLES] section where <UPC> is located. Where <R.Command>is 'PL' then <R.Content> is the <Text ID> and Index (<TextID>) is the index in the [LCDTEXT] section where <TextID> is located.

### [<UPC>] from tblVideoMaterials

For the single record <R> in tblVideoMaterials where tblVideoMaterials.UPC = <UPC>
VF = <R.video_filename>
LCD1=<R.lcd_tex_line1>
LCD2 = <R.lcd_tex_line2>

For every record <R> in tblVideoText where tblVideoText.UPC = <UPC>
TOx = <R.text>
TCx = <R.left>:<R top>:<R.width>:<R.height>:
TFx = <R.font_name>
TRx = <R.font_color>
TZx = <R.font_size>

For every record <R> in tblVideoIcon where tblVideoIcon.UPC = <UPC>
GOx = <R.graphic_filename>
GCx = <R.left>;<R.top>;

### [<UPC>] from tblBumperMaterials

For the single record <R> in tblBumperMaterials where tblBumperMaterials.UPC = <UPC>
VF = <R.video_filename>
LCD1 = <R.lcd_tex_line1 >
LCD2 = <R.lcd_text_line2>
TG = <R.Bumperette_LGBitmap_Filename>
IG = <R.Bumperette_SMBitmap_Filename>

For every record <R> in tblVideoText where tblVideoText.UPC = <UPC>
TOx = <R.text>
TCx = <R.left>;<R.top>;<R.width>;<R.height>;
TFx = <R.font_name>
TRx = <R.font_color>
TZx = <R.font_size>

For every record <R> in tblVideoIcon where tblVideoIcon.UPC = <UPC>
GOx = <R.graphic_filename>
GCx = <R.left>;<R.top>;

### [<Tx>]

For the single record <R> in tblVideoMaterials, tblAudioMaterials, tblUPCMaster, tblLinerNotes
VS = tblVideoMaterials.upc
AB = tblUPCMaster.audio_bitmap_filename
CB = tblUPCMaster.cover_bitmap_filename
LN = tblLinerNotes.line1 + line2 + line3 + line4 + line5 + line6
ASx = tblAudioMaterials.upc + '_'+ tblAudioMaterials.sed

### [ASx]

for the single record <R> in tblAudioMaterials
AT = tblAudioMaterials.audioFilename
AN = tblAudioMaterials.audioTrackname
AL1 = tblAudioMaterials.lcd_text_line1
AL2 = tblAudioMaterials.lcd_text_line2

### AudioEC Script

### [ATTRACTS]

For every record <R> in tblVideoMaterial
where tblVideoMaterial.UPC = D_SetX.UPC and
tblVideoMaterial.Destination ='AudioEC' and
D_SetX.Type ='AM'
1 = <R1.UPC>
2 = <R2.UPC>
x = <Rx.UPC>

### [BUMPERS]

For every record <R> in tblVideoMaterial where
tblVideoMaterial.UPC = D_SetX.UPC and
tblVideoMaterial.Destination ='AudioEC' and
D_SetX.Type ='B'
1 = <R1.UPC>
2 = <R2.UPC>
x = <Rx.UPC>

### [TITLES]

For every record <R> in tblAudioMaterial where
tblVideoMaterial.UPC = D_SetX.UPC and
D_SetX.Type ='M' and
D-SetX.Featured = true
1 = <T1>
2 = <T2>
x = <Tx>

### VideoEC Script

### [ATTRACTS]

For every record <R> in tblVideoMaterial where
tblVideoMaterial.UPC = D_SetX.UPC and
tblVideoMaterial.Destination ='VideoEC' and
D_SetX.Type = 'AM'
1 = <R1.UPC>
2 = <R2.UPC>
x = <Rx.UPC>

### [BUMPERS]

For every record <R> in tblVideoMaterial where
tblVideoMaterial.UPC = D_SetX.UPC and
tblVideoMaterial.Destination ='VideoEC' and
D_SetX.Type ='B'
1 = <R1.UPC>
2 = <R2.UPC>
x = <Rx.UPC>

### [TITLES]

For every record <R> in tblVideoMaterial where
tblVideoMaterial.UPC = D_SetX.UPC and
D_SetX.Type ='HV'
1= <T1>
2 = <T2>
x = <Tx>

### WOE Attract Script

### [ATTRACTS]

For every record <R> in tblVideoMaterial where
tblVideoMaterial.UPC = D_SetX.UPC and
tblVideoMaterial.Destination ='WOE' and
D_SetX.Type = 'AM'
1 = <R1.UPC>
2 = <R2.UPC>
x = <Rx.UPC>

### [BUMPERS]

For every record <R> in tblVideoMaterial where
tblVideoMaterial.UPC = D_SetX.UPC and
tblVideoMaterial.Destination = WOE' and
D_SetX.Type ='B'
1 = <R1.UPC>
2 = <R2.UPC>
x = <Rx.UPC>

### Network

No special network communications are implemented.

### User interface

An text output log window containing all status and error messages is provided when the user has specified that option in the registry.

### Registry Settings

Subkey: HKEY_LOCAL_MACHINE \ SOFTWARE \ PICS\BUILDER
- **DistributionFileName** == The full path and filename of the distribution.mdb database.
- **UpdatedbFileName** == The full path and filename of the upddata.mdb database.
- **StoreUpdateFileName** == The full path and filename of the storeupdate.mdb database.
- **SendFileName** == The full path and filename of the send.mdb database.
- **BuilderArea** == A subdirectory on a very large hard drive where builder stages the data.
- **AudioECPath** == The final destination for the interactive end cap media files. (i.e. \\cd1\c\pics\audioec\data\) This key should not be changed for any reason.
- **VideoECPath** == The final destination for the home video end cap media files. (i.e. \\hv1\c\pics\videoec\data\) This key should not be changed for any reason.
- **WoePath ==** The final destination for the wall of eyes media files. (i.e. e:\Ip\) This key should not be changed for any reason.
- **LPPath ==** The final destination for the Armi listening post media files. (i.e. e:\pics\woe\data) This key should not be changed for any reason.
- **Debug ==** Determines if the log window should be shown. 0 = no log window. 1 = log window.
- **Validate ==** Determines if Builder should validate the database. 0 = run normally. 1 = run validation. This key should always be 0.

### Details

### Executable Name: builder.exe

### Dependent DLL's: urimon.dII (Microsoft)

Once a record in the 'Distributions' table is made, the following events will occur:
- **Create a Distribution Set -** Builder will perform a relational join between the 'tblUPCMaster' and 'tblUPCGroups' tables and execute a query for all title/content identifiers (UPC code) that match the group and date range specified in the 'Distributions' table. This set of identifiers is referred to as the 'pending distribution set' and will be copied into a new generated table called DSet_*nn* where nn is the associated Distribution Identifier from the 'Distributions' table. This table is then a record of all the content that is to be included in the distribution according to the user parameters stored in the 'Distribution' record.
- **Create store scripts -** Builder will create a script for the wall of eyes, the home video endcab, and the interactive endcab. The data is selected from the tables listed in the database section.
- **Create one or more Difference Sets -** For each store in the targeted group, the pending distribution set table will be compared to the store's current distribution set table (which is held in storeupdate.person.distribution_set_filename) and a result difference set will be generated. This set represents only the differences between the current and pending distribution sets and will be copied into a temporary table called DiffSet. This set will be the same for all stores in a group except in the case where a store has been recently added or moved to a group where it has a different current distribution set than other stores in the group. In this case, a separate difference set will be created for each newly added store in the group and the file name will reflect the store's identifier.
- **Create Distribution Package(s)-** Using the information in the difference table, the system will then:
   1. Search for and compile all the binary content files associated into a temporary directory structure that will mirror the in-store directory structure.
   2. Create all necessary files used for textual information. These include:
- *UPC.INI -* where *UPC* is the UPC code of the CD title. This file is required for the listening post for LCD text data when playing audio-only CD's. See the ARMA listening post design document for more information on this file.
- *SCRIPT.INI -* scripts for the wall of eyes, home video endcap, and the interactive endcap. See the script section for script detail.
   3. Store all files in the directories as they appear on the target machine. System will create in temporary storage the directory and file structure as it appears on the *in-store target machine's* and copy all content to the appropriate locations.
   4. Compress the all content files, including directory information into *separate* .CAB files, *one for each type of target in-store machine.*
   5. Compress the collection of separate .CAB files into a master .BIG file along with an information file on the directions for uncompressing
- Note: See file format section for information on the format of the .CAB file
- **Create Satellite Address Table -** Using the group defined in the 'Distribution' record's 'Group_Name' field, compile a list of store addresses to include in the envelope file. The table is created in the send database. The name format is s_setxx where xx is the distribution set id.
- **Add record to Send.Send -** Adds a record in send.send that contains all the information that sender needs to FTP the .BIG file to the NOC for satellite transmission.

### Sender Module

### Summary

The Sender Module is responsible for the transmission and acknowledgment process on the NMC side of the DDS distribution process. A record is detected in the Sender.Send table which specifies that a pre-prepared distribution package is awaiting transmission. Sender renames the distribution file to contain timestamp information specifying the date when Sender creates a 'group file' that specifies the DNS qualified IP addresses for each store to receive the distribution ad then copies this file along with the distribution file to the NOC computer via FTP with information stored in the registry. A record is then created for each store that was added to the group file in the Sender.Receive table which contains expected acknowledgment information specifically the name of the acknowledgment file that is expected for each store. The Sender Module also contains a thread which monitors the acknowledgment directory for the acknowledgment files as they come back from the stores. Each file is matched up and the NMC database is updated accordingly.

### Database

### Sender.Send Table

Read:
- Sender.Send.Send_Date - used to determine when the record is to be processed.
- Sender.Send.Store_Set_Tablename - used to determine what table houses the IP addresses for each destination store. It is queried from the NMC.Person.Satellite_Address field for each destination store.
- Sender.Send.Activation_Date - used to determine what day/time to transmit the distribution. This date is embedded into the distribution filename which the Maintenance Module uses to determine when to process the file in the store.
- Sender.Package_Filename - used to get the name of the table which contains the list of addresses of the stores which are to receive the distributions.

Write:
- Sender.Send.Group_Filename - specifies the path and name of the generated group filename (used by the Starburst software).
- Sender.Send.Sent_Date - specifies when the distribution was sent.
- Sender.Send.Completed_Date - specifies when the acknowledgments from all stores was received.

### Sender.Receive Table

When a distribution and its corresponding group file are transmitted, a record is created in this table for each store that received the distribution. The Sender Module then modifies the record when an acknowledgment file is received from the store.

Read/Write:
- Sender.Receive.Send_ID - specifies the related Sender.Send record identifier
- Sender.Receive.Store_ID - specifies the related NMC.Person record identifier
- Sender.Receive.ACK_Filename - specifies the expected prefix of the name of the acknowledgment file
- Sender.Receive.Received_Date - specifies the date on which the acknowledgment file was received

### Files

Both the package file and the group file are transmitted via FTP to the NOC for a distribution. The acknowledgment file is received from the store(s) which received and successfully distributed a distribution file.

### • Package File (*.big file)

This file is created by the Builder Module and is specified in the Sender.Send.Package_Filename field. This file is renamed to include the timestamp information used by the Maintenance Module.

Package filename format:

### ActivationDate_SendID.big

where ActivationDate is a mm-dd-yyyy date string and SendID is the send record identifier. For example, for send identifier 99 on July 1 st:
07-01-1997_99.big

After transmission, this file would be recognized by the Maintenance Module to be activated on July 1^{st}. The send identifier is used in composing the name of the acknowledgment file so they are matched up on acknowledgment when the Sender Module detects the file has been sent.

### • Group File

This file is created for use with the Starburst mulitcast server software housed at the NOC. It contains a list of all the IP addresses for the stores that are to be included in the distribution. The format of this file is :

### Group File Format:

### <Header>

<group_type='address type'>
<max_passes='max passes'>
<address_type='address type'>

for each store..
<IP Addr:'resolved IP address'>
<Client:'resolved IP address'>
<Person:'store name'>
<Phone1:left blank>
<Phone2:left blank>

### Example:

[MFTPSERVER GROUP FILE 3.02]
group_type=Limited
max_passes=1
address_type=Multicast
IP Addr:1.2.3.4
Client:1.2.3.4
Person:Store1
Phone1:

Phone2:

IP Addr:11.22.33.44
Client:11.22.33.44
Person:Store2
Phone1:
Phone2:
IP Addr:.111.222.333.444
Client:111.222.333.444
Person:Store3
Phone1:
Phone2:

### • Acknowledgment File

This file is created in the store by the Maintenance Module. It contains a 1 character blank and has information within the name which is use by the Sender Module to process acknowledgments.

### Acknowledgment filename format:

StoreName_ActivateDate_SendID.RetumCode
where:
   - StoreName = Hostname of the store (non-resolved machine name)
   - ActivateDate = Date distribution was distributed and hence activated
   - SendID = Corresponding Send table record identifier: Sender.Send.Send_ID
   - ReturnCode = Code returned by Reception Module upon completion of its process, one of the following:
      - 0: no errors occurred
      - 1: non-critical error occurred (process still completed)
      - 2: critical error occurred (process did not complete)

### Example:

DDS-SERV-00001_07-01-1997_99.0

### • Log File

The Sender Module generates a log file of all status and error messages during its operation. These are copies of the messages sent to the output windows.

### Network

The Sender Module uses FTP to connect to the remote NOC server which receives the distribution package along with corresponding group files. Additionally, due to a limitation in the Starburst server software to resolve host names, DNS resolution must be available to resolve each store's host name before it can be added to the group file. Additionally, the acknowledgment file is sent back from the stores via FTP. This requires that the Sender Module have read/write access to the directory the NMC's FTP server is placing the acknowledgments.

### User Interface

The Sender Module provides two output log windows. One of which is for displaying messages from the Sender thread (performs the sending function - transferring the distribution). The other is for displaying messages from the Receive thread (performs the receiving function acknowledgments). Status and error messages will be displayed.

The Sender Module has two modes of operation, Debug and Non-Debug. This is determined by a registry setting. In non-debug mode (non-interactive), as soon as Sender is launched, both the send and receive threads are started automatically and the output windows are minimized. In debug mode (interactive), a small screen with two buttons on it ('Start' and 'Stop') is provided and the user is required to press the 'Start' button to initiate the threads.

Normal operation entails running the Sender Module continuously on the NMC server or when a known distribution task is pending (ie: an unprocessed record resides in the Sender.Send table).

### Registry

Subkey: HKEY_LOCAL_MACHINE\SOFTWARE \ PICS\Sender
- **Log Filename==** Name of the log file to generate
- **Debug Mode==** Debug mode flag (0=Non-Debug Mode, 1=Debug Mode)
- **Group Type==** Value to use for 'group_type' entry in group file
- **Header==Header** string to use for group file header
- **Address Type==** String to use for 'address_type' entry in group file
- **Max Passes==** String to use for 'max_passes' entry in group file
- **FTP Address==** String to use for IP Address of the FTP server on the NOC server
- **FTP Login Name==** String to use for FTP login name
- **FTP Password==** String to use for FTP login password
- **FTP Directory==** String to use for FTP upload directory
- **ACK Directory==** String to use for directory where acknowledgment files are downloaded to
- **Sleep Interval==** Number of milliseconds to wait between scans of the Sender.Send for the send thread and to scan for acknowledgment files in ACK download directory for the receive thread
- **Delinquent Ack Interval (Hours)==** Number of hours to wait before a non-acknowledged transmission is reported as an error by the receive thread

### Detail

**Executable Name: sender.exe**
**Dependent DLL's:** Borland Database Engine 3.0 (ODBC support), ODBC 3.0 with Access ODBC Driver, wininet.dll (Microsoft)

The Sender Module is composed of two threads, a send thread and a receive thread. Each thread, after processing, is put to sleep for the Registry."Delinquent Ack Interval (Hours)" amount.

During the process of normal operation, the Send thread:
- Scans the Sender.Send table for records that have a Sender.Send.Send_Date that is equal to or before the current time and has a Sender.Send.Send_Date that is empty.
- If one is found, it retrieves the store addresses from the Sender.Send.Store_Set_Tablename and builds the group file, first resolving the name to a qualified IP address. If an address cannot be qualified, the store will not be added to the group file and an error will be generated. If no valid Sender.Send records are found or if the addresses for all of the stores in a group cannot be resolved (DNS server down), the send thread is stopped and goes to sleep for the specified interval.
- After the group file is built, the package file Sender.Send.Package_Filename is moved and renamed to the timestamped package filename format.
- An FTP connection is then initiated using the information in the registry.
- The group file and the distribution package are then transferred via FTP to the NOC.
- For each store that was added to the group file, a record is generated in the Sender.Receive table which contains the Send Identifier, Store Identifier, and the prefix of the expected Acknowledgment file that is to be received from the corresponding store. This prefix matches the Acknowledgment filename format.

During the process of normal operation, the Receive thread:
- Scans the Registry."ACK Directory" directory for files that have names matching a record in the Sender.Receive table which has a corresponding prefix that matches the Sender.Receive.ACK_Filename field value.
- If one is found, it removes the file from the acknowledgment directory and posts the current time to the Sender.Receive.Received_Date field. The corresponding store record in the NMC.Person table NMC.Person.Distribution_Set_Filename field is updated with the Sender.Send.Store_Set_Tablename field value Signifying the Distribution Set that is currently in the store. The corresponding record in the Distribution.Distribution table for Distribution.Distibution.Pending field is updated to signify the distribution was completed successfully.

A query is performed to determine the number of remaining outstanding Receive records (that is, unreceived acknowledgment files from stores in the same Send event). If any are found and the interval between the current time and the Sender.Send.Sent_Date is greater than the specified interval in Registry."Delinquent Ack Interval (Hours)", an error is generated for each store. If none are found (that is, all acknowledgments have been received), the Sender.Receive table records with the same completed Sender.Receive.Send_ID field are removed and the Sender.Send.Completed_Date field is updated with the current time.

### Maintenance Module

### Summary

The Maintenance Module is scheduled to run by the Windows NT task scheduler service typically around midnight. The Maintenance Module is responsible for determining if each instance of the Video Kiosk Module is functioning as well as if the Listening Post devices are alive. Information about the state of each computer running the Video Kiosk Module is obtained and collected. All statistics files generated by the Listening Post Software is gathered and collected. This information is then transmitted to the NMC server computer.

New distributions are also detected and the Reception Module is launched and its error code returned in the generated acknowledgment file transmitted to NMC server computer.

### Database

No databases are utilized.

### Files

The Maintenance Module the following files (default names in parens):
• Maintenance Module Log File (serverlog.log) - The log file created during maintenance function. All status and error messages that occur during processing, but before transfer, are logged to this file. This file is collected and sent back the NMC as part of the maintenance function.
• Video Kiosk Log File(s) (videolog.log) - The log files generated by the Video Kiosk(s). These are collected during the maintenance function.
• Listening Post Device Log File(s) (cd*.log, hv*.log,Ip*.log). The log and statistics files for the Listening Post devices and the Listening Post server software. These are collected during the maintenance function.
• Compressed Log Collection File (.zip) - This is a single compressed file which contains all of the log and statistics files to be sent to the NMC. The logs are divided by a directory structure that is stored along with the files themselves.

| Directory | Files |
|---|---|
| PICSLOG\ec.x\*.log | Log files for a Listening Post device connected to a CD Endcap Kiosk |
| PICSLOG\hv.*\*.log | Log files for a Listening Post device connected to a Home Video Kiosk |
| PICSLOG\lp.*\*.log | Log files for a stand-alone Listening Post device |
| PICSLOG\ServerLog\serverlog.log | Log file for a Listening Post device connected to a CD endcap |
| PICSLOG\cdx\videolog.log | Log file generated by the CD Kiosk |
| PICSLOG\hvx\videolog.log | Log file generated by the Home Video Kiosk |

Each log file sent to the NMC has a filename that is timestamped and contains store origination.

### TODO : Log File

- Distribution Acknowledgment File - The file that is generated and sent to the NMC server computer where it will be ultimately received by the Sender Module as an acknowledgment of a successful distribution. See the Sender Module section for the file format.

### Network

The Maintenance Module performs communication over the TCP/IP network over the network in the following manner:

| Communication Task | Method |
|---|---|
| 'Ping' the Video Kiosk Computer(s) to determine if Video Kiosk Module is functioning | TCP protocol. Uses port and address information stored in the registry to initiate a connection and verify Video Kiosk Module is operating. |
| Send PAUSE/START messages to all Listening Posts and Video Kiosk Modules for file updates | UDP protocol. Uses port and address information stored in the registry and addresses retrieved from the Listening Post address file maintained by the Listening Post software to send the messages. |
| | Strings used for Listening Posts: |
| | PAUSE_COMMAND = "Wait" |
| | PLAY_COMMAND = "Start" |
| | SHUTDOWN_COMMAND = "Reboot" |
| | Strings used for Video Kiosk Modules: |
| | PAUSE_COMMAND = "PAUSE" |
| | PLAY_COMMAND = "PLAY" |
| | SHUTDOWN_COMMAND = "SHUTDOWN" |
| Retrieving remote log files | Windows networking protocol. Uses share and file name information stored in the registry to attach to the shares and retrieve the files |
| Generating SNMP errors | All critical-level errors generate a message which is sent to the SNMP Agent module via UDP messages. See the SNMP Agent Module for details. |

### User Interface

In debug-mode, all output is sent to a text window on the machine's desktop, in non debug-mode output is sent the log file and the output window is not visible. All critical errors are reported to the output and the SNMP Agent Module.

### Registry

### Subkey: HKEY_LOCAL_MACHINE \ SOFTWARE \ PICS\ Maintenance

- **Endcap Count==** Number of Video Kiosk instances
- **Endcap Port==** Socket port number for Listening Post device connected to Video Kiosk Modules
- **Ping Port==** Socket port number for communication with the Video Kiosks during test pings
- **Ping Timeout==** Amount of time in milliseconds to wait for ping response from Video Kiosks
- **Log Filename==** String to use for name and path of log file to generate during processing
- **Endcap1==** String to use for name of computer running 1^{st} instance of Video Kiosk (CD Endcap)
- **Endcap2==** String to use for name of computer running 2nd instance of Video Kiosk (Home Video)
- **Debug Mode==** Debug mode flag (0=false, 1=true)
- **Endcap Log Filename==** Name of log file to collect from Video Kiosks
- **Temp Directory==** Path to use for temporary directory
- **Endcap Log Sharename==** Name of drive share on Video Kiosk computers to copy logs from
- **LP Log File Extension==** File extension used by Listening Post log files
- **LP Root Directory==**Drive and path of directory where root ARMA files are stored
- **Low Disk Space Threshold** %==Number in percent where an error will generated if available space falls below
- **Log FTP Address==** Host address of NMC server computer for FTP transfer of logs/statistics
- **Log FTP Username==** Login name for NMC's FTP server
- **Log FTP Password==** Password for FTP session
- **Log FTP Directory**==FTP Directory on NMC
- **Download Directory**==Directory to watch for distribution downloads
- **Reception Module==** Name and Path of the Reception Module executable
- **LP Address Filename==** Name and Path of the Listening Post address file (terms.ini)
- **LP Address Section Header Prefix==** String to use for address section header prefix in the address file
- **LP Address Key==** String to use for address key in the address file
- **LP Port==** Socket port number of Listening Post device(s) for communicating the 'start' and 'stop' IP messages
- **Ack FTP Address==** String to use for host address of NMC server computer for sending of acknowledgments
- **Ack FTP Directory==** String to use for the directory on the NMC that is to receive acknowledgments
- **Ack FTP Password==** Login name for FTP acknowledgment session
- **Ack FTP Usemame=** Password for FTP acknowledgment session

### Detail

### Executable Name: server.exe

**Dependent** DLL's: xcdzip32.dll (Xceed ZIP Library 2.0 - Licensed), xcdunz32.dll (Xceed ZIP Library 2.0 - Licensed). winsck.ocx (Netmanage TCP OLE control version 1.0 - Licensed)

During normal operations, the Maintenance Module performs the following tasks:
1) 'Ping' each instance of the Video Kiosk Module on the network. Locates from the registry the addresses of the remote Video Kiosk computers and initiates a TCP network connection. A connection request is sent for up to Registry.Ping Timeout seconds where after no connection is made, an error is generated. If a successful connection is made, it is noted in the output.
2) Send PAUSE signal to each Listening Post device. This entails retrieving the IP addresses for each device from the Listening Post address file (Registry.LP Address Filename) by searching the file for the sections (Registry.IP Address Section Header Prefix + DeviceNumber) and the entries (Registry.LP Address Key) which contain the addresses. If the file cannot be located or the entry is not found, an error will be generated. For each device entry found, the pause event string is sent (see Files section) on port Registry.Ping Port.
3) Send PAUSE signal to Video Kiosk Modules. This entails using the Registry.'Endcap Count' and Registry."Endcapx' (where x is 2 - Endcap Count) entries to get the address of each Video Kiosk instance and send a pause event string on port Registry.Ping Port. Also sends the string to the local Video Kiosk module.
4) Stop the Listening Post Server boot and log processes. Unloads the Listening Post server processes so files will be not locked. Uses the Registry for their names.
5) Gather All Log files. This entails locating, gathering and moving of all the log files generated by the system. Creates storage in the temporary directory specified in the registry to hold the files before compression to zip format. For each instance of the Video Kiosk Log files, it uses the registry for computer name, snare names. and file names. For each Listening Post device and Listening Post server software, it uses the registry to locate the files, which are stored locally.
6) Collect available disk space information. Checks and reports the Video Kiosk computer's available disk space from the published drive shares. Also checks and reports the amount of disk space available to the local disk drives. If the percentage available on any one falls below the threshold set in the registry, an error is generated to the output and the SNMP Agent.
7) Compresses Log Data. Compresses the log data into one file using the .zip format.
8) Transmit the Log Data. The file is renamed to contain address and timestamp information. An FTP session is initiated to the NMC server computer. If a connection is refused, the system will generate a random number **between** 1-30 and sleep for that many seconds and retry. If after 15 tries the system cannot be contacted, the operation is aborted.
9) Scan the Download Directory for new distributions. Checks in the directory specified in the registry for .BIG files - if the the timestamp in the prefix of the filename matches or is prior to the current time, the Reception Module is launched and the file is passed as an argument. Operation of the Maintenance Module is suspended until the Reception Module has finished processing the file and a return code has been received. When a return code is received, the acknowledgment file is created.
10) PICS_SETUP.EXE - When this file is found, the file will be executed as an application and the Maintenance Module will close.
11) Transmit the acknowledgment file (if a distribution has been successfully complete). This entails initiating an FTP session to the NMC server computer. If a connection is refused, the system will generate a random number between 1-30 and sleep for that many seconds and retry. If after 15 tries the system cannot be contacted, the operation is aborted.
12) Send START signal to all systems. Sends START event signal to all modules that were previously PAUSE'd.

### Reception Module

### Summary

The reception module resides at the in-store server. Its sole responsibility is to take apart big files and distribute its contents to the appropriate places.

### Database

### Files

Setup.ini File Format
[installSectionName]
extractFiles=cabFiles
deleteFiles=deleteFiles

### [cabFiles]

LPData.cab=e:
- audioEC.Cab=\\cd1\c
videoEC.cab=\\hv1\c
woe.cab=e:
[deleteFiles]
filename1.ext
filename2.ext
filename3.ext

### Network

### User Interface

### Registry settings

- Under HKEY_LOCAL_MACHINE \ SOFTWARE \ PICS\BUILDER
- **Debug** == Determines if the log window should be shown. 0 = no log window. 1 = log window.

### Detail

### Executable Name: rmod.exe

### Dependent DLL's: None

RMOD is launched with one command line parameter. That parameter is the full path of the big file to extract. All errors will result in a SNMP trap. Critical errors, outlined below, will cause processing to stop. The following is the exact sequence of events that follows:
1) All files are extracted from the big file
   a) On any error, a trap is generated and processing stops.
2) The big file is deleted.
3) The delete section of Setup.ini is parsed.
   a) Any error other than 'file not found' will cause processing to stop.
4) The extract section of Setup.ini is parsed.
   a) Each cab file is extracted to its destination location, as illustrated in the file section.
   b) Any error is critical. but processing will continue on a hopefully optimistic bases.

### Video Kiosk Module

### Summary

The Video Kiosk Module performs the consumer portion of the DDS. This entails interpreting a script file, playing digital video and audio files (MPEG-1 and MPEG-2) and responding to consumer actions through network communication with an optionally attached Listening Post device.

The script file contains instructions that define the behavior and content of the Video Kiosk module. The file is built at the NMC by the Builder Module and transmitted along with each new distribution. It defines which previewable UPC titles will be available, which advertising and attract videos are to played and in what order, as well as the behavior of the software to consumer commands from the Listening Post.

Content is either MPEG audio or video, text labels, or static graphics. Video files are either title previews, attract videos, or bumper videos. Static graphics are either full-screen bumper graphics, full-screen title background screens, or smaller graphics for various screen elements (bumper icons, arrow graphics, album covers, consumer error notifications). There are two modes of behavior, 'Attract' mode and 'Scan' mode. In attract mode, the video files defined in the script are played in order according to the attract portion of the script. In scan mode, the commands in the scanscript portion of the script are executed.

Consumer scans of titles and track/volume button presses are communicated from the Listening Post via IP. A TCP connection is established with device and track buttons are received and responded to during scan mode. Volume push buttons are always responded to as the volume is adjusted.

### Database

There are no database elements of this module.

### Files

### • Script File - Playback behavior is driven by the script file. This file is read and parsed at startup. It is a text file in the Windows INI format. It contains the following:

### Script File Format:

**[VIDEO SECTION <UPC>] -** This section contains a video definition. The section header is the UPC code. It contains the information necessary for a video to be played. Its keys are:
**VF=filename** ; Name and path of the video's MPEG filename
**LCD1=textString** ; Text for line 1 of the LCD panel when the video is played
**LCD2=textString** ; Text for line 2 of the LCD panel when the video is played
; these are used for optional text and graphic overlays - x is the index of each overlay **TOx=**textString ; Text used for overlay
**TCx=Left;Top;Width;Height;** ; Screen coordinates in pixels for text box placement and size **TFx=fontName** ; Name of the font to use for drawing text
**TRx=**RRGGBB ; Color value number in hex of color to use for drawing text ex: 0000FF **TZx=fontSize;** Size in points of font to use for drawing text
**GOx**=filename ; Name and path of a graphic overlay bitmap to be overlayed when video is played (x is the numberic count - there can be multiple overlays)
**GCx**=Left:Top: : Left and Top screen coordinate in which to place the corresponding x graphic
: these are used for bumpers only
**TG**=filename. Graphic to display during transition screen between video playback and drill-down
**IG**=filename ; Graphic to display as overlay on drill-down graphic (coordinate in settings section)

### Example bumper video section with two text and two graphics overlays

[123456789012]
VF=c:\videos\video1.mpg
LCD1=Advertisers Name
LCD2=Product Name
TO1=Here's a text overlay string
TC1=100;100;50;200;
TFI=Arial
TR1=FFFFFF
TZ1=10
TO2=Here's a second text overlay string
TC2=50;10;300;10;
TF2=MS Sans Serif
TR2=FF00FF
TZ2=12
GO1=c:\graphics\v1_overlay1.bmp
GC1=10:10:
GO2=c:\graphics\v1_overlay2.bmp
GC2=500;750;
TG=c:\graphics\video1_trans.bmp
IG=c:\graphics\video1_icon.bmp

**[AUDIO TRACK SECTION - <UPC_x>] -** This section describes an audio track. It's keys are:
**AT**=fileName ; Name of MPEG audio track file to play
**AN=trackName ;** Name of the audio track to display on drill-down screen
**AL1**=textString ; String to display on line 1 of the LCD panel when track is played
**AL2**=textString ; String to display on line 2 of the LCD panel when track is played

### Example audio section definition

[123456789012_1]
AT=c:\audio\123456789012.mpg
AN=Stairway to Heaven
AL1=Led Zeppelin
AL2=Stairway to Heaven

**[TITLE DEFINITION SECTlON <Tx>]** - This section describes a title. A title is a retail product which can be previewed at the Video Kiosk, has a video definition, and requires additional data including audio track information. This describes all the elements necessary for a title. Its keys are:
**VS=upc** ; The video section definition for this title, is the same as the UPC code
**ASx**=audioSection ; Section header string for audio track x
**AB**=filename; Name of the bitmap file to use for the drill-down function
**CB**=filename; Name of the bitmap file to use for the album cover overlay on a bumper video
**LN**=textString ; Text string to use for liner notes overlayed on the drill-down screen

### Example title definition section

[T1]
VS=123456789012
AS1=123456789012_1
AS2=123456789012_2
AS3=123456789012_3
AB=c:\graphics\title1_drilldown.bmp
CB= c:\graphics\title1_cover.bmp
LN=This is the arust Led Zeppelin. from their very first album in late 60's

**[TITLE SECTION <TITLES>]** - This section contains a list of title definitions. Refers to all the titles that can be previewed in the script. Its keys are:
*N*=T*x*=titleHeader ; Header string of the title definition for this index. *N* and *x* refer to the ordinal number (starting from one) of the title.

### Example title section with 4 titles

### [TITLES]

1=T1
2=T2
3=T3
4=T4

**[ATTRACT VIDEOS SECTION <ATTRACTS>]** - This section contains a list of video definitions to be used as attract videos in the script its keys are:
*N*=UPC ; Header string of the title definition for this index. N refers to the ordinal number (starting from one) of the attract video.

### Example attract section with 4 videos

### [ATTRACTS]

1=857394853029
2=485773940291
3=239487759294
4=094762864766

**[BUMPER VIDEO SECTION <BUMPERS>] -** This section contains a list of video definitions to be used as bumper videos played prior to a title preview.
*N*=UPC|NULL ; Header string of the title definition for this index. N refers to the ordinal number (starting from one) of the attract video. Contains either the UPC code of the bumper section or the empty string which specifies a blank entry and one which results in a bumper being skipped (not played).

### Example attract section with 4 videos

### [BUMPERS]

1=557394853029
2=675773940291
3=
4=453762884766
5=

**[BUMPER EXCLUSION DEFINITION <B*n*>] -** This section contains a bumper exclusion definition. This specifies any situation where a particular bumper video not be played prior to one or more title videos.
**BV**=Bumper Video Index ; Index of the bumper video for Exclusion
**EV***n*=Title Video Index ; Index of the title video to exclude where *n* is the ordinal index in the list of videos to exclude

### Example Bumper Exclusion definition section

[B1]
BV=5
EV1=1
EV2=7
EV3=25

**[BUMPER EXCLUSION SECTION <BUMPEREXCLUSION>]** - This section contains a list of bumper exclusion definitions for use during the scan mode of the script.
*N*=BUMPER EXCLUSION SECTION ; Section header to use as a bumper exclusion.

### Example Bumper Exclusion section

### [BUMPEREXCLUSION]

1=81
2=B2
3=83
4=B4

**[LCD TEXT DEFINITION SECTION <Ln>] -** This section contains a LCD text definition. This specifies an individual two-line text screen to be displayed on the LCD panel of the Listening Post device attached to the Video Kiosk module interpreting this script.
1=Line one text string ; String for line one
2=Line two text string; String for line two

### Example LCD Text Definition section

[L1]
1 =Hello World
2=Welcome to DDSI

**[LCD TEXT SECTION <LCDTEXT>] -** This section contains a list of LCD text definition section headers to use for the LCD text elements of the script. These entries are individually scriptable in the same manner as videos.
*N*=LCD Text Definition section ; Section header to use as a LCD text definition

### Example LCD Text section

### [LCDTEXT]

1=L1
2=L2
3=L3
4=L4

**[ATTRACT SCRIPT SECTION <ATTRACTSCRIPT>]** - This section contains a list of script commands which define which videos are played during 'attract' mode. The commands are interpreted one at a time and continue in a loop during the attract mode.
***N*=COMMAND;INDEX;SEQUENCE;INTERRUPTABLE;** This is the format of one script command. 'COMMAND' is one of the following strings:
**PA = Play Attract Video**
**PT = Play Title Video**
**PB = Play Bumper Video**
**PL = Play LCD Text String**
**PF = Play Audio Song Titles - 'Drilldown Screen'**

'INDEX' is the specific sequential index of the video or text element to play in the list of available videos. If this field is not blank, the 'SEQUENCE' field is ignored.

### 'SEQUENCE' is either:

**S** = Play Video or Text in Sequential Order. If there is no 'INDEX' specified, the next video in the list of available videos is played.
**R** = Play Video or Text in Random Order. If there is no 'INDEX' specified, a random video is chosen from the list of available videos.

### 'INTERRUPTABLE' is either:

**Y = Video Playback** can be Interrupted by User Action (Scan or Track Button)
**N = Video Playback** cannot be Interrupted by User Action (Scan or Track Button)

### Example attrad script

### [ATTRACTSCRIPT]

1=PA;1;R;Y;
2=PL;;S;Y;
3=PT;;S;Y;
4=PA;;R;Y;

**[SCAN SCRIPT SECTION <SCANSCRIPT>]** - This section contains a list of script commands which define which videos are played during 'scan' mode - when a consumer initiates a product preview. The commands are interpreted one at a time are played one time for each product scan. The command format is the same as the attract script section. Note: the 'PT' command always refers to the product the consumer has scanned, hence any 'INDEX' or 'SEQUENCE' arguments are ignored.

### Example scan script section

### [SCANSCRIPT]

1=PL;;S;N;
2=PB;;S;N;
3=PT;;R;Y;
4=PF;;S;Y;

**[DRILL-DOWN SETTINGS SECTION <SETTINGS>] -** This section contains all the necessary settings to perform the drill-down portion of a scan script.

**COVER_BITMAP_X_ORIGIN=***n*; X coordinate, in pixels, of upper left corner where a title's cover bitmap will be placed during bumper video playback prior to the title's preview

**COVER_BITMAP_Y_ORIGIN**=*n*; Y coordinate, in pixels, of upper left corner where a title's cover bitmap will be placed during bumper video playback prior to the title's preview
; next title prompt settings
**NEXT_TITLE_STRING=***titleString*; String to use for prompting the consumer during bumper video playback of the title which about to be previewed.
**NEXT_TITLE_LEFT=***n*; X coordinate, in pixels, of upper left corner where the NEXT_TITLE_STRING prompt will be displayed during bumper video playback prior to the title's preview
**NEXT_TITLE_RIGHT**=*n*; Y coordinate, in pixels, of upper left corner for the NEXT_TITLE_STRING
**NEXT_TITLE_TOP**=*n*; X coordinate, in pixels, of lower right corner for the NEXT_TITLE_STRING
**NEXT_TITLE_BOTTOM**=*n*; Y coordinate, in pixels, of lower right corner for the NEXT_TITLE_STRING
**NEXT_TITLE_FONT**=*fontName*: Name of the font to use for NEXT_TITLE_STRING
**NEXT_TITLE_FONTCOLOR**=*RGB color value:* RGB color value, in hexadecimal, of the font color to use for NEXT_TITLE_STRING
**NEXT TITLE_FONTSIZE**=*fontSize*: Size, in points, of the font for NEXT_TITLE_FONTSIZE ; audio title settings
**AUDIO_TITLE_LEFT**=*n*; X coordinate, in pixels, of upper left corner where a title's audio track names will be displayed over the audio drill-down screen
**AUDIO_TITLE_TOP**=*n*; Y coordinate, in pixels, of upper left corner where a title's audio track names will be displayed over the audio drill-down screen
**AUDIO_TITLE_RIGHT**=*n*; X coordinate, in pixels, of lower right corner where a title's audio track names will be displayed over the audio drill-down screen
**AUDIO_TITLE_BOTTOM**=*n*; Y coordinate, in pixels, of lower right corner where a title's audio track names will be displayed over the audio drill-down screen
**AUDIO_TITLE_FONT**=*fontName*; Name of the font to use when drawing a title's audio track names
**AUDIO_TITLE_FONTCOLOR**=*RGB* color *value;* RGB color value, in hexadecimal, of the font color to use when drawing a title's audio track names
**AUDIO_TITLE_FONTSIZE**=*fontSize*; Size, in points, of the font to use when drawing a title's audio track names
**AUDIO_TITLE_HILITE_FONT**=*fontName*; Name of the font to use when drawing a title's currently selected audio track name
**AUDIO_TITLE_HILITE_COLOR**=*RGB color value;* RGB color value, in hexadecimal, of the background color to use when drawing a title's currently selected audio track name
**AUDIO_TITLE_HILITE_FONTCOLOR**=*RGB color value;* RGB color value, in hexadecimal, of the font color to use when drawing a title's currently selected audio track name
**AUDIO_TITLE_HILITE_FONTSIZE**=*fontSize*; Size, in points, of the font to use when drawing a title's currently selected audio track
; miscellaneous settings
**MORE_SONGS_PROMPT _BITMAP**=fileName; Name and path of the bitmap file to use for prompting the user for more songs after a title's preview and before the drill-down screen
**MORE_SONGS_PROMPT_TIMEOUT**=*n*; Number of seconds to display the MORE_SONGS_PROMPT graphic when there is no consumer action before ending scan mode
**PREVIOUS_TRACK_ERROR_BITMAP**=*fileName*; Name and path of the bitmap file to use when the consumer attempts to navigate beyond the beginning of a title's track list
**PREVIOUS_TRACK_ERROR_X_ORIGIN**=*n*: X coordinate, in pixels, of the upper left corner to use when drawing the PREVIOUS_TRACK_ERROR_BITMAP
**PREVIOUS_TRACK_ERROR_Y_ORIGIN**=*n*; Y coordinate, in pixels, of the upper left corner to use when drawing the PREVIOUS_TRACK_ERROR_BITMAP
**NEXT_TRACK_ERROR_BITMAP**=*fileName*; Name and path of the bitmap file to use when the consumer attempts to navigate beyond the end of a title's track list
**NEXT_TRACK_ERROR_X_ORIGIN**=*n*; X coordinate, in pixels, of the upper left corner to use when drawing the NEXT_TRACK_ERROR_BITMAP
**NEXT_TRACK_ERROR_Y_ORIGIN**=*n*; Y coordinate, in pixels, of the upper left corner to use when drawing the NEXT_TRACK_ERROR_BITMAP
**NEXT_TRACK_PROMPT_BITMAP**=*fileName*; Name and path of the bitmap file to use for displaying the next track graphic prompting the user to press the 'Next' button on the Listening Post device
**NEXT_TRACK_PROMPT_X_ORIGIN**=*n*; X coordinate, in pixels, of the upper left corner to use when drawing the NEXT_TRACK_PROMPT_BITMAP
**NEXT_TRACK_PROMPT_Y_ORIGIN**=*n*; Y coordinate, in pixels, of the upper left corner to use when drawing the NEXT_TRACK_PROMPT_BITMAP
**AUDIO_ONLY_BITMAP**=*fileName*; Name and path of the full-screen bitmap file to display when a non-featured title is begin previewed by the Listening Post attached to the Video Kiosk
**PAUSE_BITMAP**=*fileName*: Name and path of the full-screen bitmap to display when the Video Kiosk is paused by the Maintenance Module for an update
**UNKNOWN_SCAN_BITMAP**=*fileName*; Name and path of the full-screen bitmap file to display an unrecognizable scan message comes from the Listening Post device attached to the Video Kiosk
**LINER_NOTES_FONT**=*fontName;*
**LINER_NOTES_FONTCOLOR=** *RGB color value:* RGB color value, in nexadecimal, of the Background color to use when drawing a title's currently selected audio track name
**LINER_NOTES_FONTSIZE=***fontSize***;** Size, in points, of the font to use when drawing a title's liner notes
**LINER_NOTES_LEFT=***n*; X coordinate, in pixels, of upper left corner where a title's liner notes will be displayed over the audio drill-down screen
**LINER_NOTES_TOP=***n*; Y coordinate, in pixels, of upper left corner where a title's liner notes will be displayed over the audio drill-down screen
**LINER_NOTES_RIGHT=***n*; X coordinate, in pixels, of lower right corner where a title's liner notes will be displayed over the audio drill-down screen
**LINER_NOTES_BOTTOM**=*n*; Y coordinate, in pixels, of lower right corner where a title's liner notes will be displayed over the audio drill-down screen
**BUMPER_ICON_X_ORIGIN=***n***;** X coordinate, in pixels, of upper left corner where a bumper video's icon will be displayed over the audio drill-down screen
**BUMPER_ICON_Y_ORIGIN**=*n*; Y coordinate, in pixels, of upper left corner where a bumper video's icon will be displayed over the audio drill-down screen
**BUMPERETTE_TIMEOUT=***n*; Amount of seconds to display a bumper video's full-screen transition graphic (or bumperette) after a title's preview and before the drill-down screen

### TODO : Log File

### Network

The Video Kiosk Module performs communication over the TCP/IP network in the following manner:

| Communication Task | Method |
|---|---|
| Receive consumer actions: product UPC scans, track buttons, volume buttons. | TCP protocol. Uses port and Listening Post address file information stored in the registry to locate the IP address of appropriate Listening Posts, initiate and establish a connection, and send/receive messages to implement task. |
| | Strings used for communication (all strings terminated with a carriage-return character): |
| | • UUpcCode ; Consumer Product Scan, ex: U123456789012 |
| | • B[<,>,+,-] ; Consumer button press ('<' = previous track button, '>' = next track button, '+' = volume up button, '-' volume down button, ex: B+ |
| | • L[1,2]TextString ; LCD text string for line one or two for LP to display, ex: L1Hello World! |
| | • U000000000000 ; Special UPC code for non-featured product titles |
| | • U111111111111 ; Special UPC code for attract-mode reset |
| | • U999999999999 : Special UPC code for an unknown productscan |
| Receive 'PING' requests from Maintenance Module | UDP protocol. Uses port information stored in the registry to listen on a UDP socket and respond to the following message: |
| | PING ; a ping request from the Maintenance Module |
| | To acknowledge a ping, the following message is replied: |
| | ACK ; a ping acknowledgment |
| Generating SNMP errors | All critical-level errors generate a message which is sent to the SNMP Agent module via UDP messages. See the SNMP Agent Module for details. |

All Listening Post device IP addresses are acquired from the Listening Post address file created and maintained by the Listening Post Server software. The name and location of this file as well as the section headers and entry keys are stored in the registry.

### Registry

### Subkey: HKEY_LOCAL_MACHINE\SOFTWARE\PICS\Video]

- **Debug Mode==** Debug Mode flag (0=false, 1=true)
- **Key Colo**r== 4 byte RGB color value for MPEG decoder's transparent key color
- **Log Filename==** Name and path of log file
- **MCI Open String**== String to use when opening MCI device (decoder card dependent)
- **Overlay Capable==** Flag to specify use of transparent overlays (0=no, 1 =yes)
- **Scanner Port==** Socket port number for Listening Post Scanner device communication
- **Scanner Reconnect Timeout==** Amount of time, in milliseconds, to retry failed connection requests to the Listening Post device
- **Script Filename==** Name and path of the script to execute
- **Uses Scanner**= Flag to specify whether to establish communication with a Listening Post device (0=no, 1 =yes)
- **Video Height==** Height of the video output window in pixels
- **Video Left**== Upper left X coordinate of video output window in pixels
- **Video Top==** Upper left Y coordinate of video output window in pixels
- **Video Width**== Width of the video output window in pixels
- **Ping Port==** Socket port number to wait for 'ping' requests from server
- **Minimum Track Delay**== Minimum amount of delay, in seconds, to wait between responses to track buttons
- **Use Track Buttons**== Flag to specify whether track button press messages are responded to (0=no,1=yes)
- **Scanner Address Filename==** Name and path of scanner address file where Listening Post address file is stored
- **Scanner Address File Section==** String used for section header where Listening Posts address entnes are contained
- **Scanner Address File Key==** String to use for address key in the address file
- **Volume Step==** Amount of increment for volume presses

### User Interface

The main interface for the Video Kiosk is the video output window (contains the decoded video) and the overlay window (contains any text and/or graphics overlays, if appropriate) which sits directly above the video output window. The size and position of these windows as well as the color value used by the MPEG decoder board for transparent overlays are defined in the registry. When the Video Kiosk module is in debug-mode (defined by registry setting), a resizable text output window is displayed over the video output window which contains all text status and error messages that are sent to the log file during non debug-mode.

### Detail

**Executable Name:** endcap.exe
**Dependent DLL's**: winsck.ocx (Netmanage TCP OLE control version 1.0 - Licensed)

The Video Kiosk module interacts with the consumer through the attached Listening Post (LP) device. The Video Kiosk module performs the following tasks:
- **Startup**
   - Communicates with the MPEG decoder using MCI commands
   - The registry entries are retrieved and the script file is opened and parsed into memory. The script file is then closed.
   - The output window(s) are prepared and the MPEG decoder device is opened.
   - The 'Attract' mode is started.
   - A separate thread is started to initiate the TCP connection to the LP. This continues until a connection is established and when an existing connection is lost. When the connection is established, consumer actions at the LP will be processed.
- **'Attract' Mode**
   - Occurs when the consumer is not interacting with the LP.
   - ATTRACTSCRIPT section of script file is read and script commands are interpreted and continue looping until a customer action occurs. The script is reset whenever the Attract Mode is restarted.
- **'Scan' Mode**
   - Occurs when the consumer performs a product UPC scan using LP.
   - The LP sends the UPC scan code to the Video Kiosk if the UPC is contained in the 'Featured List'. Note: The 'Featured List' is a file which is read by the LP and is stored on the in-store server which contains all the UPC codes which are valid for the Video Kiosk to process. This file is created by the Builder Module and matches the UPC codes which are put in the TITLES section of script. The LP is responsible for searching this list after each UPC scan and to transmit only UPC codes which are in the 'Featured List' (in addition to the three 'special' UPC codes which are interpreted differently - see the 'Network' section).
   - SCANSCRIPT section of script file is read and script commands are interpreted.
   -
- **'Drill-Down' Mode**
   - Occurs during Scan Mode and is triggered in the script with a 'PF' (Play Audio Files command).
   - Begins by displaying a full-screen 'transition' graphic associated with the Bumper video which preceded the title preview according to the most recent 'PB' (Play Bumper) command. The graphic is displayed for an interval specified in the script (see 'Settings' section of the script file). If no bumper was played (because of a NULL bumper entry), no graphic is displayed.
   - After the transition graphic is (optionally) displayed, the full-screen audio background for the title being previewed is displayed, the audio track titles are displayed, the liner notes are displayed, the first track name is highlighted, and the arrow graphic is displayed (position, font, and color information for all these elements are read from the script - see 'Settings' section of script file).
   - The first audio track is then played and the consumer can then navigate the tracks by using the LP navigation keys. The consumer can also adjust the volume accordingly. When tne consumer presses the 'Previous Track' button when the current track is the first available track or presses the 'Next Track' button when the current track is the last available track, an error graphic is displayed.
   - When playback of the final track is finished, the 'Attract Mode' is reset and begins.
- **'Passive' Mode**
   - Occurs when the consumer scans a product not available for video preview but available for audio-only preview. The LP performs in stand-alone mode elsewhere in the DDS network (see ARMA documentation), whereas products can be scanned and their audio-only previews are played back through a set of attached headphones. The LP, in this mode, performs all consumer response functions. In order to preserve this behavior for LP devices attached to the Video Kiosk, the 'Passive' Mode is provided.
   - In this mode the LP, when a product is scanned, performs a lookup in the 'featured list' for the product's UPC. If it is found in this list, it is sent to the Video Kiosk via the TCP connection. If the UPC code is not found, the LP then performs its normal logic in that it attempts to locate the audio files on the server for that product (see ARMA documentation for more details). If the files are located, the LP sends a special UPC code (00000000000) to the Video Kiosk informing it that a non-featured product is about to be displayed. The Video Kiosk, in response to this message, stops any current playback and displays a full-screen static graphic (specified in the script) informing the user of the situation. The decoded audio from the LP is then sent to the Video Kiosk through its audio input which is then sent to the attached speakers. All subsequent volume control by the consumer is communicated to the Video Kiosk where it manages the mixer volume on its audio card. When the consumer has finished previewing the non-featured title, the LP sends another special UPC code to the Video Kiosk (111111111111) informing it to reset and resume the Attract Mode.
   - Additionally, when a scanned UPC code cannot be determined by the LP (not in the featured list and not available on the server), it sends a special UPC code (999999999999) informing the Video Kiosk that an unknown product scan has occurred. The Video Kiosk, in response to the message, displays a full-screen graphic (defined in the script) informing the user of the situation. This graphic is displayed for an interval defined in the script. At the end of this interval, the Attract Mode is reset and resumed.

### Proxy Module

### Summary

The Proxy Module serves as a front-end for the Video Kiosk Module. Its responsibility is two-fold. First, it serves as the communication layer between the Video Kiosk Module and the Maintenance Module for distribution updates. Second, it is responsible for starting and stopping the Video Kiosk Module process during updates in order to insure that files that may potentially be updated or removed during the process are not locked. In this manner, the Proxy Module is always used to start the Video Kiosk Module as it keeps track of its process handle in order to be able to terminate it accordingly.

Additionally, the Proxy Module performs the task of displaying a static graphic to the consumer while the Video Kiosk Module is terminated during a distribution update informing them of the situation.

### Database

There are no database elements of this module.

### Files

The Proxy Module reads information from the [SETTINGS] section of the script file, refer to the Video Kiosk Module's 'Files' section for information on this file. The following elements of the [SETTINGS] section that are used are:
**[SETTINGS]**
**PAUSE_BITMAP**=*fileName*; Name and path of the full-screen bitmap to display when the Video Kiosk is paused by the Maintenance Module for an update

### Network

The Proxy Kiosk Module performs communication over the TCP/IP network in the following manner:

| **Communication Task** | **Method** |
|---|---|
| Receive PAUSE/START messages from Maintenance Module during update process | UDP protocol. Uses port information stored in the registry to create a socket to listen for PAUSE/START messages. |
| | Strings responded to by Proxy Module: |
| | PAUSE_COMMAND = "PAUSE" |
| | PLAY_COMMAND = "PLAY" |
| | SHUTDOWN_COMMAND = "SHUTDOWN" |

### Registry

Subkey: [HKEY_LOCAL_MACHINE\SOFTWARE\PICS\Video]
- **Server Port==** Socket port number to use for START/STOP messages
- **Video Application==** Path and name of Video Kiosk executable
- **Script Filename==** Name and path of the script to execute
- **Video Height==** Height of the video output window in pixels
- **Video Left==** Upper left X coordinate of video output window in pixels
- **Video Top==** Upper left Y coordinate of video output window in pixels
- **Video Width==** Width of the video output window in pixels

### User Interface

The Proxy Module creates an output window which is the same size and position as the Video Kiosk Module's video output and overlay windows. This window is used to display the pause graphic during updates. If a pause graphic is not available, a text message 'System Unavailable' is displayed in centered white text against a black background.

### Command-Line Interface

The Proxy Module accepts one optional command line argument:
- *n*:Where n is the number of seconds (between 0 and 9) to wait before starting the Video Kiosk Module. This is for some situations where the Proxy Module is started automatically from the 'Startup' group.

### Detail

**Executable Name:** proxy.exe

**Dependent DLL's:** winsck.ocx (Netmanage TCP/UDP OLE control version 1.0 - Licensed)

The Proxy Module performs the following actions:
- **Startup**
   - Retrieves registry settings to find the script file, the output window coordinates, the socket port to listen for server commands, and the path to the Video Kiosk Module executable.
   - The script file is opened and the pause graphic filename is retrieved. The script file is then closed. The pause graphic is loaded into memory and the Video Kiosk Module executable is started (after the optional number of seconds specified at the command-line).
   - The UDP socket port is opened.
- **PAUSE** Message **Received From Maintenance Module**
   - The Video Kiosk Module process is closed.
   - The output window is brought to focus.
- **START Message Received From Maintenance Module**
   - The Video Kiosk Module process is started.

### SNMP Agent Module

### Summary

### Database

### Files

### Network

### Registry

Subkey: [HKEY_LOCAL_MACHINE\SOFTWARE\PICS\SNMP\CurrentVersion]
**Pathname==** Path of directory where dll is located
**Host==** Hostname of computer running SNMP Agent
**Port==** Socket port number used to listen for error messages

**User Interface**

**Detail**

## Claims

1. A method of creating and distributing of content to a user in a commercial sales outlet, comprising the steps of:
- digitizing audio and/or visual content to provide digitized representations
- providing in a network management center (110) group identification information for each audio and/or video contents for associating the digitized representations with commercial sales outlets (130) and for determining which digitized representations are to be included in a distribution file;
- using the group identification information to select to which commercial sales outlets (130) the distribution file is to be distributed;
- assembling the digitized representations into the distribution file;
- transmitting the distribution file to the selected commercial sales outlets (130);
- receiving the distribution file at a plurality of commercial sales outlets (130);
- disassembling the distribution file into at least one digitized component at one or more site(s) of the plurality of commercial sales outlets (130);
- storing the at least one digitized component on a multimedia server (160) in the commercial sales outlet (130); and
- transferring the at least one digitized component to a node on a network in the commercial sales outlet (130) upon receipt of a request from the user, the node being capable of communicating information represented by the digitized component to the user.

2. The method of claim 1, wherein the assembling step comprises:
- receiving promotional content from a plurality of content sources;
- editing the promotional content; and
- aggregating the promotional content in preparation for the digitizing step.

3. The method of claim 1, wherein the transmitting step comprises:
- receiving the distribution file at a network operations center (120);
- forwarding the distribution file using a multicast file transfer protocol; and
- receiving the distribution file at one commercial sales outlet (130) of the plurality of commercial sales outlets (130), if the multicast file transfer protocol indicates that the distribution file is intended for the one commercial sales outlet (130).

4. The method of claim 1, wherein the disassembling step comprises:
- decompressing the at least one digital component;
- sorting the at least one digital component by a relationship of each one of the at least one digital component to one of a plurality of commercial products into groups of the at least one digital component; and
- storing the groups of the at least one digital component on the multimedia fileserver (160).

5. The method of claim 4, wherein the groups of the at least one digital component are sorted based at least in part on a universal product code.

6. The method of claim 4, wherein the groups of the at least one digital component are stored on the multimedia fileserver based at least in part on a universal product code.

## Patentansprüche

1. Verfahren zum Erzeugen und Verteilen von Inhalt für einen Nutzer in einer Verkaufsstelle, wobei das Verfahren die folgenden Schritte umfasst:
- Digitalisieren von Audio - und/oder visuellem Inhalt, um digitalisierte Darstellungen bereitzustellen,
- Bereitstellen von Gruppenidentifizierungsinformationen für jeden Audio- und/oder Videoinhalt zum Zuordnen der digitalisierten Darstellungen zu Verkaufsstellen (130) und zum Bestimmen, welche digitalisierten Darstellungen in eine Verteilungsdatei aufzunehmen sind, in einer Netzmanagementzentrale (110);
- Verwenden der Gruppenidentifizierungsinformationen, um auszuwählen, an welche Verkaufsstellen (130) die Verteilungsdatei verteilt werden soll;
- Zusammensetzen der digitalisierten Darstellungen zu der Verteilungsdatei;
- Senden der Verteilungsdatei an sie ausgewählten Verkaufsstellen (130);
- Empfangen der Verteilungsdatei bei mehreren Verkaufsstellen (130);
- Zerlegen der Verteilungsdatei in mindestens eine digitalisierte Komponente an einem oder an mehreren Standorten der mehreren Verkaufsstellen (130);
- Speichern der mindestens einen digitalisierten Komponente in einem Multimediaserver (160) in der Verkaufsstelle (130); und
- Übertragen der mindestens einen digitalisierten Komponente an einen Knoten in einem Netz in der Verkaufsstelle (130) beim Empfang einer Anforderung von dem Nutzer, wobei der Knoten durch die digitalisierte Komponente dargestellte Informationen an den Nutzer übermitteln kann.

2. Verfahren nach Anspruch 1, wobei der Schritt des Zusammensetzens umfasst:
- Empfangen von Werbeinhalt von mehreren Inhaltsquellen;
- Editieren des Werbeinhalts; und
- Vereinigen des Werbeinhalts in Vorbereitung auf den Schritt des Digitalisierens.

3. Verfahren nach Anspruch 1, wobei der Schritt des Sendens umfasst:
- Empfangen der Verteilungsdatei bei einer Netzleitzentrale (120);
- Weiterleiten der Verteilungsdatei unter Verwendung eines Mehrpunktverbindungs-Dateiübertragungsprotokolls; und
- Empfangen der Verteilungsdatei bei einer Verkaufsstelle (130) der mehreren Verkaufsstellen (130), falls das Mehrpunktverbindungs-Dateiübertragungsprotokoll angibt, dass die Verteilungsdatei für die eine Verkaufsstelle (130) bestimmt ist.

4. Verfahren nach Anspruch 1, wobei der Schritt des Zerlegens umfasst:
- Dekomprimieren der mindestens einen digitalen Komponente;
- Sortieren der mindestens einen digitalen Komponente durch eine Beziehung jeder der mindestens einen digitalen Komponente zu einem von mehreren Handelswaren in Gruppen der mindestens einen digitalen Komponente; und
- Speichern der Gruppen der mindestens einen digitalen Komponente in dem Multimediadateiserver (160).

5. Verfahren nach Anspruch 4, wobei die Gruppen der mindestens einen digitalen Komponente auf der Grundlage mindestens eines Teils eines universellen Produktcodes sortiert werden.

6. Verfahren nach Anspruch 4, wobei die Gruppen der mindestens einen digitalen Komponente in dem Multimediadateiserver mindestens teilweise auf der Grundlage eines universellen Produktcodes gespeichert werden.

## Revendications

1. Un procédé de création et de distribution de contenu à un utilisateur dans un point de vente, comprenant les étapes suivantes :
- la numérisation d'un contenu audio et/ou visuel, pour fournir des représentations numérisées :
- la fourniture, à un centre de gestion de réseau (110), d'informations d'identification de groupe pour chaque contenu audio et/ou vidéo pour associer les représentations numériques aux points de ventes (130) et pour déterminer quelles représentations numériques doivent être incluses dans un fichier de distribution ;
- l'utilisation des informations d'identification de groupe pour sélectionner le point de vente (130) vers lequel le fichier de distribution sera distribué ;
- l'assemblage des représentations numérisées dans le fichier de distribution ;
- la transmission du fichier de distribution aux points de vente sélectionnés (130) ;
- la réception du fichier de distribution dans une pluralité de points de vente (130) ;
- le désassemblage du fichier de distribution en au moins un composant numérisé sur un site ou plusieurs sites parmi la pluralité de points de vente (130) ;
- le stockage d'un des composants numérisés au moins sur un serveur multimédia (160) du point de vente (130) ; et
- le transfert d'un composant numérisé au moins
vers un noeud sur un réseau du point de vente (130) suite à la réception d'une requête de l'utilisateur, le noeud étant capable de communiquer les informations représentées par le composant numérisé à l'utilisateur.

2. Le procédé de la revendication 1, dans lequel l'étape d'assemblage comprend les étapes suivantes :
- la réception d'un contenu promotionnel en provenance d'une pluralité de sources de contenu ;
- l'édition du contenu promotionnel ; et
- le regroupement du contenu promotionnel en préparation pour l'étape de numérisation.

3. Le procédé selon la revendication 1, dans lequel l'étape de transmission comprend :
- la réception du fichier de distribution dans un centre d'exploitation de réseau (120) ;
- la transmission du fichier de distribution à l'aide d'un protocole de transfert de fichier multidiffusion ; et
- la réception du fichier de distribution à un point de vente (130) parmi la pluralité des points de vente (130), si le protocole de transfert de fichier multidiffusion indique que le fichier de distribution est destiné à ce point de vente donné (130).

4. Le procédé de la revendication 1, dans lequel l'étape de désassemblage comprend les étapes suivantes :
- la décompression d'un composant numérisé au moins ;
- le tri d'au moins un composant numérique en relation à chacun au moins des composants numériques par rapport à une pluralité des produits commerciaux en des groupes d'un des composants numériques au moins ; et
- stockage des groupes du composant numérique au moins sur le serveur de fichier multimédia (160).

5. Le procédé de la revendication 4, dans lequel les groupes du composant numérique au moins sont triés en partie en fonction d'un code produit universel au moins.

6. Le procédé de la revendication 4, dans lequel les groupes du composant numérique au moins sont stockés sur le serveur fichier multimédia en fonction en partie au moins d'un code produit universel.
